(19) Europäisches Patentamt
European Patent Office
Office européen des brevets

(11) **EP 3 355 107 B1**

(12) **EUROPEAN PATENT SPECIFICATION**

(45) Date of publication and mention of the grant of the patent:
**17.06.2020 Bulletin 2020/25**

(21) Application number: **16848497.0**

(22) Date of filing: **07.09.2016**

(51) Int Cl.:
***G02F 1/1337*** *(2006.01)* ***C09K 19/12*** *(2006.01)*
***C09K 19/30*** *(2006.01)* ***C09K 19/32*** *(2006.01)*
***C09K 19/34*** *(2006.01)* ***C09K 19/38*** *(2006.01)*
***G02F 1/13*** *(2006.01)* ***C09K 19/04*** *(2006.01)*
***C09K 19/54*** *(2006.01)* ***C09K 19/56*** *(2006.01)*
***G02F 1/137*** *(2006.01)*

(86) International application number:
**PCT/JP2016/076253**

(87) International publication number:
**WO 2017/051709 (30.03.2017 Gazette 2017/13)**

(54) **LIQUID CRYSTAL DISPLAY ELEMENT**

FLÜSSIGKRISTALLANZEIGEELEMENT

ÉLÉMENT D'AFFICHAGE À CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.09.2015 JP 2015187915**

(43) Date of publication of application:
**01.08.2018 Bulletin 2018/31**

(73) Proprietors:
- **JNC Corporation**
  **Chiyoda-ku**
  **Tokyo 100-8105 (JP)**
- **JNC Petrochemical Corporation**
  **Tokyo 100-0004 (JP)**

(72) Inventors:
- **FURUSATO, Yoshimasa**
  **Ichihara-shi**
  **Chiba 290-8551 (JP)**
- **SAITO, Masayuki**
  **Ichihara-shi**
  **Chiba 290-8551 (JP)**

(74) Representative: **TBK**
**Bavariaring 4-6**
**80336 München (DE)**

(56) References cited:
**WO-A1-2014/156815**
**WO-A1-2015/053233**
**CN-A- 104 342 167**
**JP-A- 2009 104 119**
**JP-A- 2010 256 904**
**JP-A- 2014 142 585**
**JP-A- 2014 186 301**
**US-A1- 2012 088 040**
**US-A1- 2013 207 039**
**US-A1- 2014 010 973**
**US-A1- 2015 108 402**
**US-A1- 2015 129 801**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The invention relates to a liquid crystal display device having a polymer sustained alignment mode, a liquid crystal composition having negative dielectric anisotropy for use in the device, and a liquid crystal alignment film.

### Background Art

### Citation List

### Patent Literature

Patent literature No. 1: WO 2012/053323 A.
Patent literature No. 2: WO 2014/156815 A1.
Patent literature No. 3: JP 2010 256904 A.
Patent literature No. 4: JP 2014 142585 A.
Patent literature No. 5: CN 104 342 167 A.
Patent literature No. 6: JP 2009 104119 A.
Patent literature No. 7: JP 2014 186301 A.
Patent literature No. 8: WO 2015/053233 A1.
Patent literature No. 9: US 2013/207039 A1.
Patent literature No. 10: US 2014/010973 A1.
Patent literature No. 11: US 2015/108402 A1.
Patent literature No. 12: US 2015/129801 A1.
Patent literature No. 13: US 2012/088040 A1.

In a liquid crystal display device, a classification based on an operating mode for liquid crystal molecules includes a phase change (PC) mode, a twisted nematic (TN) mode, a super twisted nematic (STN) mode, an electrically controlled birefringence (ECB) mode, an optically compensated bend (OCB) mode, an in-plane switching (IPS) mode, a vertical alignment (VA) mode, a fringe field switching (FFS) mode and a field-induced photo-reactive alignment (FPA) mode. A classification based on a driving mode in the device includes a passive matrix (PM) and an active matrix (AM). The PM is classified into static, multiplex and so forth, and the AM is classified into a thin film transistor (TFT), a metal insulator metal (MIM) and so forth. The TFT is further classified into amorphous silicon and polycrystal silicon. The latter is classified into a high temperature type and a low temperature type based on a production process. A classification based on a light source includes a reflective type utilizing natural light, a transmissive type utilizing backlight and a transflective type utilizing both the natural light and the backlight.

The liquid crystal display device includes a liquid crystal composition having a nematic phase. The composition has suitable characteristics. An AM device having good characteristics can be obtained by improving characteristics of the composition. Table 1 below summarizes a relationship in the characteristics. The characteristics of the composition will be further described based on a commercially available AM device. A temperature range of the nematic phase relates to a temperature range in which the device can be used. A preferred maximum temperature of the nematic phase is about 70°C or higher, and a preferred minimum temperature of the nematic phase is about -10°C or lower. Viscosity of the composition relates to a response time in the device. A short response time is preferred for displaying moving images on the device. A shorter response time even by one millisecond is desirable. Accordingly, small viscosity in the composition is preferred. Small viscosity at a low temperature is further preferred.

Table 1. Characteristics of composition and AM device

| No. | Characteristics of composition | Characteristics of AM device |
|---|---|---|
| 1 | Wide temperature range of a nematic phase | Wide usable temperature range |
| 2 | Small viscosity | Short response time |
| 3 | Suitable optical anisotropy | Large contrast ratio |

(continued)

| No. | Characteristics of composition | Characteristics of AM device |
|---|---|---|
| 4 | Large positive or negative dielectric anisotropy | Low threshold voltage and small electric power consumption Large contrast ratio |
| 5 | Large specific resistance | Large voltage holding ratio and large contrast ratio |
| 6 | High stability to ultraviolet light and heat | Long service life |
| 7 | Large elastic constant | Short response time and large contrast ratio |

Optical anisotropy of the composition relates to a contrast ratio in the device. According to a mode of the device, large optical anisotropy or small optical anisotropy, more specifically, suitable optical anisotropy is required. A product ($\Delta n \times d$) of the optical anisotropy ($\Delta n$) of the composition and a cell gap (d) in the device is designed so as to maximize the contrast ratio. A suitable value of the product depends on a type of the operating mode. The value is about 0.45 micrometer in a device such as TN mode, in the range of about 0.30 micrometer to about 0.40 micrometer in a device having the VA mode, and in the range of about 0.20 micrometer to about 0.30 micrometer in a device having the IPS mode or the FFS mode. In the above case, a composition having large optical anisotropy is preferred for a device having a small cell gap. Large dielectric anisotropy in the composition contributes to low threshold voltage, small electric power consumption and a large contrast ratio in the device.

Accordingly, the large dielectric anisotropy is preferred. Stability of the composition to ultraviolet light and heat relates to a service life of the device. In the case where the stability is high, the device has a long service life. Such characteristics are preferred for an AM device for use in a liquid crystal projector, a liquid crystal television and so forth.

In a general-purpose liquid crystal display device, vertical alignment of liquid crystal molecules is achieved by a specific polyimide alignment film. In a liquid crystal display device having a polymer sustained alignment (PSA) mode, a polymer is combined with an alignment film. First, a composition to which a small amount of a polymerizable compound is added is injected into the device. Next, the composition is irradiated with ultraviolet light while voltage is applied between substrates of the device. The polymerizable compound is polymerized to form a network structure of the polymer in the composition. In the composition, alignment of liquid crystal molecules can be controlled by the polymer, and therefore the response time in the device is shortened and also image persistence is improved. Such an effect of the polymer can be expected for a device having the mode such as the TN mode, the ECB mode, the OCB mode, the IPS mode, the VA mode, the FFS mode and the FPA mode.

A composition having positive dielectric anisotropy is used in an AM device having the TN mode. A composition having negative dielectric anisotropy is used in an AM device having the VA mode. In an AM device having the IPS mode or the FFS mode, a composition having positive or negative dielectric anisotropy is used. In a polymer sustained alignment mode AM device, a composition having positive or negative dielectric anisotropy is used. An example of the liquid crystal composition having negative dielectric anisotropy is disclosed in Patent literature No. 1 described below.

In order to provide the above liquid crystal display devices with uniform display characteristics, alignment of the liquid crystal molecules needs to be controlled. Specifically, the liquid crystal molecules on a substrate should be uniformly aligned in one direction, a predetermined tilt angle (pretilt angle) from a substrate surface should be provided for the liquid crystal molecules, and so forth. A material playing such a role is a liquid crystal alignment film. The alignment film is one of important elements relating to display quality of the device, and the role of the alignment film increasingly becomes important year after year in association with achieving high quality of the device.

The liquid crystal alignment film is prepared from a liquid crystal aligning agent. The aligning agent mainly used is a solution obtained by dissolving polyamic acid or soluble polyimide in an organic solvent. The solution is applied to a substrate, and the coated film is heated to form a thin film of polyimide. The thin film is provided with a function of aligning the liquid crystal molecules in a predetermined direction by rubbing treatment. The rubbing treatment is treatment in which a surface of the polyimide is rubbed in one direction using a cloth flocked with fibers of nylon, rayon, polyester or the like thereinto, and is used industrially. The liquid crystal molecules can be uniformly aligned on the alignment film by the treatment.

Patent literature No. 2 relates to a PSA-mode liquid crystal display device including a polymer produced by polymerizing a polymerizable compound by energy ray irradiation in a state in which a mixture of the polymerizable compound and a liquid crystal composition is held between the first substrate and the second substrate, the polymer having a number-average molecular weight of 50, 000 or more in terms of polystyrene. In a PSA-mode display device in which alignment of liquid crystal molecules substantially vertically aligned between the substrates is controlled by applying a voltage, a pre-tilt angle can be properly given without being inhibited.

Patent literature No. 3 discloses a LC medium for use in a PS (polymer stabilized) or PSA (polymer sustained

alignment) type liquid crystal (LC) display and a liquid crystal display, capable of achieving a low pre-tilt angle, and preferably simultaneously attaining a very high specific resistance value, a high VHR value, a low threshold voltage and a short response time.

Patent literature No. 4 is directed to a liquid crystal display device that provides high quality images. The display device includes a first substrate, a second substrate facing the first substrate, and a liquid crystal layer provided between the first and second substrates. The liquid crystal layer includes a liquid crystal composition including an alkenyl liquid crystal and including an antioxidant and a derivative thereof.

Patent literature No. 5 is directed to a liquid crystal display device comprising a polymerizable liquid crystal composition comprising at least two polymerizable compounds, such that the liquid crystal composition can control a polymerization rate, reduce a residual of a polymerizable compound, and greatly reduce production.

Patent literature No. 6 discloses a PSA liquid crystal display device comprising an upper substrate and a lower substrate; and a mixed liquid crystal disposed between the upper substrate and the lower substrate. The mixed liquid crystal contains a first liquid crystal compound that does not have at least one set of double bond, a second liquid crystal compound that has at least one set of double bond, and the reactive monomers that has at least one set of methacrylate group.

Patent literature No. 7 relates to a composition for a liquid crystal display element, a liquid crystal display element and a method for producing the same.

Patent literature No. 8 discloses a liquid-crystal display element provided with a pair of substrates opposite each other; a liquid-crystal layer sandwiched between said substrates; and a liquid-crystal alignment film, obtained from a liquid-crystal alignment agent containing a polymer, on the liquid-crystal-layer side of at least one of the substrates. The liquid-crystal layer is made from a liquid-crystal composition that contains a polymerizable compound and a liquid crystal. Said polymerizable compound has a polymerizable unsaturated bonding group, a functional group that forms a hydrogen bond, and at least one aromatic ring near said functional group. The functional group forms intermolecular hydrogen bonds so as to form a mesogenic structure.

Patent literature No. 9 discloses a liquid crystal device including a liquid crystal composition The device contains an electrode group formed on one or both of a pair of substrates arranged with facing each other, a plurality of active devices connected to the electrode group, liquid crystal alignment films formed on surfaces facing each other of the pair of substrates, respectively, and a liquid crystal composition interposed between the pair of substrates.

In patent literature No. 10, a liquid crystal device including a liquid crystal composition is disclosed. The device contains an electrode group formed on one or both of a pair of substrates arranged with facing each other, a plurality of active devices connected to the electrode group, liquid crystal alignment films formed on surfaces facing each other of the pair of substrates, respectively, and a liquid crystal composition interposed between the pair of substrates. The liquid crystal composition includes a polymer.

Patent literature No. 11 is directed to a liquid crystal device including a liquid crystal composition. The device contains an electrode group formed on one or both of a pair of substrates arranged with facing each other, a plurality of active devices connected to the electrode group, liquid crystal alignment films formed on surfaces facing each other of the pair of substrates, respectively, and a liquid crystal composition interposed between the pair of substrates. The composition has negative dielectric anisotropy and comprises a specific compound having a high stability to ultraviolet light as a first component, wherein the composition may comprise a specific compound having a high maximum temperature or a small viscosity as a second component, and a specific compound having a large negative dielectric anisotropy as a third component, and a specific compound having a polymerizable group as an additive component.

In patent literature No. 12, a liquid crystal device including a liquid crystal composition is disclosed. The device contains an electrode group formed on one or both of a pair of substrates arranged with facing each other, a plurality of active devices connected to the electrode group, liquid crystal alignment films formed on surfaces facing each other of the pair of substrates, respectively, and a liquid crystal composition interposed between the pair of substrates. The liquid crystal alignment film contains polyimide and the liquid crystal composition includes a polymerizable compound having a high solubility.

Patent literature No. 13 discloses a liquid crystal display device including: a first substrate and a second substrate, one of which is transparent; a liquid crystal layer disposed between the first substrate and the second substrate; a group of electrodes for applying an electric field to the liquid crystal layer, which is formed on one of the first substrate and the second substrate; a plurality of active elements connected to the group of electrodes; and an alignment film disposed on one of the first substrate and the second substrate, wherein the alignment film contains a polyimide and a precursor of the polyimide, each of which is formed from a diamine and an acid anhydride, and the diamine contains a first diamine having an acidic group and a second diamine having a nitrogen atom-containing functional group other than two amino groups.

## Summary of Invention

### Technical Problem

One of aims of the invention is to provide a liquid crystal display device having characteristics such as a short response time, a large voltage holding ratio, low threshold voltage, a large contrast ratio and a long service life. Another aim is to provide a liquid crystal alignment film contributes to the short response time. Another aim is to provide a liquid crystal composition for use in such a device. Another aim is to provide a liquid crystal composition satisfying at least one of characteristics such as high maximum temperature of a nematic phase, low minimum temperature of the nematic phase, small viscosity, suitable optical anisotropy, large negative dielectric anisotropy, large specific resistance, high stability to ultraviolet light, high stability to heat and a large elastic constant. Another aim is to provide a liquid crystal composition having a suitable balance regarding at least two of the characteristics.

### Solution to Problem

The invention concerns a polymer sustained alignment mode liquid crystal display device, including: an electrode group formed on one or both of a pair of substrates arranged with facing each other; a plurality of active devices connected to the electrode group; liquid crystal alignment films formed on surfaces facing each other of the pair of substrates, respectively; and a liquid crystal composition interposed between the pair of substrates, wherein the liquid crystal alignment film contains at least one polymer selected from the polyamic acid and the polyamic acid ester as a main component, and contains polyorganosiloxane as an accessory component, and the liquid crystal composition contains at least one compound selected from the group of compounds represented by formula (1) as a first component, a liquid crystal composition included in the device, and a liquid crystal alignment film included in the device:

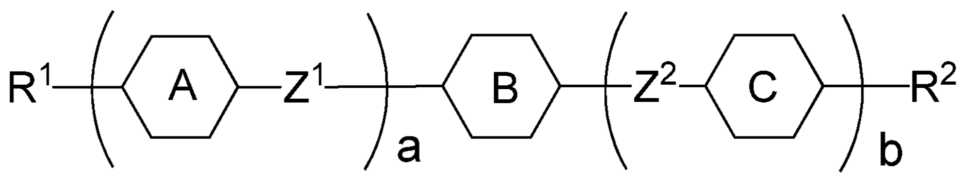

(1)

wherein, in formula (1), $R^1$ and $R^2$ are independently alkyl having 1 to 12 carbons, alkoxy having 1 to 12 carbons, alkenyl having 2 to 12 carbons, alkenyloxy having 2 to 12 carbons, or alkyl having 1 to 12 carbons in which at least one hydrogen is replaced by fluorine or chlorine; ring A and ring C are independently 1,4-cyclohexylene, 1,4-cyclohexenylene, 1,4-phenylene, 1,4-phenylene in which at least one hydrogen is replaced by fluorine or chlorine, or tetrahydropyran-2,5-diyl; ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl; $Z^1$ and $Z^2$ are independently a single bond, ethylene, carbonyloxy or methyleneoxy; a is 0, 1, 2 or 3; b is 0 or 1; and a sum of a and b is 3 or less.

### Advantageous Effects of Invention

One of advantages of the invention is a liquid crystal display device having characteristics such as a short response time, a large voltage holding ratio, low threshold voltage, a large contrast ratio and a long service life. Another advantage is a liquid crystal alignment film contributing to a short response time. Another advantage is a liquid crystal composition for use in such a device. Another advantage is a liquid crystal composition satisfying at least one of characteristics such as high maximum temperature of a nematic phase, low minimum temperature of the nematic phase, small viscosity, suitable optical anisotropy, large negative dielectric anisotropy, large specific resistance, high stability to ultraviolet light, high stability to heat and a large elastic constant. Another advantage is a liquid crystal composition having a suitable balance regarding at least two of the characteristics.

## Description of Embodiments

Usage of terms herein is as described below. Terms "liquid crystal composition" and "liquid crystal display device" may be occasionally abbreviated as "composition" and "device," respectively. "Liquid crystal display device" is a generic term for a liquid crystal display panel and a liquid crystal display module. "Liquid crystal compound" is a generic term for a compound having a liquid crystal phase such as a nematic phase and a smectic phase, and a compound having no liquid crystal phase but to be mixed with the composition for the purpose of adjusting characteristics such as a temperature range of the nematic phase, viscosity and dielectric anisotropy. The compound has a six-membered ring

such as 1, 4-cyclohexylene or 1, 4-phenylene, and has rod-like molecular structure. "Polymerizable compound" is a compound to be added for the purpose of forming a polymer in the composition. A liquid crystal compound having alkenyl is not polymerizable in the above meaning.

The liquid crystal composition is prepared by mixing a plurality of liquid crystal compounds. An additive such as an optically active compound, an antioxidant, an ultraviolet light absorber, a dye, an antifoaming agent, the polymerizable compound, a polymerization initiator and a polymerization inhibitor is added to the liquid crystal composition when necessary. A proportion of the liquid crystal compound is expressed in terms of weight percent (% by weight) based on the weight of the liquid crystal composition containing no additive even after the additive has been added. A proportion of the additive is expressed in terms of weight percent (% by weight) based on the weight of the liquid crystal composition containing no additive. More specifically, a proportion of the liquid crystal compound or the additive is calculated based on the total weight of the liquid crystal compound. Weight parts per million (ppm) may be occasionally used. A proportion of the polymerization initiator and the polymerization inhibitor is exceptionally expressed based on the weight of the polymerizable compound.

"Maximum temperature of the nematic phase" may be occasionally abbreviated as "maximum temperature." "Minimum temperature of the nematic phase" may be occasionally abbreviated as "minimum temperature." An expression "having a large voltage holding ratio" means that the device has a large voltage holding ratio at room temperature and also at a temperature close to the maximum temperature of the nematic phase in an initial stage, and the device has the large voltage holding ratio at room temperature and also at a temperature close to the maximum temperature of the nematic phase even after the device has been used for a long period of time. An expression "increase the dielectric anisotropy" means that a value of dielectric anisotropy positively increases in a composition having positive dielectric anisotropy, and the value of dielectric anisotropy negatively increases in a composition having negative dielectric anisotropy.

An expression "at least one piece of 'A' may be replaced by 'B'" means that the number of 'A' is arbitrary. When the number of 'A' is 1, a position of 'A' is arbitrary, and also when the number of 'A' is 2 or more, positions thereof can be selected without restriction. A same rule applies also to an expression "at least one piece of 'A' is replaced by 'B'." For example, an expression "in alkyl, at least one piece of $-CH_2-$ may be replaced by -O- or -S-" includes a group such as $-OCH_3$, $-CH_2OCH_3$, $-CH_2OCH_2CH_2OCH_3$, $-SCH_2CH_2CH_3$, $-CH_2CH_2SCH_3$ and $-CH_2OCH_2CH_2SCH_3$.

In formula (1) to formula (3), a symbol A, B, C or the like surrounded by a hexagonal shape corresponds to a ring such as ring A, ring B and ring C, respectively. In formula (3), an oblique line crossing one side of the hexagonal shape of ring F means that a bonding position on a ring can be arbitrarily selected for a $P^1$-$Sp^1$ group. A same rule also applies to a $P^2$-$Sp^2$ group or the like, such as ring G. A subscript such as e represents the number of groups subjected to bonding with ring F or the like. When e is 2, two of $P^1$-$Sp^1$ groups exist on ring F. Two of groups represented by $P^1$-$Sp^1$ may be identical or different. A same rule applies also to two of arbitrary groups when e is larger than 2. A same rule applies also to any other group. A compound represented by formula (1) may be occasionally abbreviated as compound (1). At least one compound selected from the group of compounds represented by formula (1) may be occasionally abbreviated as "compound (1)." "Compound (1)" means one compound, a mixture of two compounds or a mixture of three or more compounds represented by formula (1). A same rule applies also to any other compound represented by any other formula.

A symbol of terminal group $R^1$ is used in a plurality of compounds in chemical formulas of component compounds. In the compounds, two groups represented by two pieces of arbitrary $R^1$ may be identical or different. For example, in one case, $R^1$ of compound (1-1) is ethyl and $R^1$ of compound (1-2) is ethyl. In another case, $R^1$ of compound (1-1) is ethyl and $R^1$ of compound (1-2) is propyl. A same rule applies also to a symbol of any other terminal group or the like. In formula (1), when a is 2, two of ring A exists. In the compound, two rings represented by two of ring A may be identical or different. A same rule applies also to two of arbitrary ring A when a is larger than 2. A same rule applies also to a symbol of $Z^1$, ring C or the like. A same rule applies also to two of $-Sp^2-P^5$ groups exist in compound (3-27).

Then, 2-fluoro-1,4-phenylene means two divalent groups described below. In a chemical formula, fluorine may be leftward (L) or rightward (R). A same rule applies also to an asymmetrical divalent group such as tetrahydropyran-2,5-diyl. A same rule applies also to a bonding group such as carbonyloxy (-COO- and - OCO-).

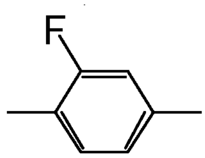
(L)

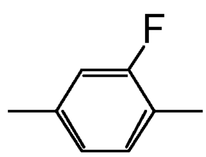
(R)

The invention includes items described below.

Item 1. A polymer sustained alignment mode liquid crystal display device, including: an electrode group formed on one or both of a pair of substrates arranged with facing each other; a plurality of active devices connected to the electrode group; liquid crystal alignment films formed on surfaces facing each other of the pair of substrates, respectively; and a liquid crystal composition interposed between the pair of substrates, wherein the liquid crystal alignment film contains at least one polymer selected from the polyamic acid and the polyamic acid ester as a main component, and contains polyorganosiloxane as an accessory component, and the liquid crystal composition contains at least one compound selected from the group of compounds represented by formula (1) as a first component:

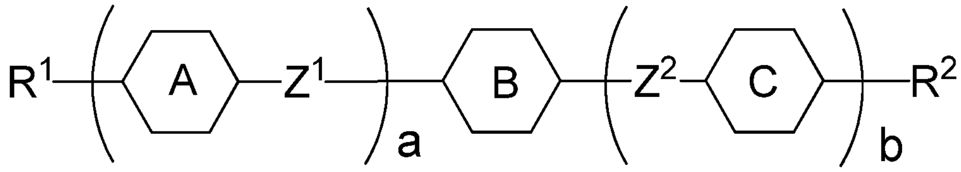

(1)

wherein, in formula (1), $R^1$ and $R^2$ are independently alkyl having 1 to 12 carbons, alkoxy having 1 to 12 carbons, alkenyl having 2 to 12 carbons, alkenyloxy having 2 to 12 carbons, or alkyl having 1 to 12 carbons in which at least one hydrogen is replaced by fluorine or chlorine; ring A and ring C are independently 1,4-cyclohexylene, 1,4-cyclohexenylene, 1,4-phenylene, 1,4-phenylene in which at least one hydrogen is replaced by fluorine or chlorine, or tetrahydropyran-2,5-diyl; ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl; $Z^1$ and $Z^2$ are independently a single bond, ethylene, carbonyloxy or methyleneoxy; a is 0, 1, 2 or 3; b is 0 or 1; and a sum of a and b is 3 or less.

Item 2. The liquid crystal display device according to item 1, wherein the first component is at least one compound selected from the group of compounds represented by formula (1-1) to formula (1-21):

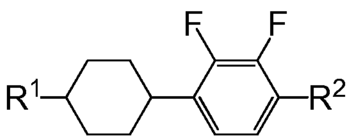

(1-1)

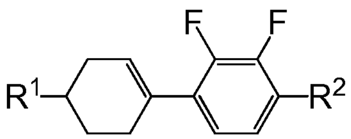

(1-2)

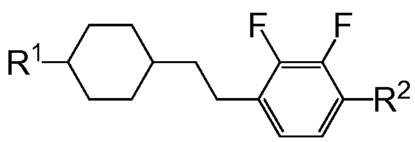

(1-3)

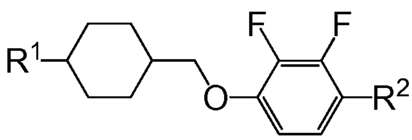

(1-4)

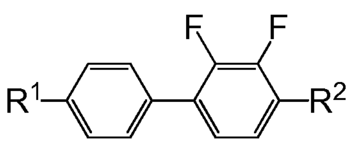

(1-5)

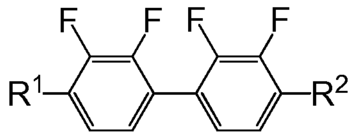
(1-6)

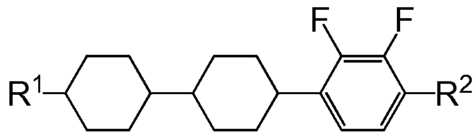
(1-7)

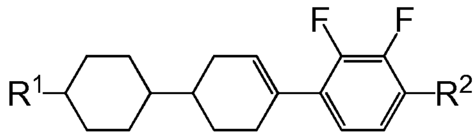
(1-8)

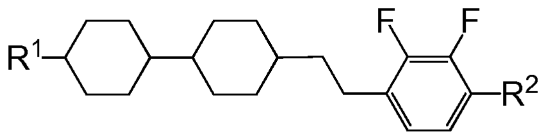
(1-9)

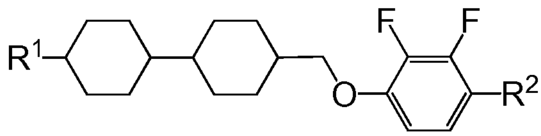
(1-10)

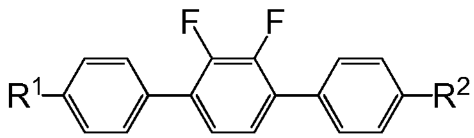
(1-11)

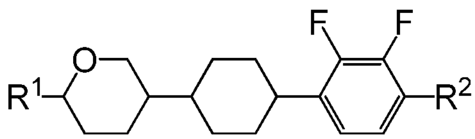
(1-12)

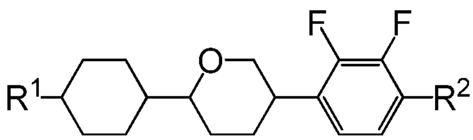
(1-13)

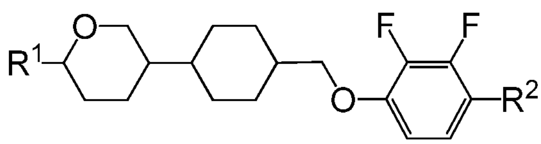
(1-14)

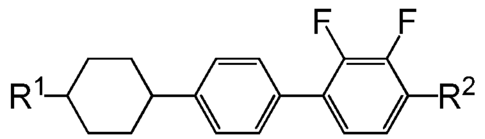

(1-15)

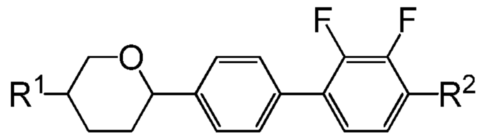

(1-16)

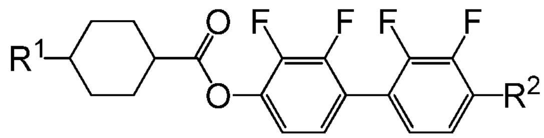

(1-17)

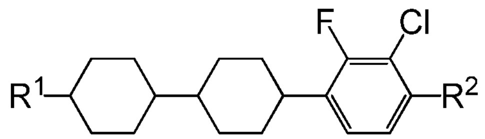

(1-18)

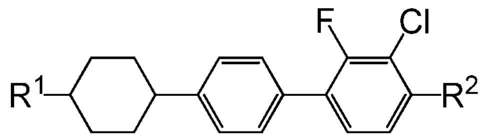

(1-19)

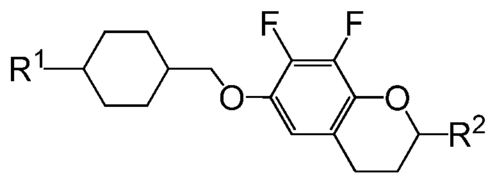

(1-20)

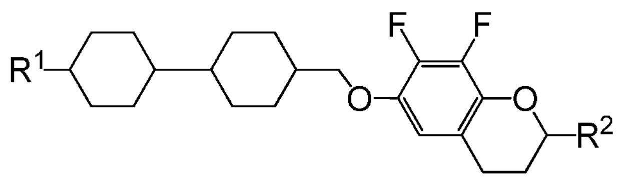

(1-21)

wherein, in formula (1-1) to formula (1-21), $R^1$ and $R^2$ are independently alkyl having 1 to 12 carbons, alkoxy having 1 to 12 carbons, alkenyl having 2 to 12 carbons, alkenyloxy having 2 to 12 carbons, or alkyl having 1 to 12 carbons in which at least one hydrogen is replaced by fluorine or chlorine.

Item 3. The liquid crystal display device according to item 1 or 2, wherein a proportion of the first component is in the range of 10% by weight to 90% by weight based on the weight of the liquid crystal composition.

Item 4. The liquid crystal display device according to any one of items 1 to 3, wherein the liquid crystal composition contains at least one compound selected from the group of compounds represented by formula (2) as a second component:

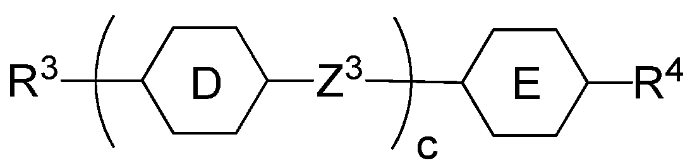

(2)

wherein, in formula (2), $R^3$ and $R^4$ are independently alkyl having 1 to 12 carbons, alkoxy having 1 to 12 carbons, alkenyl having 2 to 12 carbons, alkyl having 1 to 12 carbons in which at least one hydrogen is replaced by fluorine or chlorine, or alkenyl having 2 to 12 carbons in which at least one hydrogen is replaced by fluorine or chlorine; ring D and ring E are independently 1,4-cyclohexylene, 1,4-phenylene, 2-fluoro-1,4-phenylene or 2,5-difluoro-1,4-phenylene; $Z^3$ is a single bond, ethylene or carbonyloxy; and c is 1, 2 or 3.

Item 5. The liquid crystal display device according to item 4, wherein the second component is at least one compound selected from the group of compounds represented by formula (2-1) to formula (2-13) :

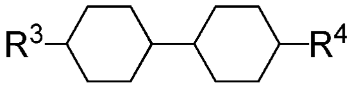
(2-1)

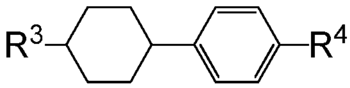
(2-2)

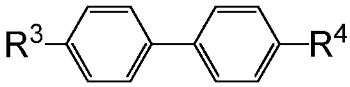
(2-3)

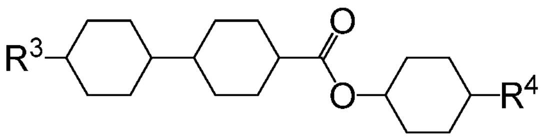
(2-4)

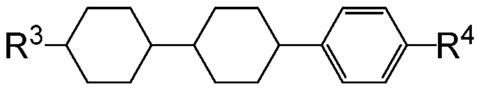
(2-5)

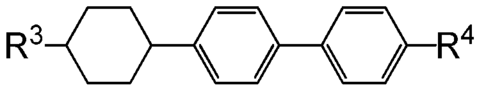
(2-6)

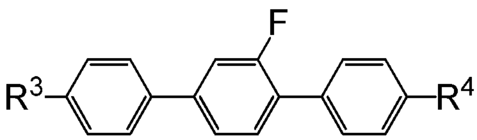
(2-7)

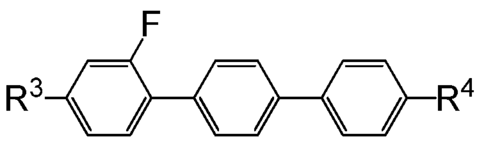
(2-8)

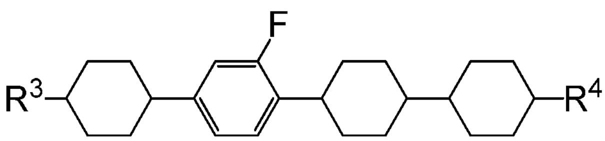
(2-9)

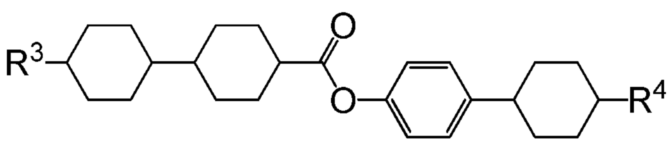
(2-10)

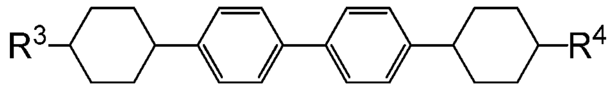

(2-11)

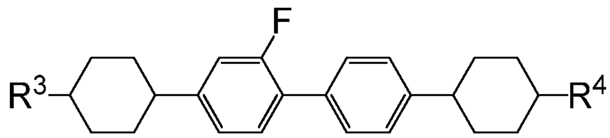

(2-12)

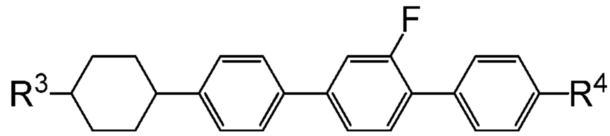

(2-13)

wherein, in formula (2-1) to formula (2-13), $R^3$ and $R^4$ are independently alkyl having 1 to 12 carbons, alkoxy having 1 to 12 carbons, alkenyl having 2 to 12 carbons, alkyl having 1 to 12 carbons in which at least one hydrogen is replaced by fluorine or chlorine, or alkenyl having 2 to 12 carbons in which at least one hydrogen is replaced by fluorine or chlorine.

Item 6. The liquid crystal display device according to item 4 or 5, wherein a proportion of the second component is in the range of 10% by weight to 90% by weight based on the weight of the liquid crystal composition.

Item 7. The liquid crystal display device according to any one of items 1 to 6, wherein the liquid crystal composition contains at least one polymerizable compound selected from the group of compounds represented by formula (3) as an additive component:

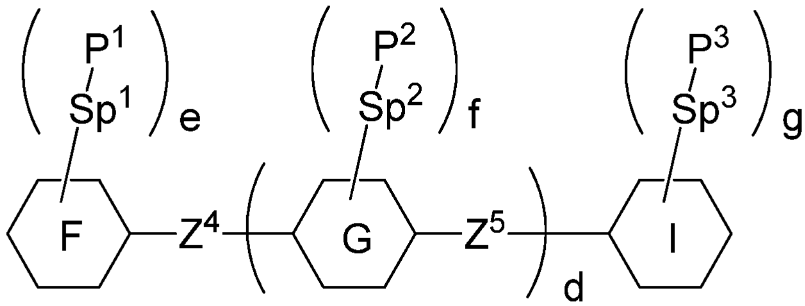

(3)

wherein, in formula (3), ring F and ring I are independently cyclohexyl, cyclohexenyl, phenyl, 1-naphthyl, 2-naphthyl, tetrahydropyran-2-yl, 1,3-dioxane-2-yl, pyrimidine-2-yl or pyridine-2-yl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine; ring G is 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl or pyridine-2,5-diyl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen may be replaced by fluorine or chlorine; $Z^4$ and $Z^5$ are independently a single bond or alkylene having 1 to 10 carbons, and in the alkylene, at least one piece of $-CH_2-$ may be replaced by -O-, -CO-, -COO- or -OCO-, and at least one piece of $-CH_2-CH_2-$ may be replaced by -CH=CH-, $-C(CH_3)=CH-$, $-CH=C(CH_3)-$ or $-C(CH_3)=C(CH_3)-$, and in the groups, at least one hydrogen may be replaced by fluorine or chlorine; $P^1$, $P^2$ and $P^3$ are independently a polymerizable group; $Sp^1$, $Sp^2$ and $Sp^3$ are independently a single bond or alkylene having 1 to 10 carbons, and in the alkylene, at least one piece of $-CH_2-$may be replaced by -O-, -COO-, -OCO- or -OCOO-, and at least one piece of $-CH_2-CH_2-$ may be replaced by -CH=CH- or -C≡C-, and in the groups, at least one hydrogen may be replaced by fluorine or chlorine; d is 0, 1 or 2; e, f and g are independently 0, 1, 2, 3 or 4, and a sum of e, f and g is 1 or more.

Item 8. The liquid crystal display device according to item 7, wherein the additive component is at least one polymerizable compound selected from the group of compounds represented by formula (3-1) to formula (3-27):

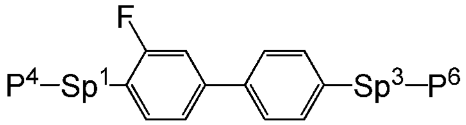

(3-1)

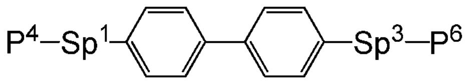

(3-2)

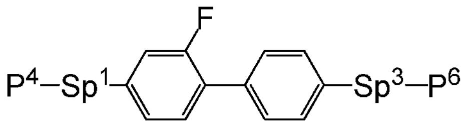

(3-3)

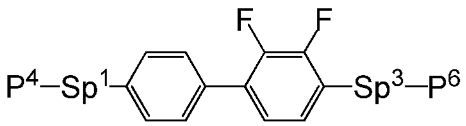

(3-4)

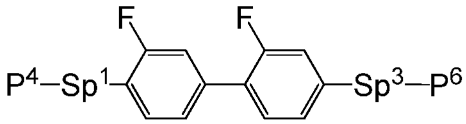

(3-5)

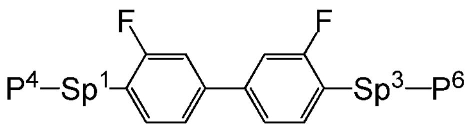

(3-6)

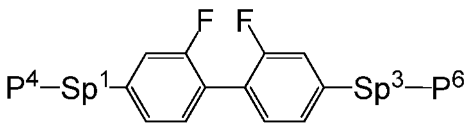

(3-7)

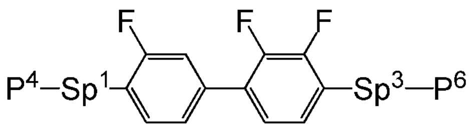

(3-8)

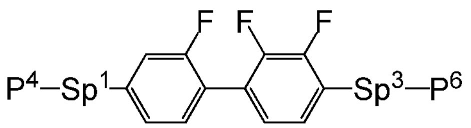

(3-9)

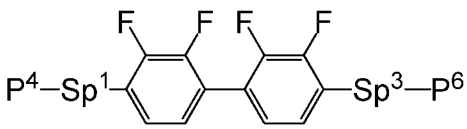

(3-10)

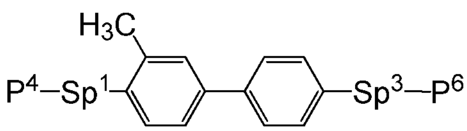

(3-11)

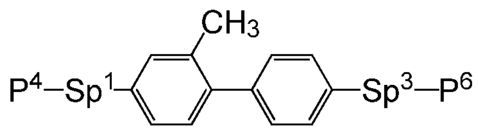

(3-12)

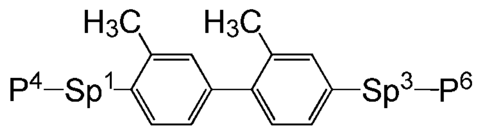

(3-13)

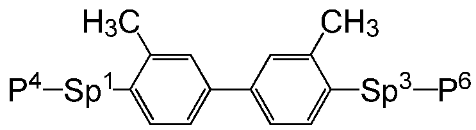

(3-14)

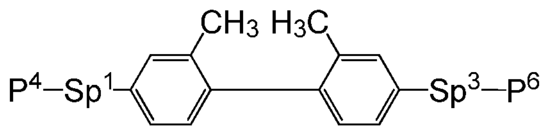

(3-15)

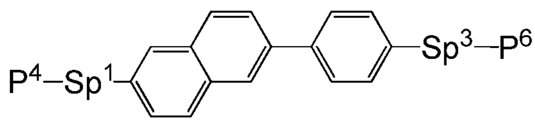

(3-16)

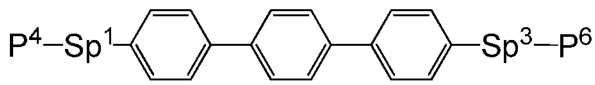

(3-17)

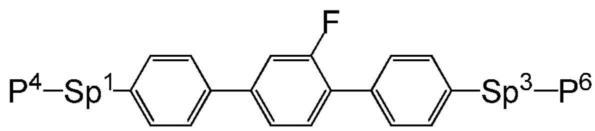

(3-18)

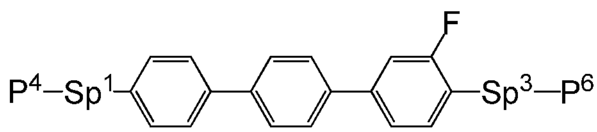

(3-19)

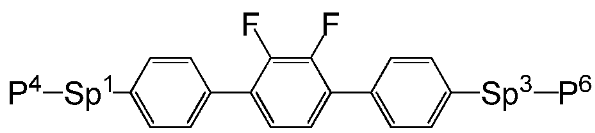

(3-20)

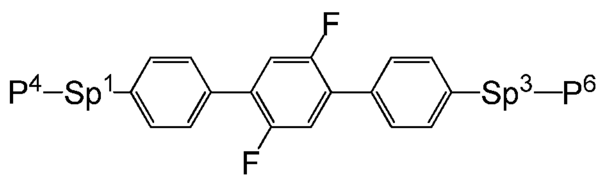

(3-21)

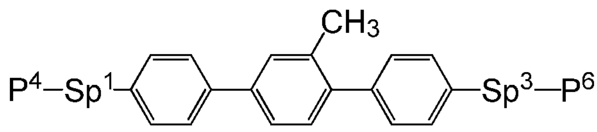

(3-22)

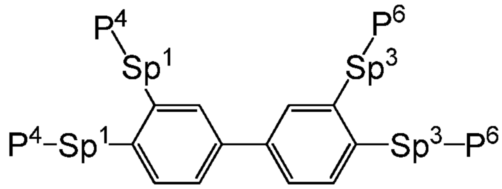

(3-23)

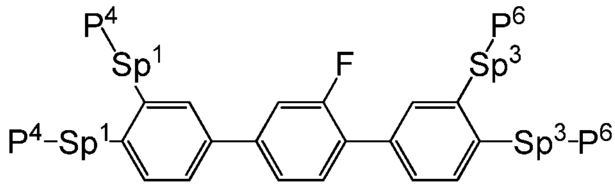

(3-24)

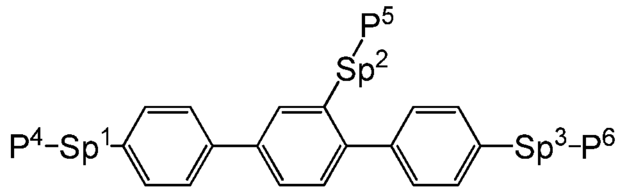

(3-25)

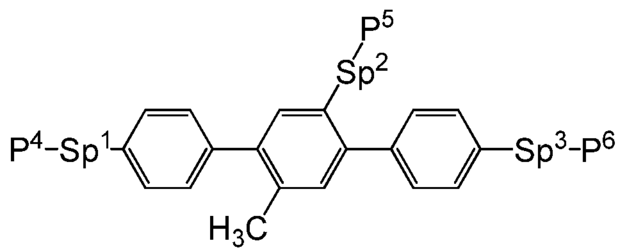

(3-26)

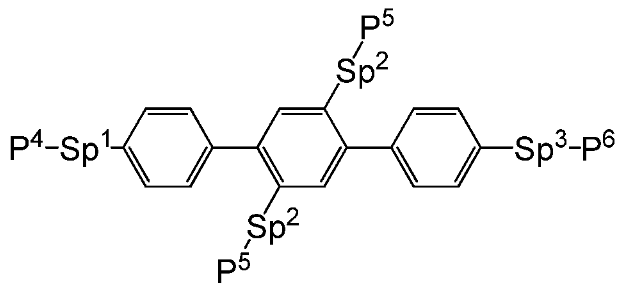

(3-27)

wherein, in formula (3-1) to formula (3-27), $P^4$, $P^5$ and $P^6$ are independently a polymerizable group selected from the group of groups represented by formula (P-1) to formula (P-3):

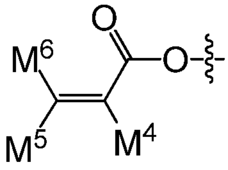
(P-1)

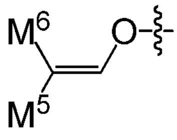
(P-2)

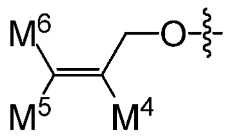
(P-3)

wherein, in formula (P-1) to formula (P-3), $M^4$, $M^5$ and $M^6$ are independently hydrogen, fluorine, alkyl having 1 to 5 carbons, or alkyl having 1 to 5 carbons in which at least one hydrogen is replaced by fluorine or chlorine; and in formula (3-1) to formula (3-27), $Sp^1$, $Sp^2$ and $Sp^3$ are independently a single bond or alkylene having 1 to 10 carbons, and in the alkylene, at least one piece of $-CH_2-$ may be replaced by -O-, -COO-, -OCO- or -OCOO-, and at least one piece of $-CH_2-CH_2-$ may be replaced by -CH=CH- or -C≡C-, and in the groups, at least one hydrogen may be replaced by fluorine or chlorine.

Item 9. The liquid crystal display device according to any one of items 1 to 8, wherein the polyorganosiloxane contained in the liquid crystal alignment film contains at least one group selected from the group of groups represented by formula ($X^1$-1) to formula ($X^1$-7) :

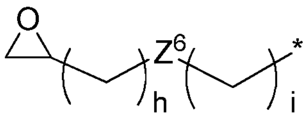
($X^1$-1)

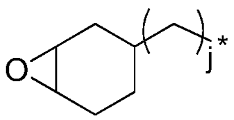
($X^1$-2)

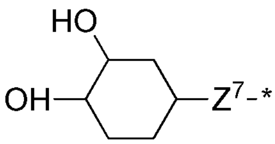
($X^1$-3)

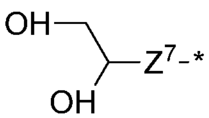
($X^1$-4)

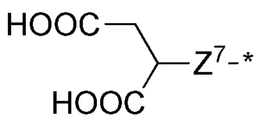
($X^1$-5)

$HOOC-Z^7-*$ ($X^1$-6)

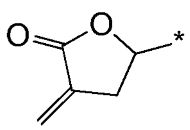
($X^1$-7)

wherein, in formula ($X^1$-1) to formula ($X^1$-7), an asterisk represents a site to which bonding is to be made; $Z^6$ is -O- or a single bond; $Z^7$ is a single bond, alkylene having 1 to 6 carbons, or a divalent group having 1 to 20 carbons containing at least one selected from the group of -O-, -S-, -COO-, -OCO- and $-NR^6-$, in which $R^6$ is hydrogen or alkyl having 1 to 6 carbons; h is 1, 2 or 3; i is an integer from 0 to 6, and when i is 0, $Z^6$ is a single bond; and j is an integer from 0 to 6.

The invention further includes the following items: (a) the composition, further containing at least one of additives such as an optically active compound, an antioxidant, an ultraviolet light absorber, a dye, an antifoaming agent, a polymerizable compound, a polymerization initiator and a polymerization inhibitor; (b) an AM device including the composition; (c) the composition further containing a polymerizable compound, and a polymer sustained alignment mode AM device including the composition; (d) the polymer sustained alignment mode AM device, wherein the device includes the composition, and the polymerizable compound in the composition is polymerized; (e) a transmissive device including the composition; (f) use of the composition as the composition having the nematic phase; and (g) use as an optically active composition by adding the optically active compound to the composition.

The liquid crystal composition to be included in the liquid crystal display device of the invention will be described in the following order. First, a constitution of the composition will be described. Second, main characteristics of the component compounds and main effects of the compounds on the composition will be described. Third, a combination of components in the composition, a preferred proportion of the components and the basis thereof will be described. Fourth, a preferred embodiment of the component compounds will be described. Fifth, a preferred component compound will be described. Sixth, an additive that may be added to the composition will be described. Seventh, methods for synthesizing the component compounds will be described. Eighth, an application of the composition will be described. Ninth, a liquid crystal alignment film will be described.

First, the constitution of the composition will be described. The composition contains a plurality of liquid crystal compounds. The composition may contain an additive. The additive is the optically active compound, the antioxidant, the ultraviolet light absorber, the dye, the antifoaming agent, the polymerizable compound, the polymerization initiator, the polymerization inhibitor or the like. The composition is classified into composition A and composition B from a viewpoint of a liquid crystal compound. Composition A may further contain any other liquid crystal compound, an additive or the like in addition to the liquid crystal compound selected from compound (1) and compound (2). "Any other liquid crystal compound" means a liquid crystal compound different from compound (1) and compound (2). Such a compound is mixed with the composition for the purpose of further adjusting the characteristics.

Composition B consists essentially of liquid crystal compounds selected from compound (1) and compound (2). The term "essentially" means that the composition may contain the additive, but contains no any other liquid crystal compound. Composition B has a smaller number of components than composition A has. Composition B is preferred to composition A from a viewpoint of cost reduction. Composition A is preferred to composition B from a viewpoint of possibility of further adjusting the characteristics by mixing any other liquid crystal compound.

Second, the main characteristics of the component compounds and the main effects of the compounds on the composition or the device will be described. The main characteristics of the component compounds are summarized in Table 2 on the basis of advantageous effects of the invention. In Table 2, a symbol L stands for "large" or "high," a symbol M stands for "medium" and a symbol S stands for "small" or "low." The symbols L, M and S represent a classification based on a qualitative comparison among the component compounds, and a symbol 0 (zero) means that the dielectric anisotropy is significantly small.

Table 2. Characteristics of compounds

| Compound | Compound (1) | Compound (2) |
|---|---|---|
| Maximum temperature | S to M | S to L |
| Viscosity | L | S to M |
| Optical anisotropy | M to L | S to L |
| Dielectric anisotropy | L[1)] | 0 |
| Specific resistance | L | L |
| 1) A value of dielectric anisotropy is negative, and the symbol shows magnitude of an absolute value | | |

The main effects of the component compounds are as described below. Compound (1) increases the dielectric anisotropy and decreases the minimum temperature. Compound (2) decreases the viscosity or increases the maximum temperature. Compound (3) is polymerized to give a polymer, and the polymer shortens a response time in the device, and improves image persistence.

Third, the combination of components in the composition, the preferred proportion of the component compounds and the basis thereof will be described. A preferred combination of the components in the composition includes a combination of the first component and the second component, a combination of the first component and the additive component, or a combination of the first component, the second component and the additive component. A further preferred combination includes a combination of the first component and the second component, or a combination of

the first component, the second component and the additive component.

A preferred proportion of the first component is about 10% by weight or more for increasing the dielectric anisotropy, and about 90% by weight or less for decreasing the minimum temperature. A further preferred proportion is in the range of about 20% by weight to about 85% by weight. A particularly preferred proportion is in the range of about 30% by weight to about 85% by weight.

A preferred proportion of the second component is about 10% by weight or more for increasing the maximum temperature or decreasing the viscosity, and about 90% by weight or less for increasing the dielectric anisotropy. A further preferred proportion is in the range of about 15% by weight to about 75% by weight. A particularly preferred proportion is in the range of about 15% by weight to about 60% by weight.

Compound (3) is added to the composition for the purpose of adapting the composition to the polymer sustained alignment mode device. A preferred proportion of the additive is about 0.03% by weight or more for aligning liquid crystal molecules, and about 10% by weight or less for preventing poor display in the device. A further preferred proportion is in the range of about 0.1% by weight to about 2% by weight. A particularly preferred proportion is in the range of about 0.2% by weight to about 1% by weight.

Fourth, the preferred embodiment of the component compounds will be described. In formula (1) and formula (2), $R^1$ and $R^2$ are independently alkyl having 1 to 12 carbons, alkoxy having 1 to 12 carbons, alkenyl having 2 to 12 carbons, alkenyloxy having 2 to 12 carbons, or alkyl having 1 to 12 carbons in which at least one hydrogen is replaced by fluorine or chlorine. Preferred $R^1$ or $R^2$ is alkyl having 1 to 12 carbons for increasing the stability, and alkoxy having 1 to 12 carbons for increasing the dielectric anisotropy. $R^3$ and $R^4$ are independently alkyl having 1 to 12 carbons, alkoxy having 1 to 12 carbons, alkenyl having 2 to 12 carbons, alkyl having 1 to 12 carbons in which at least one hydrogen is replaced by fluorine or chlorine, or alkenyl having 2 to 12 carbons in which at least one hydrogen is replaced by fluorine or chlorine. Preferred $R^3$ or $R^4$ is alkenyl having 2 to 12 carbons for decreasing the viscosity, and alkyl having 1 to 12 carbons for increasing the stability. Alkyl is straight-chain alkyl or branched-chain alkyl, but includes no cyclic alkyl. Straight-chain alkyl is preferred to branched-chain alkyl. A same rule applies also to a terminal group such as alkoxy and alkenyl.

Preferred alkyl is methyl, ethyl, propyl, butyl, pentyl, hexyl, heptyl or octyl. Further preferred alkyl is methyl, ethyl, propyl, butyl or pentyl for decreasing the viscosity.

Preferred alkoxy is methoxy, ethoxy, propoxy, butoxy, pentyloxy, hexyloxy or heptyloxy. Further preferred alkoxy is methoxy or ethoxy for decreasing the viscosity.

Preferred alkenyl is vinyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl or 5-hexenyl. Further preferred alkenyl is vinyl, 1-propenyl, 3-butenyl or 3-pentenyl for decreasing the viscosity. A preferred configuration of -CH=CH- in the alkenyl depends on a position of a double bond. Trans is preferred in alkenyl such as 1-propenyl, 1-butenyl, 1-pentenyl, 1-hexenyl, 3-pentenyl and 3-hexenyl for decreasing the viscosity, for instance. Cis is preferred in alkenyl such as 2-butenyl, 2-pentenyl and 2-hexenyl.

Preferred alkenyloxy is vinyloxy, allyloxy, 3-butenyloxy, 3-pentenyloxy or 4-pentenyloxy. Further preferred alkenyloxy is allyloxy or 3-butenyloxy for decreasing the viscosity.

Preferred examples of alkyl in which at least one hydrogen is replaced by fluorine or chlorine include fluoromethyl, 2-fluoroethyl, 3-fluoropropyl, 4-fluorobutyl, 5-fluoropentyl, 6-fluorohexyl, 7-fluoroheptyl or 8-fluorooctyl. Further preferred examples include 2-fluoroethyl, 3-fluoropropyl, 4-fluorobutyl or 5-fluoropentyl for increasing the dielectric anisotropy.

Preferred examples of alkenyl in which at least one hydrogen is replaced by fluorine or chlorine include 2,2-difluorovinyl, 3,3-difluoro-2-propenyl, 4,4-difluoro-3-butenyl, 5,5-difluoro-4-pentenyl or 6,6-difluoro-5-hexenyl. Further preferred examples include 2,2-difluorovinyl or 4,4-difluoro-3-butenyl for decreasing the viscosity.

Ring A and ring C are independently 1,4-cyclohexylene, 1,4-cyclohexenylene, 1,4-phenylene, 1,4-phenylene in which at least one hydrogen is replaced by fluorine or chlorine, or tetrahydropyran-2,5-diyl. Preferred examples of "1,4-phenylene in which at least one hydrogen is replaced by fluorine or chlorine" include 2-fluoro-1,4-phenylene, 2,3-difluoro-1,4-phenylene or 2-chloro-3-fluoro-1,4-phenylene. Preferred ring A or ring C is 1,4-cyclohexylene for decreasing the viscosity, tetrahydropyran-2,5-diyl for increasing the dielectric anisotropy, and 1,4-phenylene for increasing the optical anisotropy. With regard to a configuration of 1,4-cyclohexylene, trans is preferred to cis for increasing the maximum temperature. Tetrahydropyran-2,5-diyl includes:

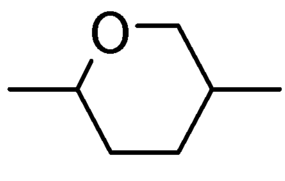

or

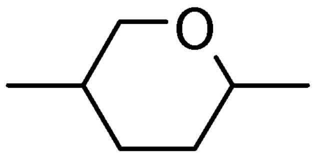

,

and preferably

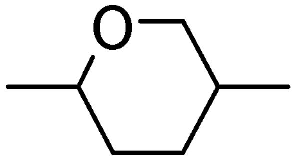

.

Ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl. Preferred ring B is 2,3-difluoro-1,4-phenylene for decreasing the viscosity, 2-chloro-3-fluoro-1,4-phenylene for decreasing the optical anisotropy, and 7,8-difluorochroman-2,6-diyl for increasing the dielectric anisotropy.

Ring D and ring E are independently 1,4-cyclohexylene, 1,4-phenylene, 2-fluoro-1,4-phenylene or 2,5-difluoro-1,4-phenylene. Preferred ring D or ring E is 1,4-cyclohexylene for decreasing the viscosity or increasing the maximum temperature, and 1,4-phenylene for decreasing the minimum temperature.

$Z^1$ and $Z^2$ are independently a single bond, ethylene, carbonyloxy or methyleneoxy. Preferred $Z^1$ or $Z^2$ is a single bond for decreasing the viscosity, ethylene for decreasing the minimum temperature, and methyleneoxy for increasing the dielectric anisotropy. $Z^3$ is a single bond, ethylene or carbonyloxy. Preferred $Z^3$ is a single bond for increasing the stability.

Then, a is 0, 1, 2 or 3, b is 0 or 1, and a sum of a and b is 3 or less. Preferred a is 1 for decreasing the viscosity, and 2 or 3 for increasing the maximum temperature. Preferred b is 0 for decreasing the viscosity, and 1 for decreasing the minimum temperature. Then, c is 1, 2 or 3. Preferred c is 1 for decreasing the viscosity, and 2 or 3 for increasing the maximum temperature.

In formula (3), $P^1$, $P^2$ and $P^3$ are independently a polymerizable group. Preferred $P^1$, $P^2$ or $P^3$ is a polymerizable group selected from the group of groups represented by formula (P-1) to formula (P-5). Further preferred $P^1$, $P^2$ or $P^3$ is a group represented by formula (P-1), formula (P-2) or formula (P-3). Particularly preferred $P^1$, $P^2$ or $P^3$ is the group represented by formula (P-1) or formula (P-2). Most preferred $P^1$, $P^2$ or $P^3$ is a group represented by formula (P-1). A preferred group represented by formula (P-1) is $-OCO-CH=CH_2$ or $-OCO-C(CH_3)=CH_2$. A wavy line in formula (P-1) to formula (P-5) represents a site to which bonding is to be made.

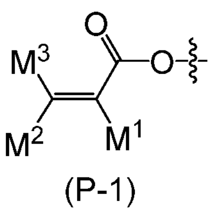

(P-1)

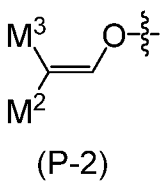

(P-2)

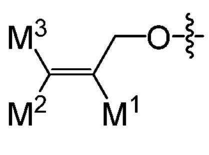

(P-3)

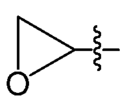

(P-4)

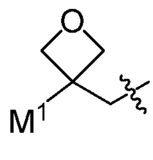

(P-5)

In formula (P-1) to formula (P-5), $M^1$, $M^2$ and $M^3$ are independently hydrogen, fluorine, alkyl having 1 to 5 carbons, or alkyl having 1 to 5 carbons in which at least one hydrogen is replaced by fluorine or chlorine. Preferred $M^1$, $M^2$ or $M^3$ is hydrogen or methyl for increasing reactivity. Further preferred $M^1$ is hydrogen or methyl and further preferred $M^2$ or $M^3$ is hydrogen.

$Sp^1$, $Sp^2$ and $Sp^3$ are independently a single bond, alkylene having 1 to 10 carbons, and in the alkylene, at least one piece of $-CH_2-$ may be replaced by -O-, -COO-, -OCO- or -OCOO-, and at least one piece of $-CH_2-CH_2-$ may be replaced by -CH=CH- or -C≡C-, and in the groups, at least one hydrogen may be replaced by fluorine or chlorine. Preferred $Sp^1$, $Sp^2$ or $Sp^3$ is a single bond, $-CH_2CH_2-$, $-CH_2O-$, $-OCH_2-$, -COO-, -OCO-, -CO-CH=CH- or -CH=CH-CO-. Further preferred $Sp^1$, $Sp^2$ or $Sp^3$ is a single bond.

Ring F and ring I are independently cyclohexyl, cyclohexenyl, phenyl, 1-naphthyl, 2-naphthyl, tetrahydropyran-2-yl, 1,3-dioxane-2-yl, pyrimidine-2-yl or pyridine-2-yl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine. Preferred ring F and ring I are phenyl. Ring G is 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl or pyridine-2,5-diyl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen may be replaced by fluorine or chlorine. Preferred ring G is 1,4-phenylene or 2-fluoro-1,4-phenylene.

$Z^4$ and $Z^5$ are independently a single bond or alkylene having 1 to 10 carbons, and in the alkylene, at least one piece of $-CH_2-$may be replaced by -O-, -CO-, -COO- or -OCO-, and at least one piece of $-CH_2-CH_2-$ may be replaced by -CH=CH-, $-C(CH_3)=CH-$, $-CH=C(CH_3)-$ or $-C(CH_3)=C(CH_3)-$, and in the groups, at least one hydrogen may be replaced by fluorine or chlorine. Preferred $Z^4$ or $Z^5$ is a single bond, $-CH_2CH_2-$, $-CH_2O-$, $-OCH_2-$, -COO- or -OCO-. Further preferred $Z^4$ or $Z^5$ is a single bond.

Then, d is 0, 1 or 2. Preferred d is 0 or 1. Then, e, f and g are independently 0, 1, 2, 3 or 4, and a sum of e, f and g is 1 or more. Preferred e, f or g is 1 or 2.

Fifth, the preferred component compound will be described. The first component is compound (1) having negative large dielectric anisotropy. Preferred compound (1) includes compound (1-1) to compound (1-21) described in item 2. Further preferred compound (1) includes compound (1-1), compound (1-2), compound (1-3), compound (1-5), compound (1-7), compound (1-8), compound (1-11), compound (1-15), compound (1-18) or compound (1-19). A proportion of the total of the compounds is preferably in the range of 50% by weight to 100% by weight based on the weight of the first component. A proportion of the total of the compounds is preferably in the range of 10% by weight to 90% by weight based on the weight of the liquid crystal composition. A proportion of the total of the compounds is further preferably in the range of 20% by weight to 85% by weight based on the weight of the liquid crystal composition.

The second component is compound (2) having significantly small dielectric anisotropy. Preferred compound (2) includes compound (2-1) to compound (2-13) described in item 5. In the compounds, at least one of the second components preferably includes compound (2-1), compound (2-3), compound (2-5), compound (2-6) or compound (2-7). At least two of the second component preferably includes a combination of compound (2-1) and compound (2-3) or a combination of compound (2-1) and compound (2-5).

The additive component is polymerizable compound (3). Preferred compound (3) includes compound (3-1) to compound (3-27) described in item 9. In the compounds, at least one of the additive components preferably includes compound (3-1), compound (3-2), compound (3-24), compound (3-25), compound (3-26) or compound (3-27). At least two of the additive components preferably includes a combination of compound (3-1) and compound (3-2), a combination of compound (3-1) and compound (3-18), a combination of compound (3-2) and compound (3-24), a combination of compound (3-2) and compound (3-25), a combination of compound (3-2) and compound (3-26), a combination of compound (3-25) and compound (3-26) or a combination of compound (3-18) and compound (3-24).

Sixth, the additive that may be added to the composition will be described. Such an additive includes the optically active compound, the antioxidant, the ultraviolet light absorber, the dye, the antifoaming agent, the polymerizable compound, the polymerization initiator and the polymerization inhibitor. The optically active compound is added to the composition for the purpose of inducing helical structure in liquid crystal molecules to give a twist angle. Examples of such a compound include compound (4-1) to compound (4-5) . A preferred proportion of the optically active compound is about 5% by weight or less. A further preferred proportion is in the range of about 0.01% by weight to about 2% by weight.

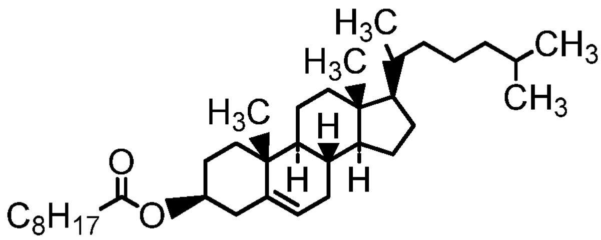

(4-1)

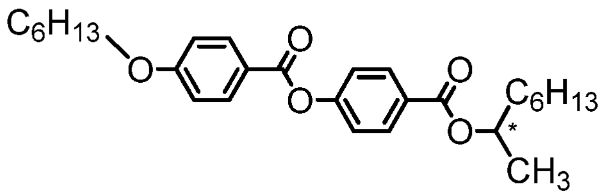

(4-2)

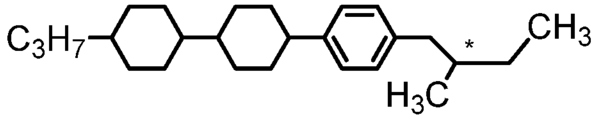

(4-3)

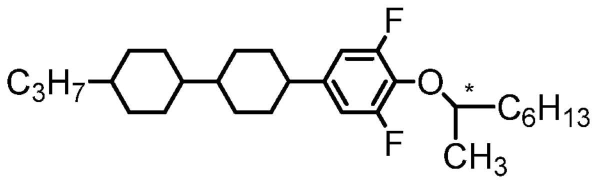

(4-4)

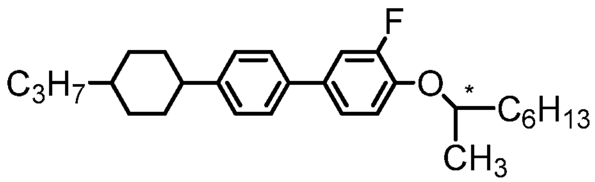

(4-5)

The antioxidant is added to the composition for maintaining a large voltage holding ratio at room temperature and also at a temperature close to the maximum temperature even after the device has been used for a long period of time. Preferred examples of the antioxidant include compound (5) in which z is an integer from 1 to 9.

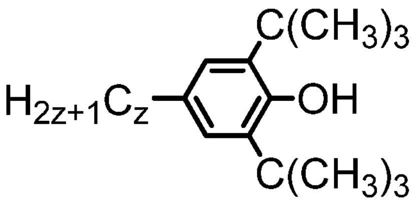

(5)

In compound (5), preferred z is 1, 3, 5, 7 or 9. Further preferred z is 7. Compound (5) in which z is 7 is effective in maintaining a large voltage holding ratio at room temperature and also at a temperature close to the maximum temperature even after the device has been used for a long period of time because such compound (5) has small volatility. A preferred proportion of the antioxidant is about 50 ppm or more for achieving an effect thereof, and about 600 ppm or less for avoiding a decrease in the maximum temperature or an increase in the minimum temperature. A further preferred proportion is in the range of about 100 ppm to about 300 ppm.

Preferred examples of the ultraviolet light absorber include a benzophenone derivative, a benzoate derivative and a triazole derivative. A light stabilizer such as an amine having steric hindrance is also preferred. A preferred proportion of the absorber or the stabilizer is about 50 ppm or more for achieving an effect thereof, and about 10,000 ppm or less for avoiding a decrease in the maximum temperature or an increase in the minimum temperature. A further preferred proportion is in the range of about 100 ppm to about 10,000 ppm.

A dichroic dye such as an azo dye or an anthraquinone dye is added to the composition to be adapted for a device having a guest host (GH) mode. A preferred proportion of the dye is in the range of about 0.01% by weight to about 10% by weight. The antifoaming agent such as dimethyl silicone oil or methylphenyl silicone oil is added to the composition for preventing foam formation. A preferred proportion of the antifoaming agent is about 1 ppm or more for achieving an effect thereof, and about 1,000 ppm or less for preventing poor display. A further preferred proportion is in the range of about 1 ppm to about 500 ppm.

The polymerizable compound is used to be adapted for a polymer sustained alignment mode device. Compound (3) is suitable for the purpose. Any other polymerizable compound that is different from compound (3) may be added to

the composition together with compound (3). Preferred examples of such a polymerizable compound include a compound such as acrylate, methacrylate, a vinyl compound, a vinyloxy compound, propenyl ether, an epoxy compound (oxirane, oxetane) and vinyl ketone. Further preferred examples include an acrylate derivative or a methacrylate derivative. A preferred proportion of compound (3) is 10% by weight or more based on the total weight of the polymerizable compound. A further preferred proportion is 50% by weight or more based thereon. A particularly preferred proportion is 80% by weight or more based thereon. A most preferred proportion is 100% by weight based thereon.

The polymerizable compound such as compound (3) is polymerized by irradiation with ultraviolet light. The polymerizable compound may be polymerized in the presence of a suitable initiator such as a photopolymerization initiator. Suitable conditions for polymerization, suitable types of the initiator and suitable amounts thereof are known to those skilled in the art and are described in literature. For example, Irgacure 651 (registered trademark; BASF), Irgacure 184 (registered trademark; BASF) or Darocur 1173 (registered trademark; BASF), each being a photoinitiator, is suitable for radical polymerization. A preferred proportion of the photopolymerization initiator is in the range of about 0.1% by weight to about 5% by weight based on the weight of the polymerizable compound. A further preferred proportion is in the range of about 1% by weight to about 3% by weight based thereon.

Upon storing the polymerizable compound such as compound (3), the polymerization inhibitor may be added thereto for preventing polymerization. The polymerizable compound is ordinarily added to the composition without removing the polymerization inhibitor. Examples of the polymerization inhibitor include hydroquinone, a hydroquinone derivative such as methylhydroquinone, 4-t-butylcatechol, 4-methoxyphenol and phenothiazine.

Seventh, the methods for synthesizing the component compounds will be described. The compounds can be prepared according to known methods. Examples of the synthetic methods are described. Compound (1-7) is prepared according to a method described in JP 2000-53602 A. Compound (2-1) is prepared according to a method described in JP S59-176221 A. A compound in which z in formula (5) is 1 is available from Sigma-Aldrich Corporation. Compound (5) in which z is 7 or the like is prepared according to a method described in US 3660505 B.

Any compounds whose synthetic methods are not described above can be prepared according to methods described in books such as Organic Syntheses (John Wiley & Sons, Inc.), Organic Reactions (John Wiley & Sons, Inc.), Comprehensive Organic Synthesis (Pergamon Press) and New Experimental Chemistry Course (Shin Jikken Kagaku Koza in Japanese) (Maruzen Co., Ltd.). The composition is prepared according to a publicly known method using the thus obtained compounds. For example, the component compounds are mixed and dissolved in each other by heating.

Eighth, the application of the composition will be described. The composition mainly has a minimum temperature of about -10°C or lower, a maximum temperature of about 70°C or higher, and optical anisotropy in the range of about 0.07 to about 0.20. A device including the composition has large voltage holding ratio. The composition is suitable for use in the AM device. The composition is particularly suitable for use in a transmissive AM device. A composition having optical anisotropy in the range of about 0.08 to about 0.25 may be prepared by controlling a proportion of the component compounds or by mixing any other liquid crystal compound. Further the composition having optical anisotropy in the range of about 0.10 to about 0.30 may be prepared by trial and error. The composition can be used as the composition having the nematic phase, or as the optically active composition by adding the optically active compound.

The composition can be used in the AM device. The composition can also be used in a PM device. The composition can also be used in the AM device or the PM device each having a mode such as the PC mode, the TN mode, the STN mode, the ECB mode, the OCB mode, the IPS mode, the FFS mode, the VA mode or the FPA mode. Use in the AM device having the TN mode, the OCB mode, the IPS mode or the FFS mode is particularly preferred. In the AM device having the IPS mode or the FFS mode, alignment of liquid crystal molecules when no voltage is applied may be parallel or perpendicular to a glass substrate. The devices may be of a reflective type, a transmissive type or a transflective type. Use in the transmissive device is preferred. The composition can also be used in an amorphous silicon-TFT device or a polycrystal silicon-TFT device. The composition can also be used in a nematic curvilinear aligned phase (NCAP) device prepared by microencapsulating the composition, or a polymer dispersed (PD) device in which a three-dimensional network-polymer is formed in the composition.

Ninth, the liquid crystal alignment film will be described. The alignment film contains polyorganosiloxane, polyamic acid, polyamic acid ester, polyimide or a mixture of polymers thereof. Polyorganosiloxane is formed by hydrolyzing an organosilicon compound such as chlorosilane and alkoxysilane. Polyorganosiloxane may be occasionally abbreviated as "polysiloxane." Polyamic acid, polyamic acid ester or polyimide is generally a product obtained by a condensation reaction of tetracarboxylic dianhydride and diamine, or an ester derivative thereof, and is called polyamic acid, polyamic acid ester or polyimide according to a degree of condensation. The compounds may be occasionally abbreviated as "polyamic acid or a derivative thereof."

Preferred polysiloxane has a carboxyl group, a hydroxyalkyl group, an amino group, an alkylamino group, a mercapto group, an epoxy group or a polymerizable unsaturated bond. A raw material of polysiloxane containing a carboxyl group includes 4-(trimethoxysilyl)pentanoic acid. A raw material of polysiloxane containing a hydroxyalkyl group includes 4-hydroxypropyltriethoxysilane. A raw material of polysiloxane containing an amino group includes 3-aminopropyltrimethoxysilane. A raw material of polysiloxane containing an alkylamino group includes N-[3-(trimethoxysilyl)propyl]-1-butanamine. A raw material of polysiloxane containing a mercapto group includes 3-mercaptopropyltrimethoxysilane. A raw material of polysiloxane containing an epoxy group includes 3-glycidoxypropyltrimetoxysilane. A raw material of polysiloxane containing a polymerizable unsaturated bond includes 3-(trimethoxysilyl)propyl methacrylate or α-methylene-γ-butyrolactone.

Further preferred polysiloxane contains at least one group selected from the group of groups represented by formula ($X^1$-1) to formula ($X^1$-7).

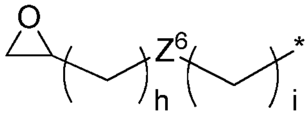

($X^1$-1)

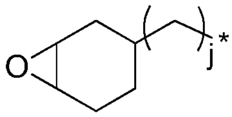

($X^1$-2)

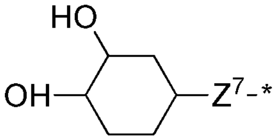

($X^1$-3)

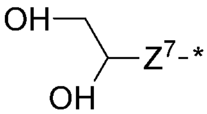

($X^1$-4)

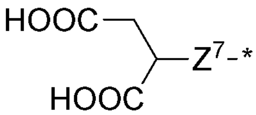

($X^1$-5)

$HOOC-Z^7-*$ ($X^1$-6)

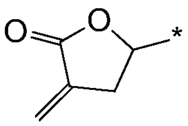

($X^1$-7)

In formula ($X^1$-1) to formula ($X^1$-7), an asterisk represents a site to which bonding is to be made; $Z^6$ is -O- or a single bond; $Z^7$ is a single bond, alkylene having 1 to 6 carbons, or a divalent group having 1 to 20 carbons and having at least one selected from the group of -O-, -S-, -COO-, -OCO- and -$NR^6$-, in which $R^6$ is hydrogen or alkyl having 1 to 6 carbons; h is 1, 2 or 3, and i is an integer from 0 to 6, and when i is 0, $Z^6$ is a single bond; and j is an integer from 0 to 6.

Polysiloxane having a group represented by formula ($X^1$-1) or formula ($X^1$-2) is formed by hydrolyzing silane having such a group including chlorosilane and alkoxysilane, alone, or by hydrolyzing a mixture of the silane and other silane. Examples of such silane include 3-glycidoxypropyltrimetoxysilane and 2-(3,4-epoxycyclohexyl)ethyltrimethoxysilane. More specifically, refer to paragraphs: 0048 to 0068, or the like in JP 2013-064968 A.

A preferred group represented by formula ($X^1$-1) or ($X^1$-2) is as described below.

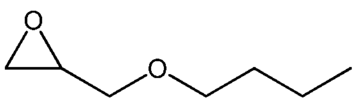

($X^1$-1-1)

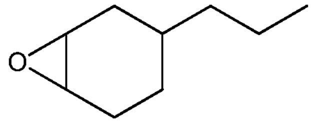

(X1-2-1)

Polysiloxane having a group represented by formula ($X^1$-3) or formula ($X^1$-4) is formed by hydrolyzing silane having epoxy corresponding to diol, alone, or by hydrolyzing a mixture of the silane and other silane and further opening a ring of the epoxy. Polysiloxane having a group represented by formula ($X^1$-5) is formed by hydrolyzing silane having a monovalent group derived from corresponding acid anhydride, alone, or by hydrolyzing a mixture of the silane and other silane and further opening a ring of an acid anhydride part. More specifically, refer to paragraphs: 0061 to 0067, or the like in JP 2013-057815 A. Refer to paragraphs: 0026 to 0060, or the like in JP 2013-057815 A, for polysiloxane having a group represented by formula ($X^1$-6). Then, α-methylene-γ-butyrolactone is polymerizable. Polysiloxane having a group represented by formula ($X^1$-7) is formed by hydrolyzing silane having a monovalent group derived from α-methylene-γ-butyrolactone, alone, or by hydrolyzing a mixture of the silane and other silane and opening a ring of an acid anhydride part.

Preferred polyamic acid or a derivative thereof has an alicyclic structure. Examples of the alicyclic structure include bicyclo[2.2.2]octene or cyclobutane. In order to prepare polyamic acid having the alicyclic structure, or a derivative thereof, bicyclo[2.2.2]oct-7-ene-2,3,5,6-tetracarboxylic dianhydride or 1,2,3,4-cyclobutanetetracarboxylic dianhydride is used as a starting material. Amine having the alicyclic structure such as 1,4-diaminocyclohexane may be used as the starting material. More specifically, refer to paragraphs: 0156 to 0175, or the like in JP 2013-080193 A.

The liquid crystal alignment film contains at least one group selected from the group of polysiloxane, polyamic acid and polyamic acid ester. In a alignment film, a main component is polyamic acid or a derivative thereof, and an accessory component is polysiloxane. When an aligning agent is prepared, a proportion of polyamic acid or a derivative thereof is 50% by weight or more, and a proportion of polysiloxane is smaller than 50% by weight. More specifically, a ratio thereof is (100 to 50) to (0 to < 50). A preferred ratio is (97 to 70) to (3 to 30). A further preferred ratio is (95 to 80) to (5 to 20). A preferred alignment film contains polysiloxane containing at least one group selected from the group of groups represented by formula ($X^1$-1) to formula ($X^1$-7). A further preferred alignment film contains polysiloxane containing a group represented by formula ($X^1$-7).

## Examples

The invention will be described in greater detail by way of Examples. However, the invention is not limited by the Examples. The invention includes a mixture of composition M1 and composition M2. The invention also includes a mixture in which at least two compositions in composition examples are mixed. The invention also includes a liquid crystal aligning agent containing polysiloxane as prepared in Synthesis Examples 1 to 3, and a liquid crystal aligning agent containing polysiloxane and polyamic acid or a derivative thereof as described in Synthesis Examples 25 to 45. A same rule applies also to Examples of a device, or the like. The thus prepared compound was identified by methods such as an NMR analysis. Characteristics of the compound, the composition and the device were measured by methods described below.

NMR analysis: For measurement, DRX-500 made by Bruker BioSpin Corporation was used. In $^1$H-NMR measurement, a sample was dissolved in a deuterated solvent such as $CDCl_3$, and measurement was carried out under conditions of room temperature, 500 MHZ and 16 times of accumulation. Tetramethylsilane was used as an internal standard. In $^{19}$F-NMR measurement, $CFCl_3$ was used as an internal standard, and measurement was carried out under conditions of 24 times of accumulation. In explaining nuclear magnetic resonance spectra obtained, s, d, t, q, quin, sex and m stand for a singlet, a doublet, a triplet, a quartet, a quintet, a sextet and a multiplet, and br being broad, respectively.

Gas chromatographic analysis: For measurement, GC-14B Gas Chromatograph made by Shimadzu Corporation was used. A carrier gas was helium (2 mL per minute). A sample vaporizing chamber and a detector (FID) were set to 280°C and 300°C, respectively. A capillary column DB-1 (length 30 m, bore 0.32 mm, film thickness 0.25 μm; dimethylpolysiloxane as a stationary liquid phase; non-polar) made by Agilent Technologies, Inc. was used for separation of component compounds. After the column was kept at 200°C for 2 minutes, the column was heated to 280°C at a rate of 5°C per minute. A sample was prepared in an acetone solution (0.1% by weight), and then 1 microliter of the solution was injected into the sample vaporizing chamber. A recorder was C-R5A Chromatopac made by Shimadzu Corporation or the equivalent thereof. The resulting gas chromatogram showed a retention time of a peak and a peak area corresponding to each of the component compounds.

As a solvent for diluting the sample, chloroform, hexane or the like may also be used. The following capillary columns may also be used for separating component compounds: HP-1 (length 30 m, bore 0.32 mm, film thickness 0.25 μm) made by Agilent Technologies, Inc., Rtx-1 (length 30 m, bore 0.32 mm, film thickness 0.25 μm) made by Restek Corporation and BP-1 (length 30 m, bore 0.32 mm, film thickness 0.25 μm) made by SGE International Pty. Ltd. A

capillary column CBP1-M50-025 (length 50 m, bore 0.25 mm, film thickness 0.25 μm) made by Shimadzu Corporation may also be used for the purpose of preventing an overlap of peaks of the compounds.

A proportion of liquid crystal compounds contained in the composition may be calculated by the method as described below. The liquid crystal compounds (mixture) are detected by gas chromatograph (FID). An area ratio of each peak in the gas chromatogram corresponds to the ratio (weight ratio) of the liquid crystal compounds. When the capillary columns described above were used, a correction coefficient of each of the liquid crystal compounds may be regarded as 1 (one). Accordingly, the proportion (% by weight) of the liquid crystal compounds can be calculated from the area ratio of each peak.

Sample for measurement: When characteristics of the composition or the device were measured, the composition was used as a sample as was. Upon measuring characteristics of a compound, a sample for measurement was prepared by mixing the compound (15% by weight) with a base liquid crystal (85% by weight). Values of characteristics of the compound were calculated, according to an extrapolation method, using values obtained by measurement. (Extrapolated value) = {(measured value of a sample) - 0.85 × (measured value of a base liquid crystal) } / 0.15. When a smectic phase (or crystals) precipitates at the ratio thereof at 25°C, a ratio of the compound to the base liquid crystal was changed step by step in the order of (10% by weight : 90% by weight), (5% by weight : 95% by weight) and (1% by weight : 99% by weight). Values of maximum temperature, optical anisotropy, viscosity and dielectric anisotropy with regard to the compound were determined according to the extrapolation method.

A base liquid crystal described below was used. A proportion of the component compound was expressed in terms of weight percent (% by weight).

17.2%

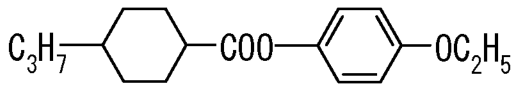

27.6%

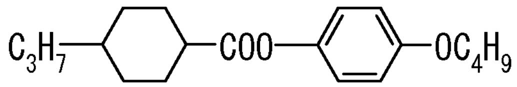

20.7%

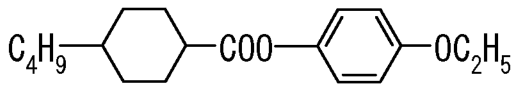

20.7%

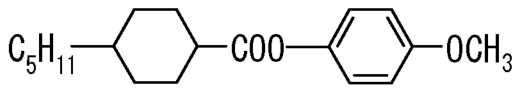

13.8%

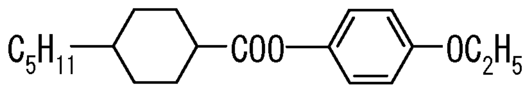

Measuring method: Characteristics were measured according to methods described below. Most of the measuring methods are applied as described in the Standard of Japan Electronics and Information Technology Industries Association (hereinafter abbreviated as JEITA) (JEITA ED-2521B) discussed and established by JEITA, or modified thereon. No thin film transistor (TFT) was attached to a TN device used for measurement.

(1) Maximum temperature of nematic phase (NI; °C) : A sample was placed on a hot plate in a melting point apparatus equipped with a polarizing microscope, and heated at a rate of 1°C per minute. Temperature when part of the sample began to change from a nematic phase to an isotropic liquid was measured. A maximum temperature of the nematic phase may be occasionally abbreviated as "maximum temperature."

(2) Minimum temperature of nematic phase ($T_C$; °C): Samples each having a nematic phase were put in glass vials and kept in freezers at temperatures of 0°C, -10°C, -20°C, -30°C and -40°C for 10 days, and then liquid crystal phases were observed. For example, when the sample was maintained in the nematic phase at -20°C and changed to crystals or a smectic phase at -30°C, $T_C$ of the sample was expressed as $T_C$ < -20°C. A minimum temperature of the nematic phase may be occasionally abbreviated as "minimum temperature."

(3) Viscosity (bulk viscosity; η; measured at 20°C; mPa·s) : For measurement, a cone-plate (E type) rotational viscometer made by Tokyo Keiki Inc. was used.

(4) Viscosity (rotational viscosity; γ1; measured at 25°C; mPa·s) : Measurement was carried out according to a method described in M. Imai et al., Molecular Crystals and Liquid Crystals, Vol. 259, p. 37 (1995). A sample was put in a VA device in which a distance (cell gap) between two glass substrates was 20 micrometers. Voltage was applied stepwise to the device in the range of 39 V to 50 V at an increment of 1 V. After a period of 0.2 second with

no voltage application, voltage was repeatedly applied under conditions of only one rectangular wave (rectangular pulse; 0.2 second) and no voltage application (2 seconds). A peak current and a peak time of transient current generated by the applied voltage were measured. A value of rotational viscosity was obtained from the measured values and calculation equation (8) on page 40 of the paper presented by M. Imai et al. Dielectric anisotropy required for the calculation was measured according to section (6).

(5) Optical anisotropy (refractive index anisotropy; $\Delta n$; measured at 25°C): Measurement was carried out by an Abbe refractometer with a polarizing plate mounted on an ocular, using light at a wavelength of 589 nanometers. A surface of a main prism was rubbed in one direction, and then a sample was added dropwise onto the main prism. A refractive index ($n\|$) was measured when a direction of polarized light was parallel to a direction of rubbing. A refractive index ($n\perp$) was measured when the direction of polarized light was perpendicular to the direction of rubbing. A value of optical anisotropy was calculated from an equation:

$$\Delta n = n\| - n\perp.$$

(6) Dielectric anisotropy ($\Delta\varepsilon$; measured at 25°C): A value of dielectric anisotropy was calculated from an equation: $\Delta\varepsilon = \varepsilon\| - \varepsilon\perp$. A dielectric constant ($\varepsilon\|$ and $\varepsilon\perp$) was measured as described below.

(1) Measurement of dielectric constant ($\varepsilon\|$) : An ethanol (20 mL) solution of octadecyltriethoxysilane (0.16 mL) was applied to a well-cleaned glass substrate. After rotating the glass substrate with a spinner, the glass substrate was heated at 150°C for 1 hour. A sample was put in a VA device in which a distance (cell gap) between two glass substrates was 4 micrometers, and the device was sealed with an ultraviolet-curable adhesive. Sine waves (0.5 V, 1 kHz) were applied to the device, and after 2 seconds, a dielectric constant ($\varepsilon\|$) of liquid crystal molecules in a major axis direction was measured.

(2) Measurement of dielectric constant ($\varepsilon\perp$): A polyimide solution was applied to a well-cleaned glass substrate. After calcining the glass substrate, rubbing treatment was applied to the alignment film obtained. A sample was put in a TN device in which a distance (cell gap) between two glass substrates was 9 micrometers and a twist angle was 80 degrees. Sine waves (0.5 V, 1 kHz) were applied to the device, and after 2 seconds, a dielectric constant ($\varepsilon\perp$) of liquid crystal molecules in a minor axis direction was measured.

(7) Threshold voltage (Vth; measured at 25°C; V): For measurement, an LCD-5100 luminance meter made by Otsuka Electronics Co., Ltd. was used. A light source was a halogen lamp. A sample was put in a normally black mode VA device in which a distance (cell gap) between two glass substrates was 4 micrometers and a rubbing direction was anti-parallel, and the device was sealed with an ultraviolet-curable adhesive. A voltage (60 Hz, rectangular waves) to be applied to the device was stepwise increased from 0 V to 20 V at an increment of 0.02 V. On the occasion, the device was irradiated with light from a direction perpendicular to the device, and an amount of light transmitted through the device was measured. A voltage-transmittance curve was prepared, in which the maximum amount of light corresponds to 100% transmittance and the minimum amount of light corresponds to 0% transmittance. A threshold voltage is expressed in terms of voltage at 10% transmittance.

(8) Voltage holding ratio (VHR-1; measured at 25°C; %): A TN device used for measurement had a polyimide alignment film, and a distance (cell gap) between two glass substrates was 5 micrometers. A sample was put in the device, and then the device was sealed with an ultraviolet-curable adhesive. A pulse voltage (60 microseconds at 5 V) was applied to the TN device and the device was charged. A decaying voltage was measured for 16.7 milliseconds with a high-speed voltmeter, and area A between a voltage curve and a horizontal axis in a unit cycle was determined. Area B is an area without decay. A voltage holding ratio is expressed in terms of a percentage of area A to area B.

(9) Voltage holding ratio (VHR-2; measured at 80°C; %): A voltage holding ratio was measured according to procedures identical with the procedures described above except that measurement was carried out at 80°C in place of 25°C. The thus obtained value was expressed in terms of VHR-2.

(10) Voltage holding ratio (VHR-3; measured at 25°C; %): Stability to ultraviolet light was evaluated by measuring a voltage holding ratio after a device was irradiated with ultraviolet light. A TN device used for measurement had a polyimide alignment film, and a cell gap was 5 micrometers. A sample was injected into the device, and then the device was irradiated with light for 20 minutes. A light source was an ultra high-pressure mercury lamp USH-500D (made by Ushio, Inc.), and a distance between the device and the light source was 20 centimeters. In measurement of VHR-3, a decaying voltage was measured for 16.7 milliseconds. A composition having large VHR-3 has large stability to ultraviolet light. A value of VHR-3 is preferably 90% or more, and further preferably 95% or more.

(11) Voltage holding ratio (VHR-4; measured at 25°C; %): Stability to heat was evaluated by measuring a voltage

holding ratio after a TN device into which a sample was injected was heated in a constant-temperature bath at 80°C for 500 hours. In measurement of VHR-4, a decaying voltage was measured for 16.7 milliseconds. A composition having large VHR-4 has large stability to heat.
(12) Response time (τ; measured at 25°C; ms) : For measurement, an LCD-5100 luminance meter made by Otsuka Electronics Co., Ltd. was used. A light source was a halogen lamp. A low-pass filter was set to 5 kHz.

(1) A composition containing no polymerizable compound: A sample was put in a normally black mode VA device in which a distance (cell gap) between two glass substrates was 4 micrometers and a rubbing direction was anti-parallel. The device was sealed with an ultraviolet-curable adhesive. A voltage (rectangular waves; 60 Hz, 10 V, 0.5 second) was applied to the device. On the occasion, the device was irradiated with light from a direction perpendicular to the device, and an amount of light transmitted through the device was measured. The maximum amount of light corresponds to 100% transmittance, and the minimum amount of light corresponds to 0% transmittance. A response time was expressed in terms of time required for a change from 90% transmittance to 10% transmittance (fall time; millisecond).
(2) A composition containing a polymerizable compound: A sample was put in the device made in Example 1 described later, and the device was sealed with an ultraviolet-curable adhesive. The device was irradiated with ultraviolet light of 25 $mW/cm^2$ for 400 seconds while a voltage of 15 V was applied thereto, and a PAS device was made. An EXECURE 4000-D type Mercury-Xenon lamp made by HOYA CANDEO OPTRONICS CORPORATION was used for irradiation of ultraviolet light. Rectangular waves (60 Hz, 10 V, 0.5 second) were applied to the device. On the occasion, the device was irradiated with light from a direction perpendicular to the device, and an amount of light transmitted through the device was measured. The maximum amount of light corresponds to 100% transmittance, and the minimum amount of light corresponds to 0% transmittance. A response time was expressed in terms of time required for a change from 0% transmittance to 90% transmittance (rise time; millisecond).

(13) Elastic constant (K11: splay elastic constant, K33: bend elastic constant; measured at 25°C; pN) : For measurement, Elastic Constant Measurement System Model EC-1 made by TOYO Corporation was used. A sample was put in a vertical alignment device in which a distance (cell gap) between two glass substrates was 20 micrometers. An electric charge of 20 V to 0 V was applied to the device, and electrostatic capacity and applied voltage were measured. The measured values of electrostatic capacity (C) and applied voltage (V) were fitted to equation (2.98) and equation (2.101) on page 75 of "Liquid Crystal Device Handbook (Ekisho Debaisu Handobukku in Japanese; Nikkan Kogyo Shimbun, Ltd.)," and values of the elastic constant were obtained from equation (2.100).
(14) Specific resistance (ρ; measured at 25°C; Ωcm): Into a vessel equipped with electrodes, 1.0 milliliter of sample was injected. A direct current voltage (10 V) was applied to the vessel, and a direct current after 10 seconds was measured. Specific resistance was calculated from the following equation:

(specific resistance) = {(voltage) × (electric capacity of a vessel)} / {(direct current) × (dielectric constant of vacuum)}.

(15) Weight average molecular weight (Mw): Weight average molecular weight of polyamic acid was measured according to a GPC method using 2695 Separation Module and 2414 Differential Refractometer (made by Waters Corporation), and determined as a polystyrene equivalent. A sample was prepared to be about 2% by weight by diluting polyamic acid with a phosphoric acid and DMF mixed solution (phosphoric acid : DMF = 0.6 : 100 in a weight ratio).
Measurement was carried out by using HSPgel RT MB-M (made by Waters Corporation) as a column, and using the mixed solution described above as a developer, under conditions of a column temperature of 50°C and a flow rate of 0.40 mL/min. TSK standard polystyrene made by Tosoh Corporation was used as standard polystyrene.
(16) Pretilt angle (°): For measurement of a pretilt angle, a spectroscopic ellipsometer M-2000U (made by J. A. Woollam Co. Inc.) was used.
(17) AC ghost image (brightness change rate: %): Brightness-voltage characteristics (B-V characteristics) of a liquid crystal display device as described later were measured, and the values obtained were taken as brightness-voltage characteristics before stress application: B (before). Next, an alternating current (4.5 V, 60 Hz) was applied to the device for 20 minutes, and then short-circuited for 1 second, and brightness-voltage characteristics (B-V characteristics) were measured again. The values obtained were taken as brightness-voltage characteristics after stress application: B (after). A brightness change rate ΔB (%) was calculated from the above values using the following formula:

$$\Delta B(\%) = \{B(\text{after}) - B(\text{before})\} / B(\text{before}) \quad (\text{Formula } 1).$$

The measurement was carried out with reference to WO 2000-43833 A. As the value of ΔB(%) at a voltage of 0.75 V is smaller, generation of the AC ghost image is reasonably smaller.

(18) Alignment stability (change of a liquid crystal alignment angle; °) : A change in a liquid crystal alignment axis of the liquid crystal display device on an electrode side as described later was evaluated. A liquid crystal alignment angle ϕ (before) on the electrode side before stress application was measured, and then rectangular waves of 4.5 V and 60 Hz were applied to the device for 20 minutes, and then short-circuited for 1 second, and a liquid crystal alignment angle ϕ (after) on the electrode side was measured again after 1 second and 5 minutes. A change Δϕ (°) in the liquid crystal alignment angle after 1 second and after 5 minutes was calculated from the above values using the following formula:

$$\Delta\phi\ (^\circ) = \phi\ (\text{after}) - \phi\ (\text{before}) \quad (\text{Formula } 2).$$

The measurements were carried out with reference to J. Hilfiker, B. Johs, C. Herzinger, J. F. Elman, E. Montbach, D. Bryant, and P. J. Bos, Thin Solid Films, 455-456, (2004), 596-600. As Δϕ is smaller, a change rate of the liquid crystal alignment axis is reasonably smaller, and the stability of the liquid crystal alignment axis is reasonably better.

(19) Volume resistivity (ρ; measured at 25°C; Ω·cm): A polyimide film was formed on a glass substrate wholly with ITO, and aluminum was vapor-deposited on an alignment film surface of the substrate, and the resulting material was taken as an upper electrode (electrode area: 0.23 $cm^2$). A voltage of 3 V was applied between an ITO electrode and the upper electrode, and volume resistivity was calculated from a current value after 300 seconds.

(20) Dielectric constant (ε; measured at 25°C) : A polyimide film was formed on a glass substrate wholly with ITO, and aluminum was vapor-deposited on an alignment film surface of the substrate, and the resulting material was taken as an upper electrode (electrode area: 0.23 $cm^2$). An alternating voltage having a voltage of 1 V and a frequency of 1 kHz was applied between the ITO electrode and the upper electrode, and electric capacitance (C) of the film was measured. From the value, a dielectric constant (ε) of the film was calculated using the following formula:

$$\varepsilon = (C \times d) / (\varepsilon_0 \times S) \quad (\text{Formula } 3)$$

in which d is a film thickness of a polyimide film, so is a dielectric constant of vacuum, and S is an electrode area.

(21) Abbreviations: Abbreviations of a solvent and alkoxysilane are as described below.

BCS: 2-butoxyethanol

HG: 2-methyl-2,4-pentanediol (synonym: hexylene glycol)

TEOS: tetraethoxysilane

C18: octadecyltriethoxysilane

ACPS: 3-acryloxyprophyltrimethoxysilane

UPS: 3-ureidopropyltriethoxysilane

MPMS: 3-methacryloxypropyltrimethoxysilane

Structures of compound (CA1-1) to compound (CA1-12) and compound (CA3-1) to compound (CA3-3) are as described below.

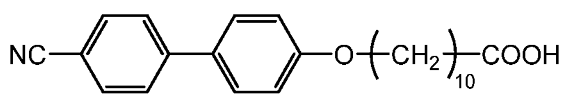

(CA1-1)

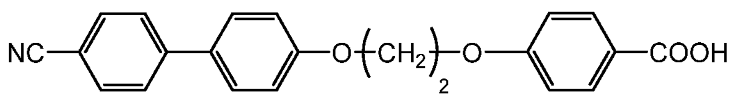

(CA1-2)

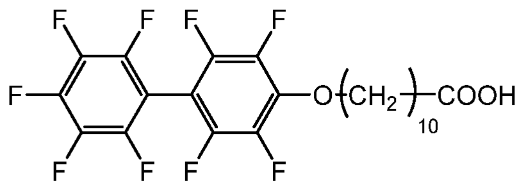
(CA1-3)

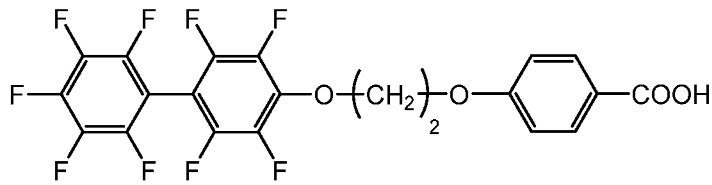
(CA1-4)

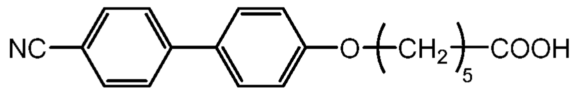
(CA1-5)

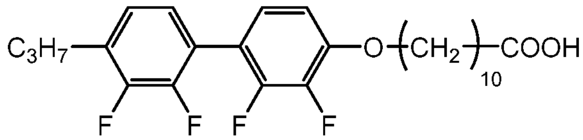
(CA1-6)

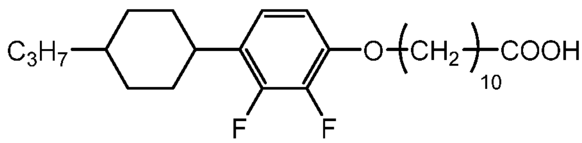
(CA1-7)

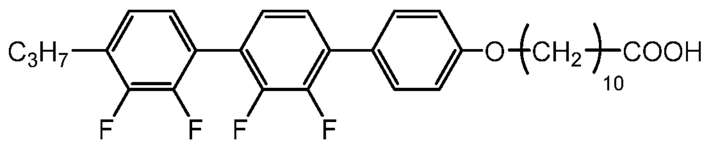
(CA1-8)

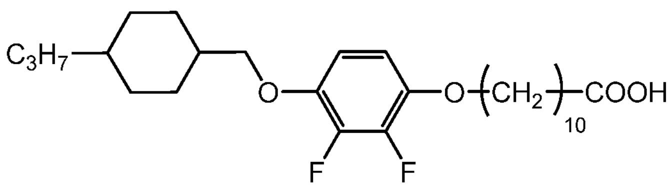
(CA1-9)

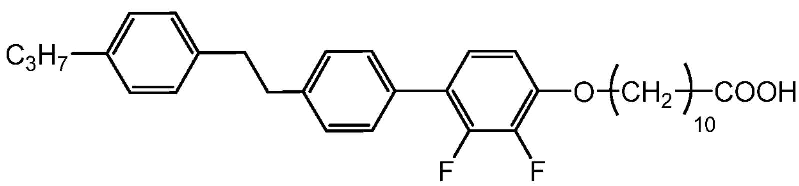
(CA1-10)

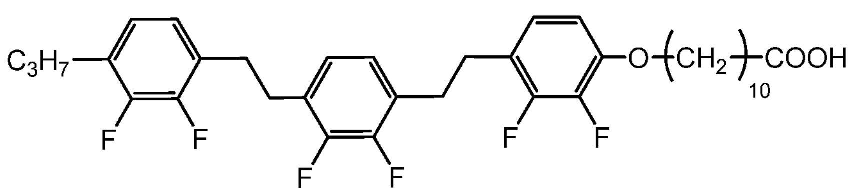
(CA1-11)

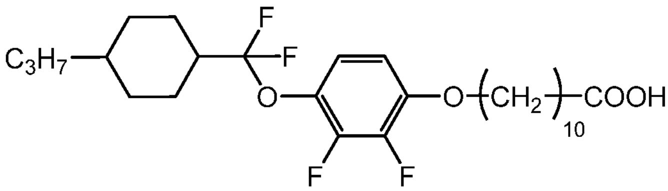

(CA1-12)

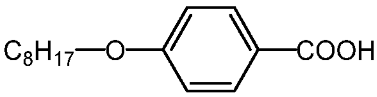

(CA3-1)

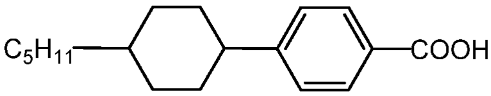

(CA3-2)

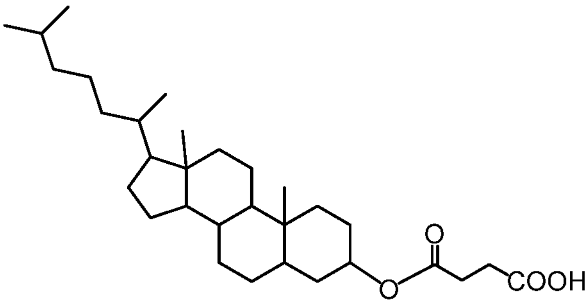

(CA3-3)

The compounds contained in the composition were represented using symbols according to definitions in Table 3 described below. In Table 3, a configuration of 1,4-cyclohexylene is trans. A parenthesized number next to a symbolized compound represents a chemical formula to which the compound belongs. A symbol (-) means any other liquid crystal compound. A proportion (percentage) of the liquid crystal compound is expressed in terms of weight percent (% by weight) based on the weight of the liquid crystal composition containing no additive. Values of the characteristics of the composition are summarized in a last part. The physical properties were measured according to the methods described above, and measured values were directly described (without extrapolation).

Table 3. Method for description of compounds using symbols

| $R-(A_1)-Z_1-\cdots\cdots-Z_n-(A_n)-R'$ | | | |
|---|---|---|---|
| 1) Left-terminal group R- | Symbol | 4) Ring structure $-A_n-$ | Symbol |
| $FC_nH_{2n}-$ | Fn- | | |
| $C_nH_{2n+1}-$ | n- | 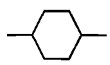 | H |
| $C_nH_{2n+1}O-$ | nO- | | |
| $C_mH_{2m+1}OC_nH_{2n}-$ | mOn- | 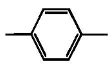 | B |
| $CH_2=CH-$ | V- | | |
| $C_nH_{2n+1}-CH=CH-$ | nV- | | |
| $CH_2=CH-C_nH_{2n}-$ | Vn- | 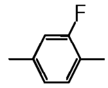 | B(F) |
| $C_mH_{2m+1}-CH=CH-C_nH_{2n}-$ | mVn- | | |
| $CF_2=CH-$ | VFF- | | |
| $CF_2=CH-C_nH_{2n}-$ | VFFn- | 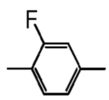 | B(2F) |
| $CH_2=CH-COO-$ | AC- | | |
| $CH_2=C(CH_3)-COO-$ | MAC- | | |
| 2) Right-terminal group -R' | Symbol | 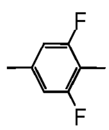 | B(F,F) |

(continued)

| R-(A$_1$)-Z$_1$-······-Z$_n$-(A$_n$) -R' | | | |
|---|---|---|---|
| $-C_nH_{2n+1}$<br>$-OC_nH_{2n+1}$<br>$-CH=CH_2$<br>$-CH=CH-C_nH_{2n+1}$ | -n<br>-On<br>-V<br>-Vn | 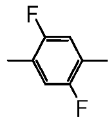 | B(2F,5F) |
| $-C_nH_{2n}-CH=CH_2$<br>$-C_mH_{2m}-CH=CH-C_nH_{2n+1}$<br>$-CH=CF_2$ | -nV<br>-mVn<br>-VFF | 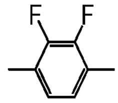 | B(2F,3F) |
| $-OCO-CH=CH_2$<br>$-OCO-C(CH_3)=CH_2$ | -AC<br>-MAC | 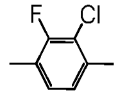 | B(2F,3CL) |
| -F<br>-CN | -F<br>-C | | |
| 3) Bonding group $-Z_n-$ | Symbol | 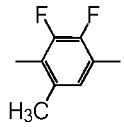 | B(2F,3F,6Me) |
| $-C_nH_{2n}-$ | n | | |
| -COO-<br>-CH=CH- | E<br>V | 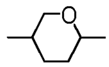 | dh |
| -C≡C-<br>-CH=CHO- | T<br>VO | 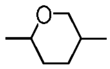 | Dh |
| -OCH=CH-<br>$-CH_2O-$<br>$-OCH_2-$ | OV<br>1O<br>O1 | 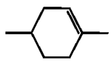 | ch |
| | | 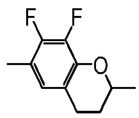 | Cro(7F,8F) |
| 5) Examples of description | | | |
| Example 1. V-HBB-2 | | Example 2. 3-HHB(2F,3F)-O2 | |
| 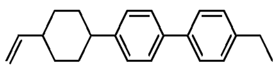 | | 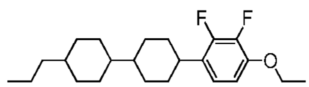 | |

**Composition M1**

| | | |
|---|---|---|
| 3-HB(2F, 3F)-O2 | (1-1) | 10% |
| 5-HB(2F, 3F)-O2 | (1-1) | 10% |
| 3-H2B(2F, 3F)-O2 | (1-3) | 8 % |
| 5-H2B(2F, 3F)-O2 | (1-3) | 8 % |
| 3-HDhB(2F, 3F)-O2 | (1-13) | 5% |
| 3-HBB(2F, 3F)-O2 | (1-15) | 8 % |
| 4-HBB(2F, 3F)-O2 | (1-15) | 5% |
| 5-HBB(2F, 3F)-O2 | (1-15) | 5% |
| V-HBB(2F, 3F)-O2 | (1-15) | 5% |

(continued)

| | | |
|---|---|---|
| V2-HBB(2F, 3F)-O2 | (1-15) | 5% |
| 3-HH-4 | (2-1) | 14% |
| V-HHB-1 | (2-5) | 11% |
| 3-HBB-2 | (2-6) | 6% |

NI = 89.4°C; Tc < -30°C; Δn = 0.109; Δε = -3.8; Vth = 2.24 V; η = 24.6 mPa·s; VHR-1 = 99.2%; VHR-2 = 98.1%; VHR-3 = 97.9%.

Compound (3-2) was added to the composition in a proportion of 0.4% by weight.

MAC-BB-MAC (3-2)

**Composition M2**

| | | |
|---|---|---|
| 3-HB(2F,3F)-O2 | (1-1) | 10% |
| V-HB(2F,3F)-O2 | (1-1) | 7% |
| 3-BB(2F,3F)-O2 | (1-5) | 7% |
| V2-BB(2F, 3F)-O1 | (1-5) | 7% |
| 3-B(2F, 3F) B (2F, 3F)-O2 | (1-6) | 3% |
| 2-HHB(2F, 3F)-O2 | (1-7) | 5% |
| 3-HHB(2F, 3F)-O2 | (1-7) | 10% |
| 3-HBB(2F, 3F)-O2 | (1-15) | 10% |
| V-HBB(2F, 3F)-O2 | (1-15) | 8% |
| 2-HH-3 | (2-1) | 14% |
| 3-HB-O1 | (2-2) | 5% |
| 3-HHB-1 | (2-5) | 3% |
| 3-HHB-O1 | (2-5) | 3% |
| 3-HHB-3 | (2-5) | 5% |
| 2-BB(F)B-3 | (2-7) | 3% |

NI = 72.5°C; Tc < -20°C; Δn = 0.112; Δε = -3.9; Vth = 2.14 V; η = 22.8 mPa·s.

Compound (3-1) was added to the composition in a proportion of 0.3% by weight.

MAC-B(2F)B-MAC (3-1)

**Composition M3**

| | | |
|---|---|---|
| 3-HB(2F,3F)-O4 | (1-1) | 6% |
| 3-H2B(2F,3F)-O2 | (1-3) | 8 % |
| 3-H1OB(2F,3F)-O2 | (1-4) | 5% |
| 3-BB(2F,3F)-O2 | (1-5) | 10% |
| 3-HHB(2F,3F)-O2 | (1-7) | 7% |
| V-HHB(2F,3F)-O2 | (1-7) | 7 % |
| V-HHB(2F,3F)-O4 | (1-7) | 7 % |

(continued)

| | | |
|---|---|---|
| 3-HBB(2F,3F)-O2 | (1-15) | 6 % |
| V-HBB (2F,3F)-O2 | (1-15) | 6 % |
| 1V2-HBB(2F,3F)-O2 | (1-15) | 5% |
| 3-HH-V | (2-1) | 11% |
| 1-BB-3 | (2-3) | 6% |
| 3-HHB-1 | (2-5) | 4% |
| 3-HHB-O1 | (2-5) | 4% |
| 3-HBB-2 | (2-6) | 5% |
| 3-B(F)BB-2 | (2-8) | 3% |

NI = 87.7°C; Tc < -30°C; $\Delta n$ = 0.129; $\Delta\varepsilon$ = -4.4; Vth = 2.17 V; $\eta$ = 26.2 mPa·s.

Compound (3-3) was added to the composition in a proportion of 0.3% by weight.

MAC-B(F)B-MAC (3-3)

**Composition M4**

| | | |
|---|---|---|
| 3-HB(2F,3F)-O2 | (1-1) | 7% |
| 1V2-HB(2F,3F)-O2 | (1-1) | 7% |
| 3-BB(2F,3F)-O2 | (1-5) | 8 % |
| 3-HHB(2F,3F)-O2 | (1-7) | 5% |
| 5-HHB(2F,3F)-O2 | (1-7) | 4% |
| 3-HH1OB(2F,3F)-O2 | (1-10) | 5% |
| 2-BB(2F,3F)B-3 | (1-11) | 4% |
| 2-HBB(2F,3F)-O2 | (1-15) | 3% |
| 3-HBB(2F,3F)-O2 | (1-15) | 8 % |
| 4-HBB(2F,3F)-O2 | (1-15) | 5% |
| V-HBB(2F,3F)-O2 | (1-15) | 8% |
| 3-HH-V | (2-1) | 27% |
| 3-HH-V1 | (2-1) | 6 % |
| V-HHB-1 | (2-5) | 3 % |

NI = 78.2°C; Tc < -30°C; $\Delta n$ = 0.109; $\Delta\varepsilon$ = -3.3; Vth = 2.08 V; $\eta$ = 16.3 mPa·s.

Compound (3-1) and compound (3-2) were added to the composition in a proportion of 0.3% by weight and 0.03% by weight, respectively.

MAC-B(2F)B-MAC (3-1)

AC-VO-BB-OV-AC (3-2)

**Composition M5**

| | | |
|---|---|---|
| 3-HB(2F,3F)-O4 | (1-1) | 15% |
| 3-chB(2F,3F)-O2 | (1-2) | 7% |

(continued)

| | | |
|---|---|---|
| 2-HchB(2F,3F)-O2 | (1-8) | 8% |
| 3-HBB(2F,3F)-O2 | (1-15) | 8 % |
| 5-HBB(2F,3F)-O2 | (1-15) | 7% |
| V-HBB(2F,3F)-O2 | (1-15) | 5% |
| 3-dhBB(2F,3F)-O2 | (1-16) | 5% |
| 5-HH-V | (2-1) | 18% |
| 7-HB-1 | (2-2) | 5% |
| V-HHB-1 | (2-5) | 7% |
| V2-HHB-1 | (2-5) | 7% |
| 3-HBB(F)B-3 | (2-13) | 8 % |

NI = 98.5°C; Tc < -30°C; Δn = 0.112; Δε = -3.2; Vth = 2.47 V; η = 23.5 mPa·s.

Compound (3-24) was added to the composition in a proportion of 0.3% by weight.

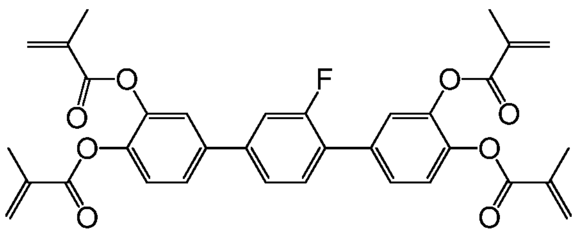

(3-24)

**Composition M6**

| | | |
|---|---|---|
| 3-H2B(2F,3F)-O2 | (1-3) | 18% |
| 5-H2B(2F,3F)-O2 | (1-3) | 17% |
| 3-DhHB(2F,3F)-O2 | (1-12) | 5 % |
| 3-HHB(2F,3CL)-O2 | (1-18) | 5% |
| 3-HBB(2F,3CL)-O2 | (1-19) | 8% |
| 5-HBB(2F,3CL)-O2 | (1-19) | 7% |
| 3-HH-V | (2-1) | 11% |
| 3-HH-VFF | (2-1) | 7% |
| F3-HH-V | (2-1) | 10% |
| 3-HHEH-3 | (2-4) | 4% |
| 3-HB(F)HH-2 | (2-9) | 3% |
| 3-HHEBH-3 | (2-10) | 5% |

NI = 78.2°C; Tc < -30°C; Δn = 0.084; Δε = -2.6; Vth = 2.45 V; η = 22.5 mPa·s.

Compound (3-25) was added to the composition in a proportion of 0.3% by weight.

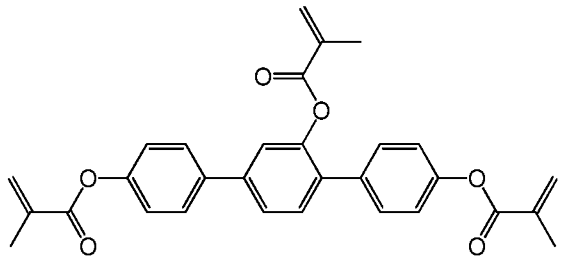

(3-25)

**Composition M7**

| | | |
|---|---|---|
| 3-H2B(2F,3F)-O2 | (1-3) | 7 % |
| V-HHB(2F,3F)-O2 | (1-7) | 8% |
| 2-HchB(2F,3F)-O2 | (1-8) | 8% |
| 3-HH1OB(2F,3F)-O2 | (1-10) | 5% |
| 2-BB(2F,3F)B-3 | (1-11) | 7% |
| 2-BB(2F,3F)B-4 | (1-11) | 7% |
| 3-HDhB(2F,3F)-O2 | (1-13) | 3% |
| 3-DhH1OB(2F,3F)-O2 | (1-14) | 4% |
| 4-HH-V | (2-1) | 15% |
| 3-HH-V1 | (2-1) | 6% |
| 1-HH-2V1 | (2-1) | 5% |
| 3-HH-2V1 | (2-1) | 5% |
| V2-BB-1 | (2-3) | 5% |
| 1V2-BB-1 | (2-3) | 5% |
| 3-HHB-1 | (2-5) | 6% |
| 3-HB(F)BH-3 | (2-12) | 4% |

NI = 87.5°C; Tc < -30°C; $\Delta n$ = 0.115; $\Delta\varepsilon$ = -2.0; Vth = 2.82 V; $\eta$ = 17.2 mPa·s.

Compound (3-25) and compound (3-2) were added to the composition in a proportion of 0.3% by weight and 0.1% by weight, respectively.

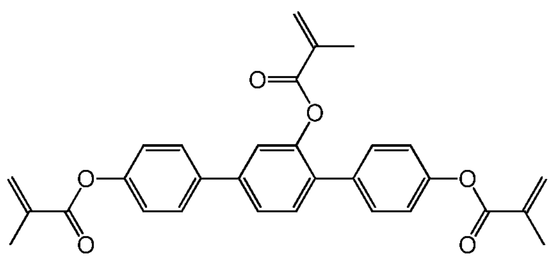

(3-25)

AC-VO-BB-OV-AC (3-2)

**Composition M8**

| | | |
|---|---|---|
| V-HB(2F,3F)-O2 | (1-1) | 8% |
| 3-H2B(2F,3F)-O2 | (1-3) | 10% |

(continued)

| | | |
|---|---|---|
| 3-BB(2F,3F)-O2 | (1-5) | 10% |
| 2O-BB(2F,3F)-O2 | (1-5) | 3% |
| 2-HHB(2F,3F)-O2 | (1-7) | 4 % |
| 3-HHB(2F,3F)-O2 | (1-7) | 7 % |
| V-HHB(2F,3F)-O2 | (1-7) | 5 % |
| 2-BB(2F,3F)B-3 | (1-11) | 6 % |
| 2-BB(2F,3F)B-4 | (1-11) | 6 % |
| 3-HDhB(2F,3F)-O2 | (1-13) | 6% |
| 2-HBB(2F,3F)-O2 | (1-15) | 5% |
| 3-HBB(2F,3F)-O2 | (1-15) | 6% |
| 3-dhBB(2F,3F)-O2 | (1-16) | 4% |
| 3-HH1OCro(7F,8F)-5 | (1-21) | 4% |
| 3-HH-V | (2-1) | 11% |
| 1-BB-5 | (2-3) | 5% |

NI = 70.9°C; Tc < -20°C; Δn = 0.129; Δε = -4.4; Vth = 1.74 V; η = 27.2 mPa·s.

Compound (3-26) and compound (3-18) were added to the composition in a proportion of 0.2% by weight and 0.2% by weight, respectively.

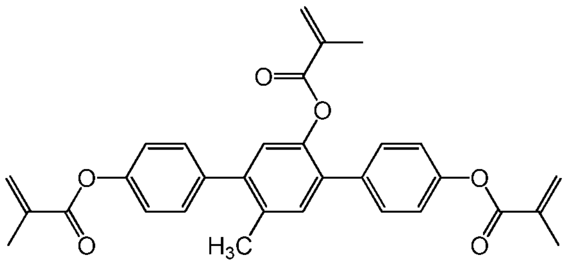

(3-26)

MAC-BB(F)B-MAC (3-18)

**Composition M9**

| | | |
|---|---|---|
| 3-HB(2F,3F)-O2 | (1-1) | 7% |
| V-HB(2F,3F)-O2 | (1-1) | 8% |
| 3-H2B(2F,3F)-O2 | (1-3) | 8 % |
| 3-BB(2F,3F)-O2 | (1-5) | 10% |
| 2-HHB(2F,3F)-O2 | (1-7) | 4% |
| 3-HHB(2F,3F)-O2 | (1-7) | 7 % |
| V-HHB(2F,3F)-O2 | (1-7) | 6 % |
| 3-HDhB(2F,3F)-O2 | (1-13) | 6% |
| 2-HBB(2F,3F)-O2 | (1-15) | 5% |
| 3-HBB(2F,3F)-O2 | (1-15) | 6 % |
| V-HBB(2F,3F)-O2 | (1-15) | 5% |

(continued)

| | | |
|---|---|---|
| V2-HBB(2F,3F)-O2 | (1-15) | 4% |
| 3-HEB(2F,3F)B(2F,3F)-O2 | (1-17) | 3% |
| 3-H1OCro(7F,8F)-5 | (1-20) | 3% |
| 3-HH-O1 | (2-1) | 5% |
| 1-BB-5 | (2-3) | 4% |
| V-HHB-1 | (2-5) | 4% |
| 5-HBBH-3 | (2-11) | 5% |

NI = 81.5°C; Tc < -30°C; Δn = 0.122; Δε = -4.7; Vth = 1.76 V; η = 31.8 mPa·s.

Compound (3-1) was added to the composition in a proportion of 0.4% by weight.

MAC-B(2F)B-MAC (3-1)

**Composition M10**

| | | |
|---|---|---|
| V-HB(2F,3F)-O4 | (1-1) | 14% |
| V-H1OB (2F,3F)-O2 | (1-4) | 3% |
| 3-BB(2F,3F)-O2 | (1-5) | 10% |
| 3-HHB(2F,3F)-O2 | (1-7) | 7% |
| V2-HHB(2F,3F)-O2 | (1-7) | 7% |
| V-HH1OB(2F,3F)-O2 | (1-10) | 6% |
| V-HBB (2F,3F)-O4 | (1-15) | 9 % |
| 1V2-HBB(2F,3F)-O2 | (1-15) | 5% |
| 3-HH-V | (2-1) | 13% |
| 1-BB-3 | (2-3) | 3% |
| 3-HHB-1 | (2-5) | 4% |
| 3-HHB-O1 | (2-5) | 4% |
| V-HBB-2 | (2-6) | 5% |
| 1-BB(F)B-2V | (2-7) | 6% |
| 5-HBBH-1O1 | (-) | 4% |

NI = 93.6°C; Tc < -30°C; Δn = 0.125; Δε = -3.9; Vth = 2.20 V; η = 29.9 mPa·s.

Compound (3-1) and compound (3-24) were added to the composition in a proportion of 0.3% by weight and 0.1% by weight, respectively.

MAC-B(2F)B-MAC (3-1)

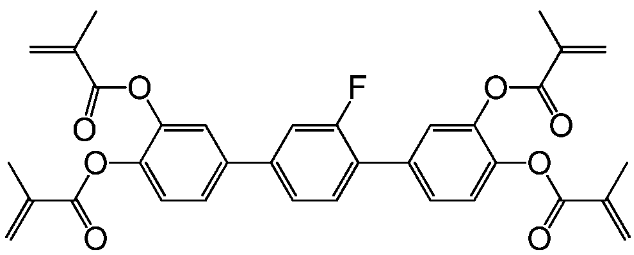

(3-24)

**Composition M11**

| | | |
|---|---|---|
| 3-HB(2F, 3F)-O4 | (1-1) | 6% |
| 3-H2B(2F, 3F)-O2 | (1-3) | 8 % |
| 3-H1OB(2F, 3F)-O2 | (1-4) | 4% |
| 3-BB(2F, 3F)-O2 | (1-5) | 7% |
| 3-HHB(2F, 3F)-O2 | (1-7) | 10% |
| V-HHB(2F, 3F)-O2 | (1-7) | 7 % |
| V-HHB(2F, 3F)-O4 | (1-7) | 7 % |
| 3-HBB (2F, 3F)-O2 | (1-15) | 6 % |
| V-HBB (2F, 3F)-O2 | (1-15) | 6 % |
| 1V2-HBB(2F,3F)-O2 | (1-15) | 5% |
| 2-HH-3 | (2-1) | 12% |
| 1-BB-3 | (2-3) | 6% |
| 3-HHB-1 | (2-5) | 4% |
| 3-HHB-O1 | (2-5) | 4% |
| 3-HBB-2 | (2-6) | 5% |
| 3-B(F)BB-2 | (2-7) | 3% |

NI = 92.8°C; Tc < -20°C; Δn = 0.126; Δε = -4.4; Vth = 2.19 V; η = 26.0 mPa·s.

Compound (3-2) was added to the composition in a proportion of 0.2% by weight.

MAC-BB-MAC (3-2)

**Composition M12**

| | | |
|---|---|---|
| 3-HB(2F,3F)-O2 | (1-1) | 5% |
| 1V2-HB(2F,3F)-O2 | (1-1) | 7% |
| V2-BB(2F,3F)-O2 | (1-5) | 8 % |
| 3-HHB(2F,3F)-O2 | (1-7) | 5% |
| 5-HHB(2F,3F)-O2 | (1-7) | 4% |
| 3-HH1OB(2F,3F)-O2 | (1-10) | 5% |
| 2-BB(2F,3F)B-3 | (1-11) | 4% |
| 2-HBB(2F,3F)-O2 | (1-15) | 3% |
| 3-HBB(2F,3F)-O2 | (1-15) | 8 % |
| 4-HBB(2F,3F)-O2 | (1-15) | 5% |
| V-HBB(2F,3F)-O2 | (1-15) | 8% |
| 3-HH-V | (2-1) | 27% |
| 3-HH-V1 | (2-1) | 6% |
| V-HHB-1 | (2-5) | 5% |

NI = 81.7°C; Tc < -20°C; Δn = 0.110; Δε = -3.2; Vth = 2.12 V; η = 15.8 mPa·s.

Compound (3-1) was added to the composition in a proportion of 0.4% by weight.

MAC-B(2F)B-MAC (3-1)

**Composition M13**

| | | |
|---|---|---|
| 3-HB(2F,3F)-O2 | (1-1) | 7% |
| 1V2-HB(2F,3F)-O2 | (1-1) | 7% |
| 3-BB(2F,3F)-O2 | (1-5) | 8 % |
| 3-HHB(2F,3F)-O2 | (1-7) | 5% |
| 5-HHB(2F,3F)-O2 | (1-7) | 4% |
| 3-HH1OB(2F,3F)-O2 | (1-10) | 5% |
| 2-BB(2F,3F)B-3 | (1-11) | 4% |
| 2-HBB(2F,3F)-O2 | (1-15) | 3% |
| 3-HBB(2F,3F)-O2 | (1-15) | 8 % |
| 4-HBB(2F,3F)-O2 | (1-15) | 5% |
| V-HBB (2F,3F)-O2 | (1-15) | 8 % |
| 3-HH-V | (2-1) | 33% |
| V-HHB-1 | (2-5) | 3 % |

NI = 76.0°C; Tc < -30°C; Δn = 0.107; Δε = -3.2; Vth = 2.08 V; η = 16.0 mPa·s.

Compound (3-1) and compound (3-25) were added to the composition in a proportion of 0.35% by weight and 0.1% by weight, respectively.

MAC-B(2F)B-MAC (3-1)

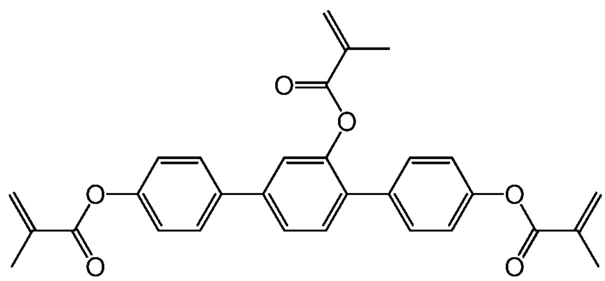

(3-25)

**Composition M14**

| | | |
|---|---|---|
| 3-HB(2F,3F)-O4 | (1-1) | 6% |
| 3-H2B(2F,3F)-O2 | (1-3) | 8 % |
| 3-H1OB(2F,3F)-O2 | (1-4) | 4% |
| 3-BB(2F,3F)-O2 | (1-5) | 7% |
| V-HHB(2F,3F)-O2 | (1-7) | 7% |
| V-HHB(2F,3F)-O4 | (1-7) | 7% |
| 3-HH2B(2F,3F)-O2 | (1-9) | 7% |
| 5-HH2B(2F,3F)-O2 | (1-9) | 3% |
| 3-HBB(2F,3F)-O2 | (1-15) | 6% |

(continued)

| | | |
|---|---|---|
| V-HBB (2F,3F)-O2 | (1-15) | 6% |
| 1V2-HBB(2F,3F)-O2 | (1-15) | 5% |
| 2-HH-3 | (2-1) | 12% |
| 1-BB-5 | (2-3) | 12% |
| 3-HHB-1 | (2-5) | 4% |
| 3-HHB-O1 | (2-5) | 3% |
| 3-HBB-2 | (2-6) | 3% |

NI = 83.6°C; Tc < -30°C; Δn = 0.122; Δε = -4.4; Vth = 2.13 V; η = 22.9 mPa·s.

Compound (3-2) and compound (3-24) were added to the composition in a proportion of 0.1% by weight and 0.3% by weight, respectively.

AC-VO-BB-OV-AC (3-2)

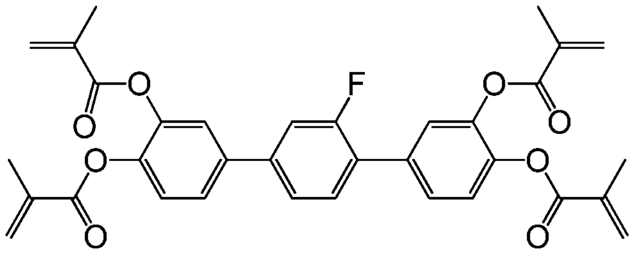

(3-24)

**Composition M15**

| | | |
|---|---|---|
| 2-H1OB(2F, 3F) -O2 | (1-4) | 6 % |
| 3-H1OB(2F, 3F)-O2 | (1-4) | 4 % |
| 3-BB(2F,3F)-O2 | (1-5) | 3% |
| 2-HH1OB(2F, 3F)-O2 | (1-10) | 14% |
| 3-HBB(2F, 3F)-O2 | (1-15) | 11% |
| V-HBB(2F, 3F)-O2 | (1-15) | 10% |
| V-HBB (2F, 3F)-O4 | (1-15) | 6% |
| 2-HH-3 | (2-1) | 5% |
| 3-HH-VFF | (2-1) | 30% |
| 1-BB-3 | (2-3) | 5% |
| 3-HHB-1 | (2-5) | 3% |
| 3-HBB-2 | (2-6) | 3% |

NI = 77.8°C; Tc < -20°C; Δn = 0.105; Δε = -3.2; Vth = 2.17 V; η = 18.9 mPa·s.

Compound (3-2) and compound (3-25) were added to the composition in a proportion of 0.1% by weight and 0.3% by weight, respectively.

AC-VO-BB-OV-AC (3-2)

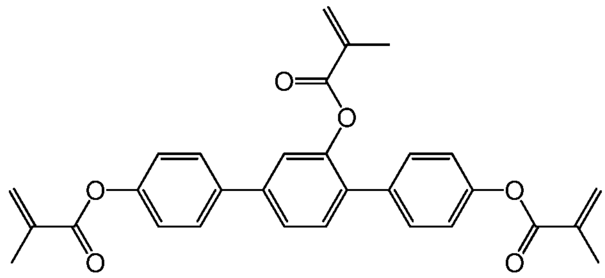

(3-25)

Compositions M1 to M15 each containing the polymerizable compound were described in the above. Next, devices having various alignment films were prepared, and the above liquid crystal compositions were injected thereinto. The polymerizable compound was polymerized by irradiating the device with ultraviolet light. Finally, a response time in the device was measured. Preparation of the device having the alignment film will be described in the following order: polysiloxane, modified polysiloxane, polyamic acid, polyimide, a liquid crystal aligning agent and a liquid crystal display device. In addition, a $SiO_2$ conversion concentration is a concentration expressed by converting silicon atoms of alkoxysilane into $SiO_2$.

1. Polysiloxane

A mixture of alkoxysilane was hydrolyzed to prepare aligning agents (S-1) to (S-3).

**Synthesis Example 1**

In a 200 mL (milliliter) four-neck reaction flask equipped with a thermometer and a reflux condenser, HG (22.5 g), BCS (7.5 g), TEOS (28.3 g), C18 (1.7 g) and ACPS (14.1 g) were mixed to prepare an alkoxysilane solution. To the solution, a solution prepared by mixing HG (11.2 g), BCS (3.7 g), water (10.8 g) and oxalic acid (0.2 g; a catalyst) was added dropwise at room temperature over 30 minutes. The resulting solution was stirred for 30 minutes, and then refluxed for 1 hour, and then left to cool down to obtain a polysiloxane solution having a $SiO_2$ conversion concentration of 12% by weight. To the resulting solution (10.0 g), BCS (20.0 g) was mixed to prepare aligning agent (S-1) having a $SiO_2$ conversion concentration of 4% by weight.

**Synthesis Example 2**

In a 200 mL four-neck reaction flask equipped with a thermometer and a reflux condenser, HG (21.1 g), BCS (7.0 g), TEOS (19.2 g), C18 (1.7 g) and ACPS (23.4 g) were mixed to prepare an alkoxysilane solution. To the solution, a solution prepared by mixing HG (10.5 g), BCS (3.5 g), water (10.8 g) and oxalic acid (0.9 g; a catalyst) was added dropwise at room temperature over 30 minutes. The resulting solution was stirred for 30 minutes, and refluxed for 1 hour. Next, a mixture of a methanol solution (1.2 g) containing 92% by weight of UPS, HG (0.5 g) and BCS (0.2 g) was added thereto. The resulting mixture was refluxed for 30 minutes and then left to cool down to obtain a polysiloxane solution having a $SiO_2$ conversion concentration of 12% by weight. To the resulting solution (10.0 g), BCS (20.0 g) was mixed to prepare aligning agent (S-2) having a $SiO_2$ conversion concentration of 4% by weight.

**Synthesis Example 3**

In a 200 mL four-neck reaction flask equipped with a thermometer and a reflux condenser, HG (20.2 g), BCS (6.7 g), TEOS (27.9 g), C18 (1.7 g) and MPMS (17.4 g) were mixed to prepare an alkoxysilane solution. To the solution, a solution prepared by mixing HG (10.0 g), BCS (3.4 g), water (10.8 g) and oxalic acid (0.9 g; a catalyst) was added dropwise at room temperature over 30 minutes. The resulting solution was stirred for 30 minutes, refluxed for 1 hour, and then a mixture of a methanol solution (0.6 g) containing 92% by weight of UPS, HG (0.3 g) and BCS (0.1 g) was added thereto. The resulting mixture was refluxed for 30 minutes and then left to cool down to obtain a polysiloxane solution having a $SiO_2$ conversion concentration of 12% by weight. To the resulting solution (10.0 g), BCS (20.0g) was mixed to prepare aligning agent (S-3) having a $SiO_2$ conversion concentration of 4% by weight.

2. Modified polysiloxane

**Synthesis Example 4**

In a reaction vessel equipped with a stirrer, a thermometer, a dropping funnel and a reflux condenser, 2-(3,4-epoxycyclohexyl)ethyltrimethoxysilane (100.0 g), methyl isobutyl ketone (500 g) and triethylamine (10.0 g) were put, and mixed at room temperature. Deionized water (100 g) was added dropwise thereto from the dropping funnel over 30 minutes. The resulting mixture was heated at 80°C for 6 hours. After completion of the reaction, an organic layer was separated, and washed with a 0.2 wt% ammonium nitrate aqueous solution until water after washing became neutral, and then a solvent and water were distilled off under reduced pressure to obtain polysiloxane having an epoxy group as a viscous transparent liquid. The compound is abbreviated as siloxane (1).

**Synthesis Example 5**

In a 100 mL three-neck flask, the siloxane (1) (9.8 g) described above, methyl isobutyl ketone (28.0 g), compound (CA1-1) (5.0 g), compound (CA3-1) (3.3 g) and U-CAT 18X (quaternary amine salt; a curing accelerator for an epoxy compound; San-Apro Ltd., Tokyo) (0.20 g) were put, and the resulting mixture was stirred at 80°C for 12 hours. After completion of the reaction, reprecipitation was performed with methanol, and the precipitate was dissolved into ethyl acetate. The resulting solution was washed with water 3 times, and the solvent was distilled off to obtain compound (A-1) (14.5 g) as colorless powder. Mw was 6,500.

**Synthesis Example 6**

Colorless powder of compound (A-2) (12.8 g) was obtained by performing operation in a manner similar to Synthesis Example 5 except that compound (CA1-2) (4.0 g) was used in place of compound (CA1-1). Mw was 6,000.

**Synthesis Example 7**

Colorless powder of compound (A-3) (14.7 g) was obtained by performing operation in a manner similar to Synthesis Example 5 except that compound (CA1-3) (6.8 g) was used in place of compound (CA1-1). Mw was 8,100.

**Synthesis Example 8**

Colorless powder of compound (A-4) (15.0 g) was obtained by performing operation in a manner similar to Synthesis Example 5 except that compound (CA1-4) (5.6 g) was used in place of compound (CA1-1). Mw was 7,500.

**Synthesis Example 9**

In a 100 mL three-neck flask, siloxane (1) (9.8 g) obtained in Synthesis Example 4, methyl isobutyl ketone (28.0 g), compound (CA1-1) (10.0 g) and U-CAT 18X (see Synthesis Example 5) (0.20 g) were put, and the resulting mixture was stirred at 80°C for 12 hours. After completion of the reaction, reprecipitation was performed with methanol, and the precipitate was dissolved in ethyl acetate, and the solution was washed with water 3 times, and the solvent was distilled off to obtain compound (A-5) (16.0 g) as colorless powder. Mw was 8,500.

**Synthesis Example 10**

Colorless powder of compound (A-6) (12.4 g) was obtained by performing operation in a manner similar to Synthesis Example 5 except that compound (CA1-5) (4.1 g) was used in place of compound (CA1-1). Mw was 6,200.

**Synthesis Example 11**

Colorless powder of compound (A-7) (13.4 g) was obtained by performing operation in a manner similar to Synthesis Example 5 except that compound (CA3-2) (3.6 g) was used in place of compound (CA3-1). Mw was 7,900.

**Synthesis Example 12**

In a 100 mL three-neck flask, siloxane (1) (9.8 g) obtained in Synthesis Example 4, methyl isobutyl ketone (28.0 g), compound (CA1-1) (8.0 g), compound (CA3-2) (1.4 g) and U-CAT 18X (see Synthesis Example 5) (0.20 g) were put,

and the resulting mixture was stirred at 80°C for 12 hours. After completion of the reaction, reprecipitation was performed with methanol, and the precipitate was dissolved in ethyl acetate. The solution was washed with water 3 times, and the solvent was distilled off to obtain compound (A-8) (13.9 g) as colorless powder. Mw was 8,900.

**Synthesis Example 13**

In a 100 mL three-neck flask, siloxane (1) (9.8 g) obtained in Synthesis Example 4, methyl isobutyl ketone (28.0 g), compound (CA1-1) (2.0 g), compound (CA3-2) (5.8 g) and U-CAT 18X (see Synthesis Example 5) (0.20 g) were put, and the resulting mixture was stirred at 80°C for 12 hours. After completion of the reaction, reprecipitation was performed with methanol, and the precipitate was dissolved in ethyl acetate. The solution was washed with water 3 times, and the solvent was distilled off to obtain compound (A-9) (13.4 g) as colorless powder. Mw was 7,600.

**Synthesis Example 14**

In a 100 mL three-neck flask, siloxane (1) (9.8 g) obtained in Synthesis Example 4, methyl isobutyl ketone (28.0 g), compound (CA1-1) (8.0 g), compound (CA3-2) (2.6 g) and U-CAT 18X (see Synthesis Example 5) (0.20 g) were put, and the resulting mixture was stirred at 80°C for 12 hours. After completion of the reaction, reprecipitation was performed with methanol, and the precipitate was dissolved in ethyl acetate. The solution was washed with water 3 times, and the solvent was distilled off to obtain compound (A-10) (15.5 g) as colorless powder. Mw was 9,200.

**Synthesis Example 15**

Colorless powder of compound (A-11) (18.4 g) was obtained by performing operation in a manner similar to Synthesis Example 5 except that compound (CA1-6) (6.1 g) was used in place of compound (CA1-1). Mw was 7,300.

**Synthesis Example 16**

Colorless powder of compound (A-12) (17.5 g) was obtained by performing operation in a manner similar to Synthesis Example 5 except that compound (CA1-7) (5.7 g) was used in place of compound (CA1-1). Mw was 7,600.

**Synthesis Example 17**

Colorless powder of compound (A-13) (19.1 g) was obtained by performing operation in a manner similar to Synthesis Example 5 except that compound (CA1-8) (7.2 g) was used in place of compound (CA1-1). Mw was 7,000.

**Synthesis Example 18**

Colorless powder of compound (A-14) (18.1 g) was obtained by performing operation in a manner similar to Synthesis Example 5 except that compound (CA1-9) (6.2 g) was used in place of compound (CA1-1). Mw was 6,900.

**Synthesis Example 19**

Colorless powder of compound (A-15) (19.4 g) was obtained by performing operation in a manner similar to Synthesis Example 5 except that compound (CA1-10) (7.0 g) was used in place of compound (CA1-1). Mw was 7,500.

**Synthesis Example 20**

Colorless powder of compound (A-16) (20.1 g) was obtained by performing operation in a manner similar to Synthesis Example 5 except that compound (CA1-11) (8.4 g) was used in place of compound (CA1-1). Mw was 7,300.

**Synthesis Example 21**

Colorless powder of compound (A-17) (19.5 g) was obtained by performing operation in a manner similar to Synthesis Example 5 except that compound (CA1-12) (7.2 g) was used in place of compound (CA1-1). Mw was 7,300.

3. Polyamic acid

**Synthesis Example 22**

Into N-methyl-2-pyrrolidone (367.6 g), 1,2,3,4-cyclobutanetetracarboxylic dianhydride (19.61 g) (0.1 mol) and 4, 4'-diamino-2, 2'-dimethylbiphenyl (21.23 g) (0.1 mol) were dissolved, and the resulting mixture was stirred at room temperature for 6 hours. The reaction mixture was poured into a large excess of methanol to allow a product to precipitate. The precipitate was washed with methanol, and dried under reduced pressure at 40°C for 15 hours to obtain Polyamic acid (PA-1) (35.0 g).

**Synthesis Example 23**

Into N-methyl-2-pyrrolidone (329.3 g), 2,3,5-tricarboxy cyclopentylacetic dianhydride (22.4 g; 0.1 mol) and cyclohexane bis(methylamine) (14.23 g; 0.1 mol) were dissolved, and the resulting mixture was stirred at 60°C for 6 hours. The reaction mixture was poured into a large excess of methanol to allow a product to precipitate. The precipitate was washed with methanol, and dried under reduced pressure at 40°C for 15 hours to obtain polyamic acid (PA-2) (32.0 g).

4. Polyimide

**Synthesis Example 24**

To polyamic acid (PA-2) (17.5 g) obtained in Synthesis Example 23, N-methyl-2-pyrrolidone (232.5 g), pyridine (3.8 g) and acetic anhydride (4.9 g) were added, and the resulting mixture was stirred 120°C for 4 hours, and imidized. The reaction mixture was poured into a large excess of methanol to allow a product to precipitate. The precipitate was washed with methanol, and dried under reduced pressure for 15 hours to obtain polyimide (PI-1) (15.0 g).

5. Liquid crystal aligning agent

**Synthesis Example 25**

A solution containing polyamic acid (PA-1) obtained in Synthesis Example 22 was taken in an amount corresponding to 1,000 parts by weight in terms of polyamic acid (PA-1) contained therein, and to the solution obtained, compound (A-1) (100 parts by weight) was added and N-methyl-2-pyrrolidone and butyl cellosolve were further added thereto to obtain a solution having a solvent composition of N-methyl-2-pyrrolidone : butyl cellosolve = 50 : 50 (weight ratio) and a solid concentration of 4.0% by weight. The resulting solution was filtrated with a filter having a pore diameter of 10.2 micrometers to obtain aligning agent (S-4). See Table 4.

**Synthesis Examples 26 to 35 and 38 to 45 and Reference Synthesis Examples 36 and 37**

Modified polysiloxane and polyamic acid (or polyimide) were combined as shown in Table 4, and aligning agents (S-5) to (S-24) were prepared by performing operation in a manner similar to Synthesis Example 25.

Table 4. Synthesis Examples 25 to 45 of liquid crystal aligning agent

| No. | Liquid crystal aligning agent | Component | |
|---|---|---|---|
| | | Modified polysiloxane | Polyamic acid or polyimide |
| Synthesis Example 25 | S-4 | A-1 | PA-1 |
| Synthesis Example 26 | S-5 | A-2 | PA-1 |
| Synthesis Example 27 | S-6 | A-3 | PA-1 |
| Synthesis Example 28 | S-7 | A-4 | PA-1 |
| Synthesis Example 29 | S-8 | A-5 | PA-1 |
| Synthesis Example 30 | S-9 | A-6 | PA-1 |
| Synthesis Example 31 | S-10 | A-7 | PA-1 |
| Synthesis Example 32 | S-11 | A-8 | PA-1 |

(continued)

| No. | Liquid crystal aligning agent | Component | |
|---|---|---|---|
| | | Modified polysiloxane | Polyamic acid or polyimide |
| Synthesis Example 33 | S-12 | A-9 | PA-1 |
| Synthesis Example 34 | S-13 | A-10 | PA-1 |
| Synthesis Example 35 | S-14 | A-7 | PA-2 |
| Reference Synthesis Example 36 | S-15 | A-7 | PI-1 |
| Reference Synthesis Example 37 | S-16 | A-8 | PI-1 |
| Synthesis Example 38 | S-17 | A-8 | PA-1 |
| Synthesis Example 39 | S-18 | A-11 | PA-1 |
| Synthesis Example 40 | S-19 | A-12 | PA-1 |
| Synthesis Example 41 | S-20 | A-13 | PA-1 |
| Synthesis Example 42 | S-21 | A-14 | PA-1 |
| Synthesis Example 43 | S-22 | A-15 | PA-1 |
| Synthesis Example 44 | S-23 | A-16 | PA-1 |

6. Liquid crystal display device

**Example 1**

Two substrates on which an ITO electrode pattern having a pixel size of 100 micrometers × 300 micrometers and a line and a space of 3.5 micrometers each was formed were arranged. Aligning agent (S-1) prepared from alkoxysilane in Synthesis Example 1 was spin-coated on an ITO surface of the substrate. The resulting substrate was dried on a hot plate at 80°C for 5 minutes, and calcinated in a hot air circulating oven at 180°C for 30 minutes to obtain an alignment film (film thickness: 100 nm). A bead spacer of 3.5 micrometers was spread on the alignment film of one substrate, and then a sealing agent was printed from above. The other substrate was laminated with facing an alignment film surface inward, and the sealing agent was cured to prepare a device. Composition M1 was injected into the device. The device was irradiated with ultraviolet light to be converted into a PSA device, and then a response time was measured. The results are summarized in Table 5.

**Examples 2 to 14 and 17 to 24 and Reference Examples 15 and 16**

Liquid crystal devices having various aligning films were prepared by performing operation in a manner similar to Example 1 by using aligning agents (S-2) to (S-24) in place of aligning agent (S-1). As already described, aligning agents (S-2) and (S-3) were prepared from alkoxysilane. Aligning agents (S-4) to (S-24) were prepared from modified polysiloxane and polyamic acid (or polyimide). Each composition from compositions M1 to M15 was injected into the device described in Example 1, and the device was irradiated with ultraviolet light, and then a response time was measured. The results are summarized in Table 5.

Table 5. Response time in device

| No. | Liquid crystal aligning agent | Composition | Response time (ms) |
|---|---|---|---|
| Example 1 | S-1 | M1 | 4.9 |
| Example 2 | S-2 | M2 | 4.9 |
| Example 3 | S-3 | M3 | 5.4 |
| Example 4 | S-4 | M4 | 3.7 |
| Example 5 | S-5 | M5 | 5.1 |
| Example 6 | S-6 | M6 | 4.9 |

(continued)

| No. | Liquid crystal aligning agent | Composition | Response time (ms) |
|---|---|---|---|
| Example 7 | S-7 | M7 | 4.1 |
| Example 8 | S-8 | M8 | 5.5 |
| Example 9 | S-9 | M9 | 6.1 |
| Example 10 | S-10 | M10 | 5.8 |
| Example 11 | S-11 | M11 | 5.4 |
| Example 12 | S-12 | M12 | 3.6 |
| Example 13 | S-13 | M13 | 3.7 |
| Example 14 | S-14 | M14 | 5.0 |
| Reference Example 15 | S-15 | M15 | 4.3 |
| Reference Example 16 | S-16 | M1 | 4.8 |
| Example 17 | S-17 | M2 | 5.0 |
| Example 18 | S-18 | M3 | 5.3 |
| Example 19 | S-19 | M4 | 3.7 |
| Example 20 | S-20 | M5 | 5.2 |
| Example 21 | S-21 | M6 | 4.8 |
| Example 22 | S-22 | M7 | 4.0 |
| Example 23 | S-23 | M8 | 5.4 |
| Example 24 | S-24 | M9 | 5.9 |

In the liquid crystal display device, a shorter response time is preferred. As is found in Table 5, the response time was in the range of 3.6 milliseconds to 6.1 milliseconds. From the above results, even though kinds of the liquid crystal composition and the alignment film were significantly different, the response time was reasonably able to fall within such an optimum range. The above performance is noteworthy features of the invention.

## Industrial Applicability

A liquid crystal display device of the invention can be used in a liquid crystal monitor, a liquid crystal television and so forth.

## Claims

1. A polymer sustained alignment mode liquid crystal display device, comprising: an electrode group formed on one or both of a pair of substrates arranged with facing each other; a plurality of active devices connected to the electrode group; liquid crystal alignment films formed on surfaces facing each other of the pair of substrates, respectively; and a liquid crystal composition interposed between the pair of substrates, wherein the liquid crystal alignment film contains at least one polymer selected from the polyamic acid and the polyamic acid ester as a main component, and contains polyorganosiloxane as an accessory component, and the liquid crystal composition contains at least one compound selected from the group of compounds represented by formula (1) as a first component:

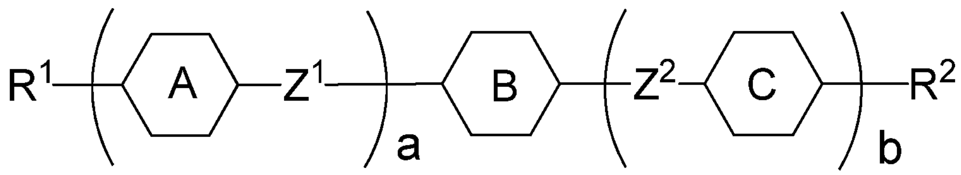

(1)

wherein, in formula (1), $R^1$ and $R^2$ are independently alkyl having 1 to 12 carbons, alkoxy having 1 to 12 carbons, alkenyl having 2 to 12 carbons, alkenyloxy having 2 to 12 carbons, or alkyl having 1 to 12 carbons in which at least one hydrogen is replaced by fluorine or chlorine; ring A and ring C are independently 1,4-cyclohexylene, 1,4-cyclohexenylene, 1,4-phenylene, 1,4-phenylene in which at least one hydrogen is replaced by fluorine or chlorine, or tetrahydropyran-2,5-diyl; ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl; $Z^1$ and $Z^2$ are independently a single bond, ethylene, carbonyloxy or methyleneoxy; a is 0, 1, 2 or 3; b is 0 or 1; and a sum of a and b is 3 or less.

**2.** The liquid crystal display device according to claim 1, wherein the first component is at least one compound selected from the group of compounds represented by formula (1-1) to formula (1-21):

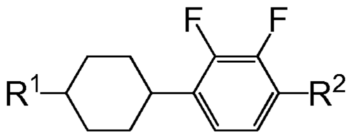

(1-1)

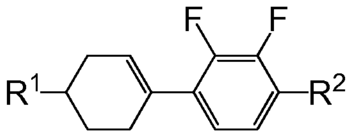

(1-2)

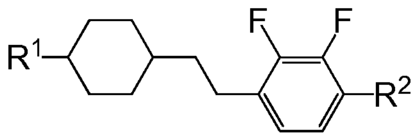

(1-3)

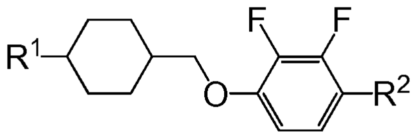

(1-4)

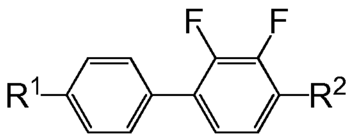

(1-5)

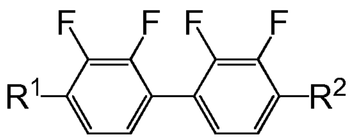

(1-6)

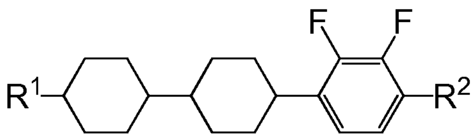

(1-7)

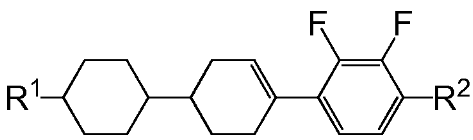

(1-8)

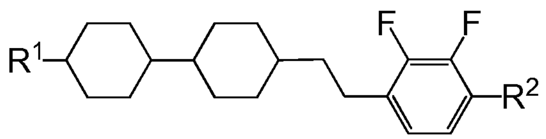

(1-9)

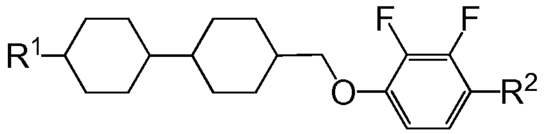

(1-10)

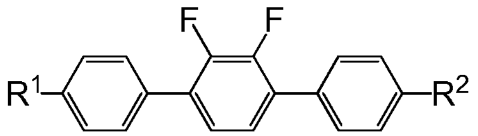

(1-11)

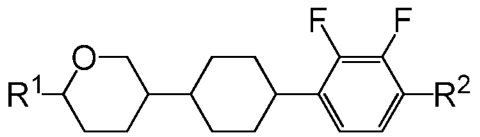

(1-12)

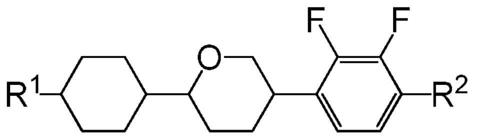

(1-13)

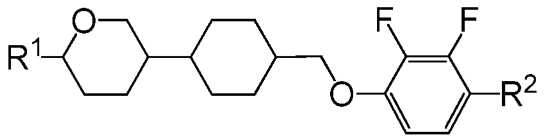

(1-14)

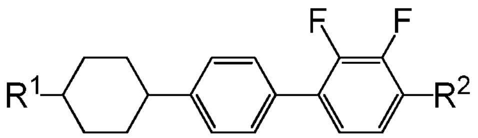

(1-15)

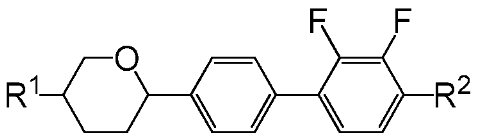

(1-16)

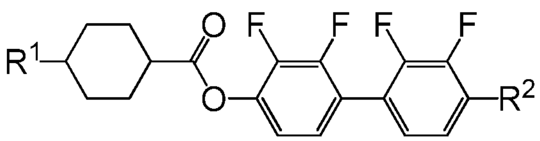

(1-17)

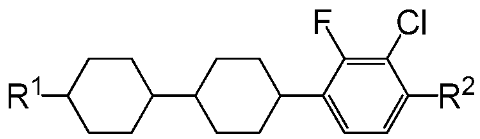

(1-18)

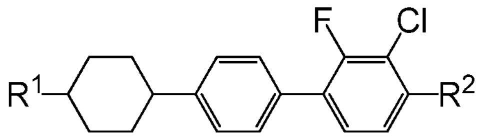

(1-19)

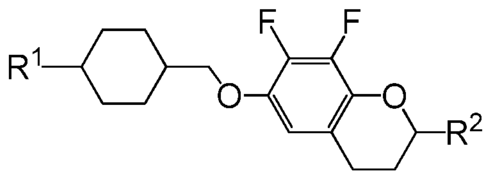

(1-20)

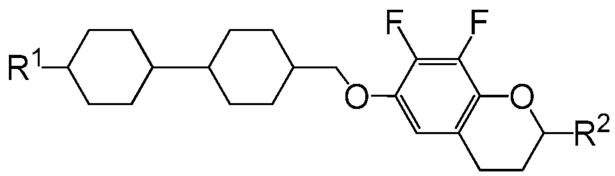

(1-21)

wherein, in formula (1-1) to formula (1-21), $R^1$ and $R^2$ are independently alkyl having 1 to 12 carbons, alkoxy having 1 to 12 carbons, alkenyl having 2 to 12 carbons, alkenyloxy having 2 to 12 carbons, or alkyl having 1 to 12 carbons in which at least one hydrogen is replaced by fluorine or chlorine.

**3.** The liquid crystal display device according to claim 1 or 2, wherein a proportion of the first component is in the range of 10% by weight to 90% by weight based on the weight of the liquid crystal composition.

**4.** The liquid crystal display device according to any one of claims 1 to 3, wherein the liquid crystal composition contains at least one compound selected from the group of compounds represented by formula (2) as a second component:

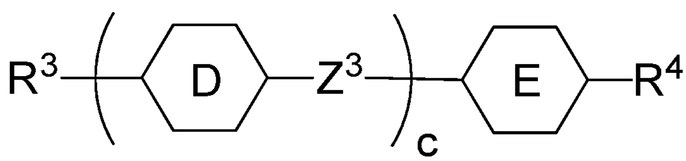

(2)

wherein, in formula (2), $R^3$ and $R^4$ are independently alkyl having 1 to 12 carbons, alkoxy having 1 to 12 carbons, alkenyl having 2 to 12 carbons, alkyl having 1 to 12 carbons in which at least one hydrogen is replaced by fluorine or chlorine, or alkenyl having 2 to 12 carbons in which at least one hydrogen is replaced by fluorine or chlorine; ring D and ring E are independently 1,4-cyclohexylene, 1,4-phenylene, 2-fluoro-1,4-phenylene or 2,5-difluoro-1,4-phenylene; $Z^3$ is a single bond, ethylene or carbonyloxy; and c is 1, 2 or 3.

**5.** The liquid crystal display device according to claim 4, wherein the second component is at least one compound selected from the group of compounds represented by formula (2-1) to formula (2-13):

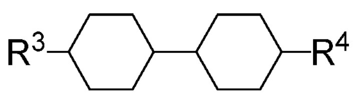

(2-1)

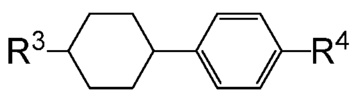

(2-2)

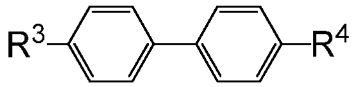

(2-3)

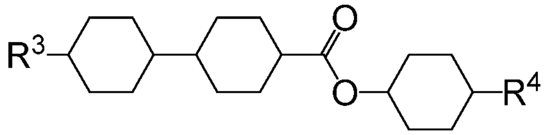

(2-4)

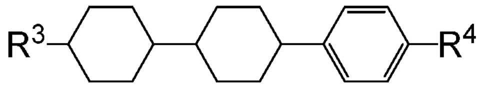

(2-5)

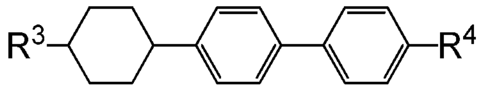

(2-6)

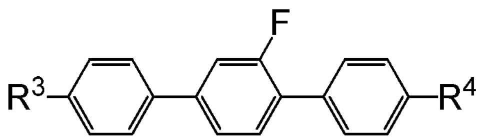

(2-7)

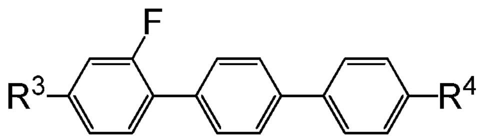

(2-8)

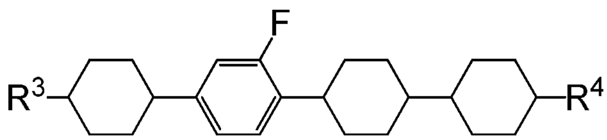

(2-9)

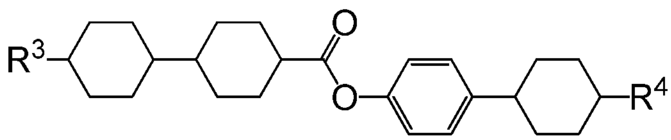

(2-10)

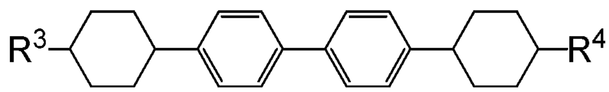

(2-11)

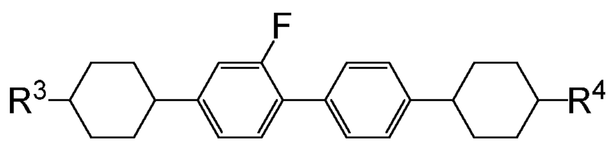

(2-12)

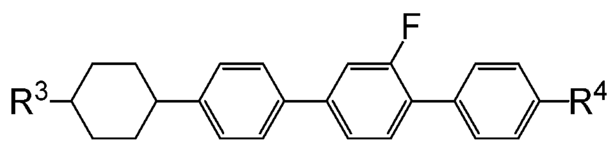

(2-13)

wherein, in formula (2-1) to formula (2-13), $R^3$ and $R^4$ are independently alkyl having 1 to 12 carbons, alkoxy having 1 to 12 carbons, alkenyl having 2 to 12 carbons, alkyl having 1 to 12 carbons in which at least one hydrogen is replaced by fluorine or chlorine, or alkenyl having 2 to 12 carbons in which at least one hydrogen is replaced by fluorine or chlorine.

**6.** The liquid crystal display device according to claim 4 or 5, wherein a proportion of the second component is in the range of 10% by weight to 90% by weight based on the weight of the liquid crystal composition.

**7.** The liquid crystal display device according to any one of claims 1 to 6, wherein the liquid crystal composition contains at least one polymerizable compound selected from the group of compounds represented by formula (3) as an additive component:

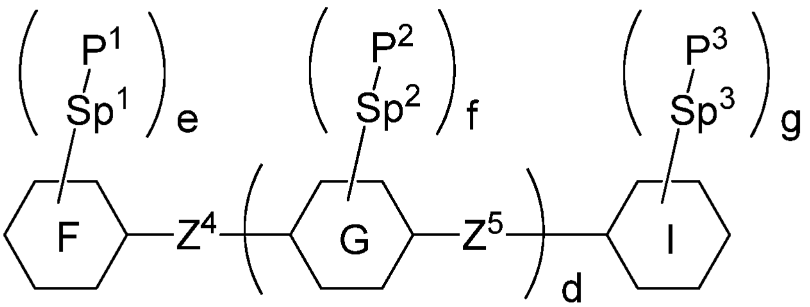

(3)

wherein, in formula (3), ring F and ring I are independently cyclohexyl, cyclohexenyl, phenyl, 1-naphthyl, 2-naphthyl, tetrahydropyran-2-yl, 1,3-dioxane-2-yl, pyrimidine-2-yl or pyridine-2-yl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine; ring G is 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl or pyridine-2,5-diyl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen may be replaced by fluorine or chlorine; $Z^4$ and $Z^5$ are independently a single bond or alkylene having 1 to 10 carbons, and in the alkylene, at least one piece of $-CH_2-$ may be replaced by -O-, -CO-, -COO- or -OCO-, and at least one piece of $-CH_2-CH_2-$ may be replaced by -CH=CH-, $-C(CH_3)=CH-$, $- CH=C(CH_3)-$ or $-C(CH_3)=C(CH_3)-$, and in the groups, at least one hydrogen may be replaced by fluorine or chlorine; $P^1$, $P^2$ and $P^3$ are independently a polymerizable group; $Sp^1$, $Sp^2$ and $Sp^3$ are independently a single bond or alkylene having 1 to 10 carbons, and in the alkylene, at least one piece of $- CH_2-$ may be replaced by -O-, -COO-, -OCO- or -OCOO-, and at least one piece of $-CH_2-CH_2-$ may be replaced by -CH=CH- or -C≡C-, and in the groups, at least one hydrogen may be replaced by fluorine or chlorine; d is 0, 1 or 2; e, f and g are independently 0, 1, 2, 3 or 4, and a sum of e, f and g is 1 or more.

**8.** The liquid crystal display device according to claim 7, wherein the additive component is at least one polymerizable compound selected from the group of compounds represented by formula (3-1) to formula (3-27):

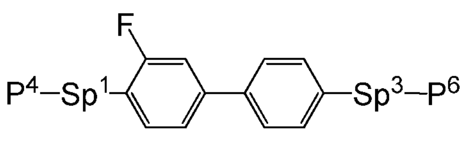

(3-1)

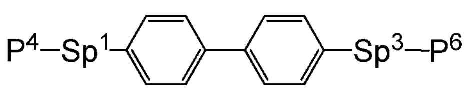

(3-2)

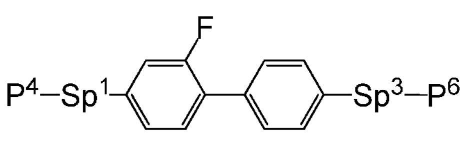

(3-3)

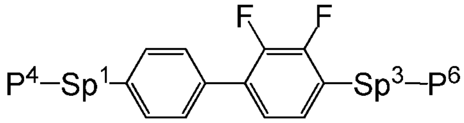

(3-4)

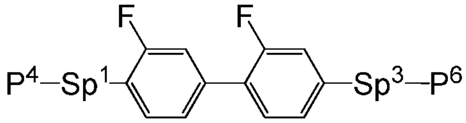

(3-5)

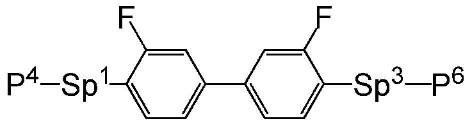

(3-6)

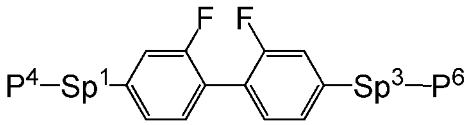

(3-7)

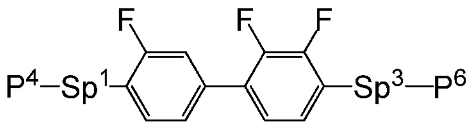

(3-8)

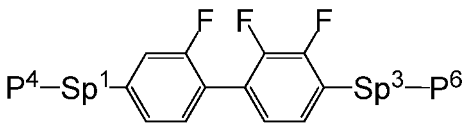

(3-9)

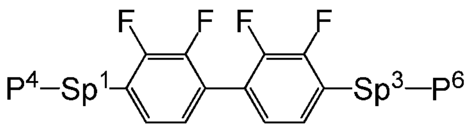

(3-10)

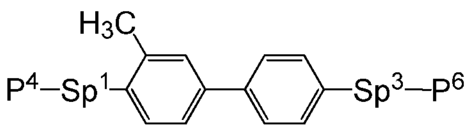

(3-11)

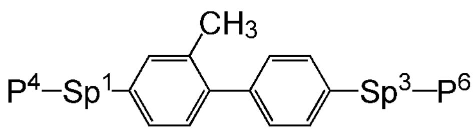

(3-12)

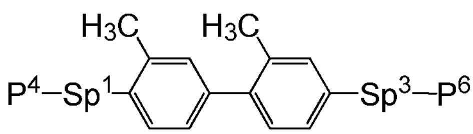

(3-13)

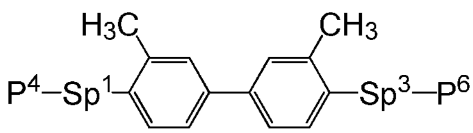

(3-14)

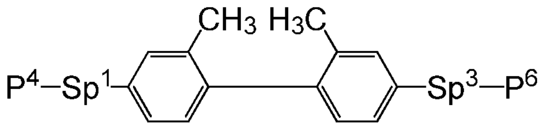

(3-15)

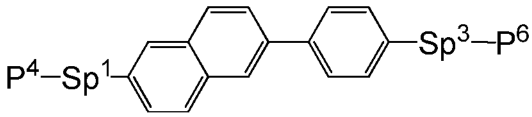

(3-16)

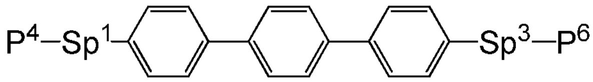

(3-17)

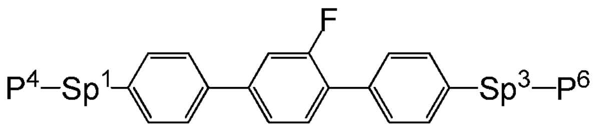

(3-18)

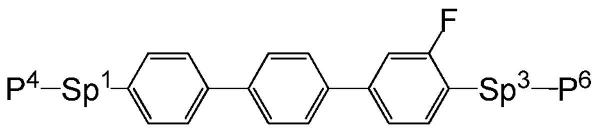

(3-19)

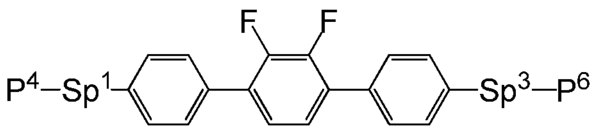

(3-20)

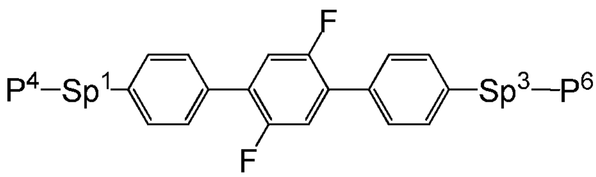

(3-21)

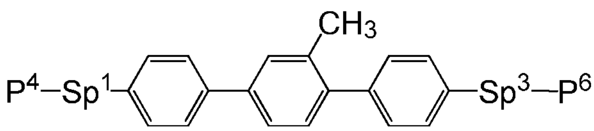

(3-22)

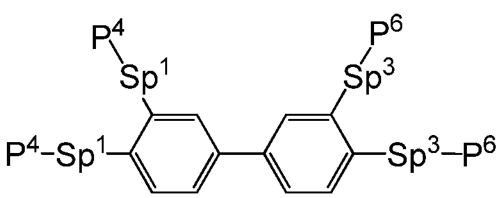

(3-23)

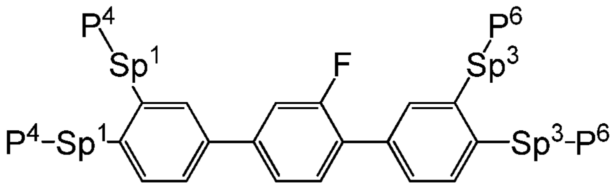

(3-24)

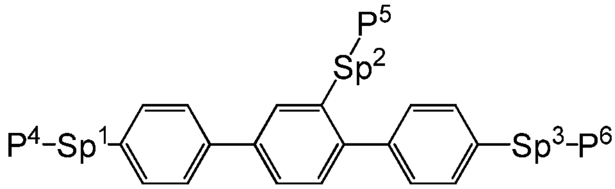

(3-25)

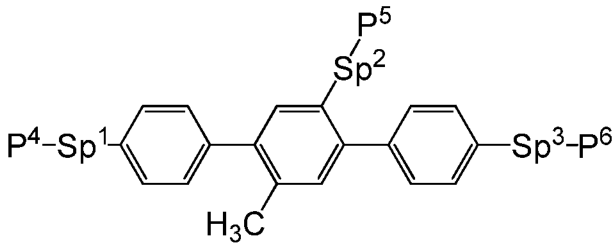

(3-26)

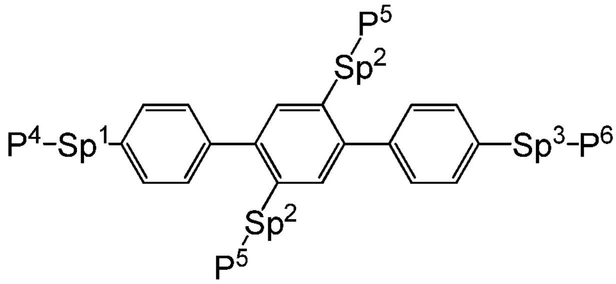

(3-27)

wherein, in formula (3-1) to formula (3-27), $P^4$, $P^5$ and $P^6$ are independently a polymerizable group selected from the group of groups represented by 5 formula (P-1) to formula (P-3):

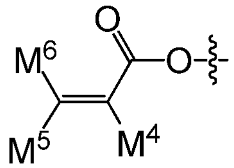

(P-1)

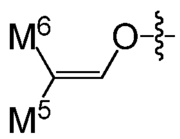

(P-2)

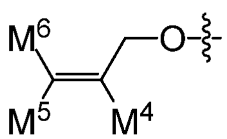

(P-3)

wherein, in formula (P-1) to formula (P-3), $M^4$, $M^5$ and $M^6$ are independently hydrogen, fluorine, alkyl having 1 to 5 carbons, or alkyl having 1 to 5 carbons in which at least one hydrogen is replaced by fluorine or chlorine; and in formula (3-1) to formula (3-27), $Sp^1$, $Sp^2$ and $Sp^3$ are independently a single bond or alkylene having 1 to 10 carbons, and in the alkylene, at least one piece of $-CH_2-$ may be replaced by -O-, -COO-, -OCO- or -OCOO-, and at least one piece of $-CH_2-CH_2-$ may be replaced by -CH=CH- or -C≡C-, and in the groups, at least one hydrogen may be replaced by fluorine or chlorine.

**9.** The liquid crystal display device according to any one of claims 1 to 8, wherein the polyorganosiloxane contained in the liquid crystal alignment film contains at least one group selected from the group of groups represented by formula ($X^1$-1) to formula ($X^1$-7):

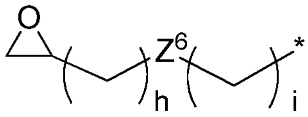

($X^1$-1)

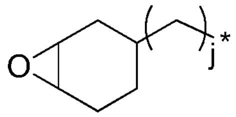

($X^1$-2)

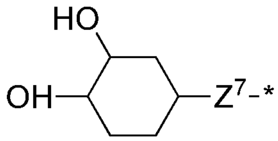

($X^1$-3)

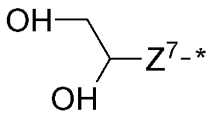

($X^1$-4)

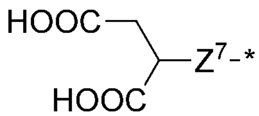

($X^1$-5)

$HOOC-Z^7-*$ ($X^1$-6)

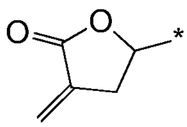

($X^1$-7)

wherein, in formula ($X^1$-1) to formula ($X^1$-7), an asterisk represents a site to which bonding is to be made, $Z^6$ is -O- or a single bond; $Z^7$ is a single bond, alkylene having 1 to 6 carbons, or a divalent group having 1 to 20 carbons containing at least one selected from the group of -O-, -S-, -COO-, -OCO- and -$NR^6$-, in which $R^6$ is hydrogen or alkyl having 1 to 6 carbons; h is 1, 2 or 3; i is an integer from 0 to 6, and when i is 0, $Z^6$ is a single bond; and j is an integer from 0 to 6.

**Patentansprüche**

**1.** Flüssigkristallanzeigevorrichtung im Modus für die dauerhafte Ausrichtung von Polymeren umfassend:

eine Elektrodengruppe gebildet an einer oder beiden eines Paares von Substraten, die einander zugewandt angeordnet sind;
eine Vielzahl von mit der Elektrodengruppe verbundenen aktiven Vorrichtungen;
ein Flüssigkristall-Ausrichtungsfilm jeweils gebildet an gegenüberliegenden Oberflächen des Paares von Substraten; und
eine zwischen dem Paar von Substraten angeordnete Flüssigkristallzusammensetzung, wobei der Flüssigkristall-Ausrichtungsfilm zumindest ein Polymer ausgewählt aus der Polyamidsäure und dem Polyamidsäureester als eine Hauptkomponente enthält, und Polyorganosiloxan als eine Zusatzkomponente enthält, und
die Flüssigkristallzusammensetzung zumindest eine Verbindung ausgewählt aus der Gruppe von durch Formel (1) dargestellten Verbindungen als eine erste Komponente enthält:

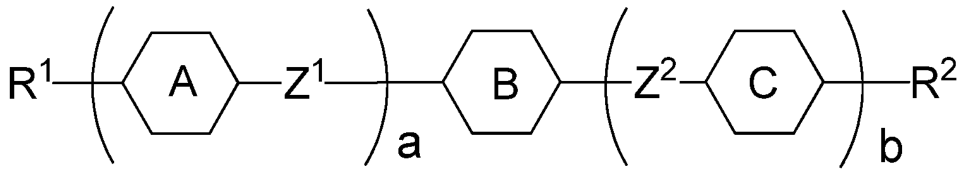

(1)

wobei, in Formel (1), $R^1$ und $R^2$ unabhängig Alkyl mit 1 bis 12 Kohlenstoffen, Alkoxy mit 1 bis 12 Kohlenstoffen, Alkenyl mit 2 bis 12 Kohlenstoffen, Alkenyloxy mit 2 bis 12 Kohlenstoffen oder Alkyl mit 1 bis 12 Kohlenstoffen, in welchem zumindest ein Wasserstoff durch Fluor oder Chlor ersetzt ist, sind; Ring A und Ring C unabhängig 1,4-Cyclohexylen, 1,4-Cyclohexenylen, 1,4-Phenylen, 1,4-Phenylen, in welchem zumindest ein Wasserstoff durch Fluor oder Chlor ersetzt ist, oder Tetrahydropyran-2,5-diyl sind;
Ring B 2,3-Difluor-1,4-phenylen, 2-Chlor-3-fluor-1,4-phenylen, 2,3-Difluor-5-methyl-1,4-phenylen, 3,4,5-Trifluornaphthalen-2,6-diyl oder 7,8-Difluorchroman-2,6-diyl ist; $Z^1$ und $Z^2$ unabhängig eine Einfachbindung, Ethylen, Carbonyloxy oder Methylenoxy sind;
a 0, 1, 2 oder 3 ist; b 0 oder 1 ist; und
eine Summe von a und b 3 oder weniger ist.

**2.** Flüssigkristallanzeigevorrichtung nach Anspruch 1, wobei die erste Komponente zumindest eine Verbindung ausgewählt aus der Gruppe von durch Formel (1-1) bis Formel (1-21) dargestellten Verbindungen ist:

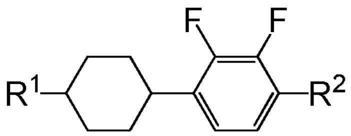

(1-1)

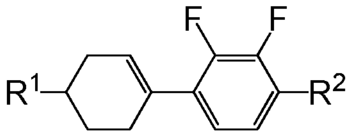

(1-2)

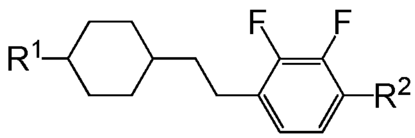

(1-3)

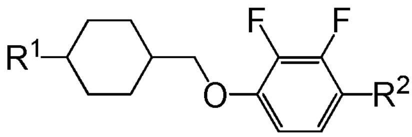

(1-4)

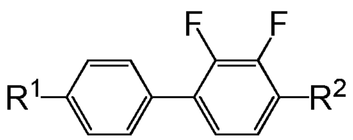

(1-5)

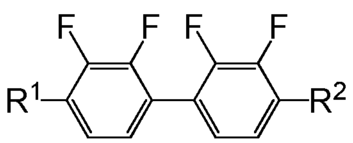

(1-6)

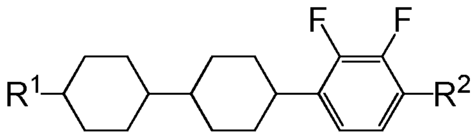

(1-7)

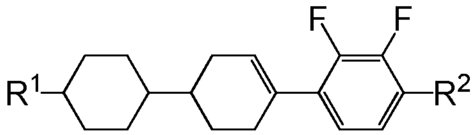

(1-8)

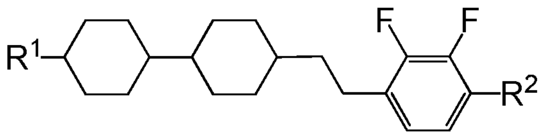

(1-9)

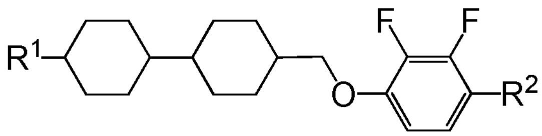

(1-10)

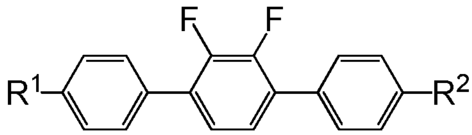

(1-11)

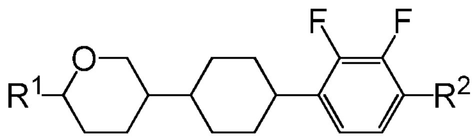

(1-12)

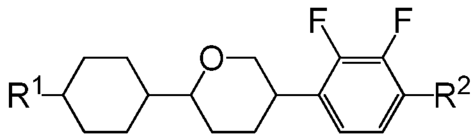

(1-13)

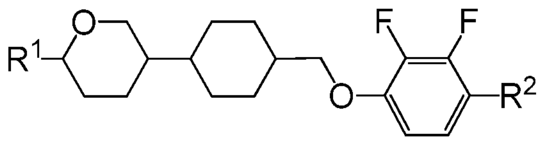

(1-14)

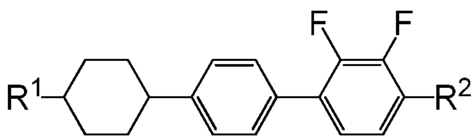

(1-15)

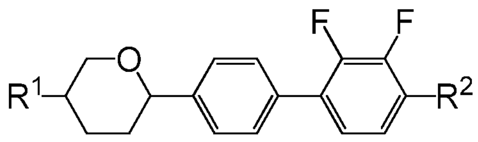

(1-16)

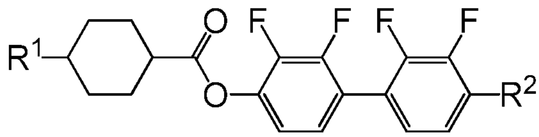

(1-17)

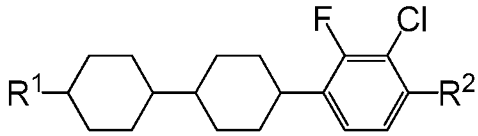

(1-18)

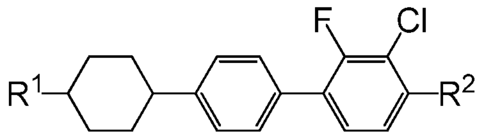

(1-19)

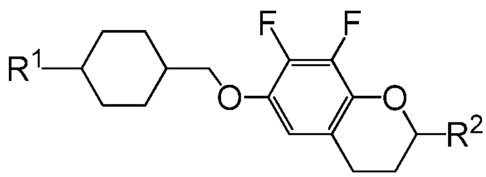

(1-20)

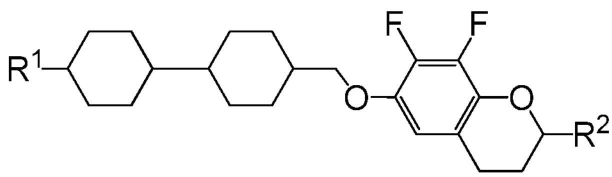

(1-21)

wobei, in Formel (1-1) bis Formel (1-21), $R^1$ und $R^2$ unabhängig Alkyl mit 1 bis 12 Kohlenstoffen, Alkoxy mit 1 bis 12 Kohlenstoffen, Alkenyl mit 2 bis 12 Kohlenstoffen, Alkenyloxy mit 2 bis 12 Kohlenstoffen oder Alkyl mit 1 bis 12 Kohlenstoffen, in welchem zumindest ein Wasserstoff durch Fluor oder Chlor ersetzt ist, sind.

**3.** Flüssigkristallanzeigevorrichtung nach Anspruch 1 oder 2, wobei ein Anteil der ersten Komponente in dem Bereich von 10 Gew.-% bis 90 Gew.-% basierend auf dem Gewicht der Flüssigkristallzusammensetzung ist.

**4.** Flüssigkristallanzeigevorrichtung nach einem der Ansprüche 1 bis 3, wobei die Flüssigkristallzusammensetzung zumindest eine Verbindung ausgewählt aus der Gruppe von durch Formel (2) dargestellten Verbindungen als eine zweite Komponente enthält:

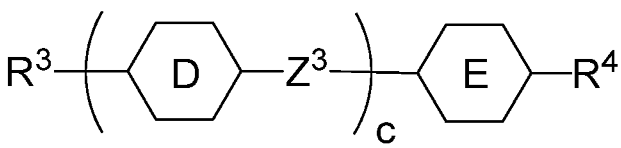

(2)

wobei, in Formel (2), $R^3$ und $R^4$ unabhängig Alkyl mit 1 bis 12 Kohlenstoffen, Alkoxy mit 1 bis 12 Kohlenstoffen, Alkenyl mit 2 bis 12 Kohlenstoffen, Alkyl mit 1 bis 12 Kohlenstoffen, in welchem zumindest ein Wasserstoff durch Fluor oder Chlor ersetzt ist, oder Alkenyl mit 2 bis 12 Kohlenstoffatomen, in welchem zumindest ein

Wasserstoff durch Fluor oder Chlor ersetzt ist, sind;
Ring D und Ring E unabhängig 1,4-Cyclohexylen, 1,4-Phenylen, 2-Fluor-1,4-phenylen oder 2,5-Difluor-1,4-phenylen sind;
$Z^3$ eine Einfachbindung, Ethylen oder Cabonyloxy ist;
c 1, 2 oder 3 ist.

**5.** Flüssigkristallanzeigevorrichtung nach Anspruch 4, wobei die zweite Komponente zumindest eine Verbindung ausgewählt aus der Gruppe von Verbindungen dargestellt durch Formel (2-1) bis Formel (2-13) ist:

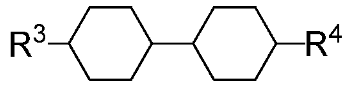
(2-1)

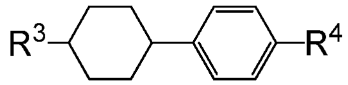
(2-2)

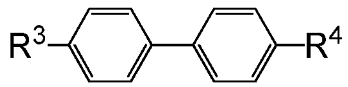
(2-3)

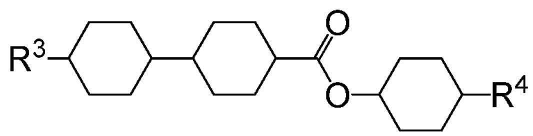
(2-4)

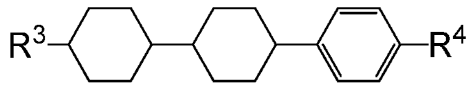
(2-5)

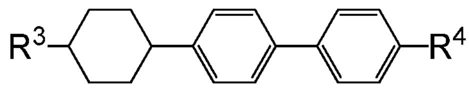
(2-6)

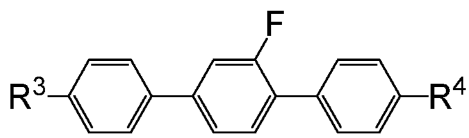
(2-7)

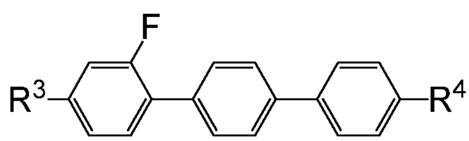
(2-8)

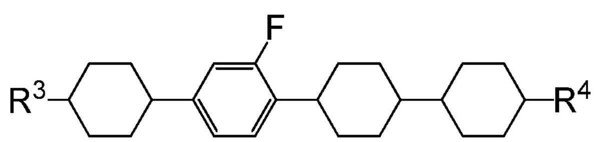
(2-9)

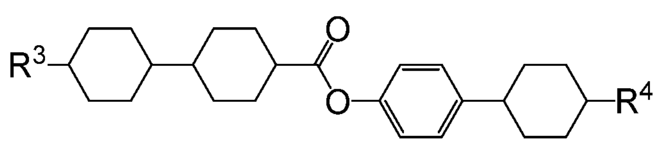
(2-10)

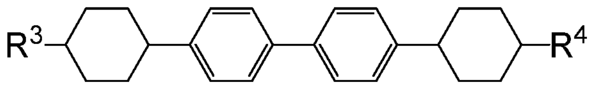

(2-11)

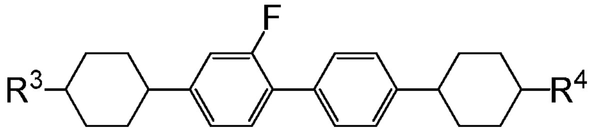

(2-12)

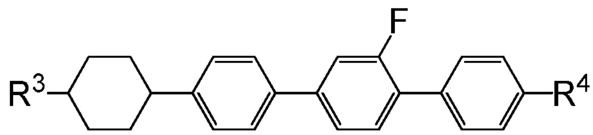

(2-13)

wobei, in Formel (2-1) bis Formel (2-13), $R^3$ und $R^4$ unabhängig Alkyl mit 1-12 Kohlenstoffen, Alkoxy mit 1 bis 12 Kohlenstoffen, Alkenyl mit 2 bis 12 Kohlenstoffen, Alkyl mit 1 bis 12 Kohlenstoffatomen, in welchem zumindest ein Wasserstoff durch Fluor oder Chlor ersetzt ist, oder Alkenyl mit 2 bis 12 Kohlenstoffen, in welchem zumindest ein Wasserstoff durch Fluor oder Chlor ersetzt ist, sind.

**6.** Flüssigkristallanzeigevorrichtung nach Anspruch 4 oder 5, wobei ein Anteil der zweiten Komponente in dem Bereich von 10 Gew.-% bis 90 Gew.-% basierend auf dem Gewicht der Flüssigkristallzusammensetzung ist.

**7.** Flüssigkristallanzeigevorrichtung nach einem der Ansprüche 1 bis 6, wobei die Flüssigkristallzusammensetzung zumindest eine polymerisierbare Verbindung ausgewählt aus der Gruppe von durch Formel (3) dargestellten Verbindungen als eine zusätzliche Komponente enthält:

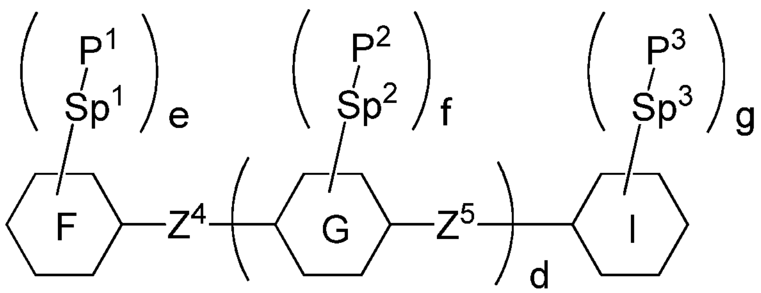

(3)

wobei, in Formel (3), Ring F und Ring I unabhängig sind Cyclohexyl, Cyclohexenyl, Phenyl, 1-Naphthyl, 2-Naphthyl, Tetrahydropyran-2-yl, 1,3-Dioxan-2-yl, Pyrimidin-2-yl oder Pyridin-2-yl, und in den Ringen, zumindest ein Wasserstoff durch Fluor, Chlor, Alkyl mit 1 bis 12 Kohlenstoffen, Alkoxy mit 1 bis 12 Kohlenstoffen, oder Alkyl mit 1 bis 12 Kohlenstoffen, in welchem zumindest ein Wasserstoff durch Fluor oder Chlor ersetzt ist, ersetzt sein können; Ring G ist 1,4-Cyclohexylen, 1,4-Cyclohexenylen, 1,4-Phenylen, Naphthalen-1,2-diyl, Naphthalen-1,3-diyl, Naphthalen-1,4-diyl, Naphthalen-1,5-diyl, Naphthalen-1,6-diyl, Naphthalen-1,7-diyl, Naphthalen-1,8-diyl, Naphthalen-2,3-diyl, Naphthalen-2,6-diyl, Naphthalen-2,7-diyl, Tetrahydropyran-2,5-diyl, 1,3-Dioxan-2,5-diyl, Pyrimidin-2,5-diyl oder Pyridin-2,5-diyl, und in den Ringen zumindest ein Wasserstoff durch Fluor, Chlor, Alkyl mit 1 bis 12 Kohlenstoffen, Alkoxy mit 1 bis 12 Kohlenstoffen, oder Alkyl mit 1 bis 12 Kohlenstoffen, in welchem zumindest ein Wasserstoff durch Fluor oder Chlor ersetzt sein kann, ersetzt sein kann; $Z^4$ und $Z^5$ sind unabhängig eine Einfachbindung oder Alkylen mit 1 bis 10 Kohlenstoffen, und in dem Alkylen, kann zumindest ein Stück von $-CH_2-$ durch -O-, -CO-, -COO- oder -OCO- ersetzt sein, und kann zumindest ein Teil von $-CH_2-CH_2-$durch -CH=CH-, $-C(CH_3)=CH-$, $-CH=C(CH_3)-$ oder $-C(CH_3)=C(CH_3)-$ ersetzt sein, und in den Gruppen kann zumindest ein Wasserstoff durch Fluor oder Chlor ersetzt sein; $P^1$, $P^2$ und $P^3$ unabhängig eine polymerisierbare Gruppe sind, $SP^1$, $SP^2$ und $SP^3$ unabhängig eine Einfachbindung oder Alkylen mit 1 bis 10 Kohlenstoffen sind, und in dem Alkylen, zumindest ein Teil von $-CH_2-$durch -O-, -COO-, -OCO- oder -OCOO- ersetzt sein kann, und zumindest ein Teil von $-CH_2-CH_2-$ durch -CH=CH- oder -C≡C- ersetzt sein kann, und in den Gruppen zumindest ein Wasserstoff durch Fluor oder Chlor ersetzt sein kann; d 0, 1 oder 2 ist; e, f und g unabhängig 0, 1, 2, 3 oder 4 sind, und eine Summe von e, f und g 1 oder mehr ist.

**8.** Flüssigkristallanzeigevorrichtung nach Anspruch 7, wobei die zusätzliche Komponente zumindest eine polymerisierbare Verbindung ausgewählt aus der Gruppe von durch Formel (3-1) bis Formel (3-27) dargestellten Verbindungen ist:

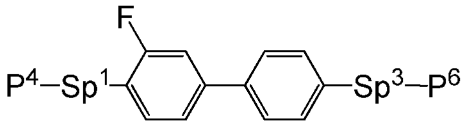
(3-1)

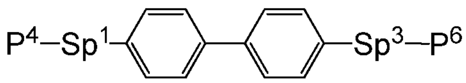
(3-2)

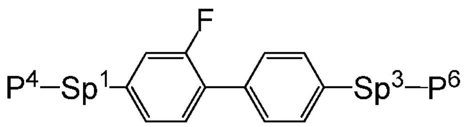
(3-3)

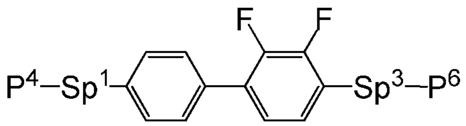
(3-4)

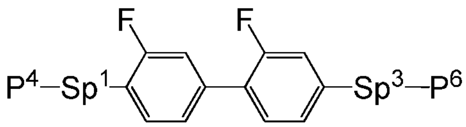
(3-5)

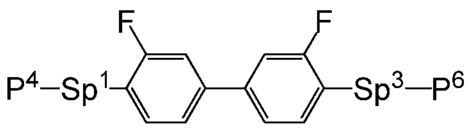
(3-6)

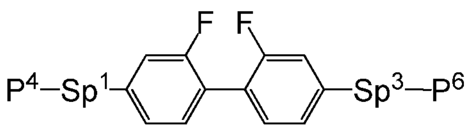
(3-7)

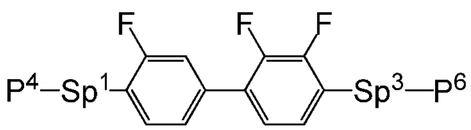
(3-8)

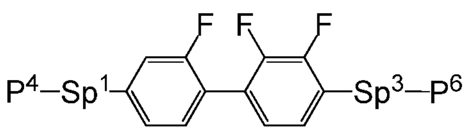
(3-9)

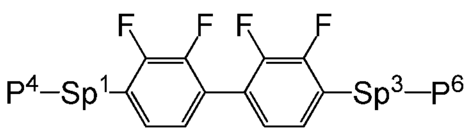
(3-10)

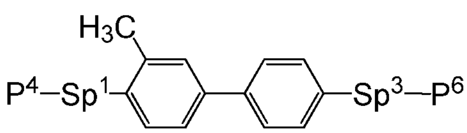
(3-11)

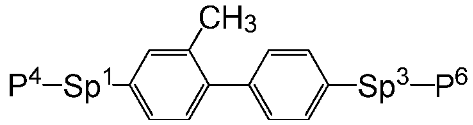

(3-12)

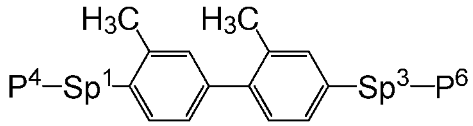

(3-13)

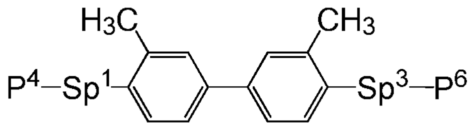

(3-14)

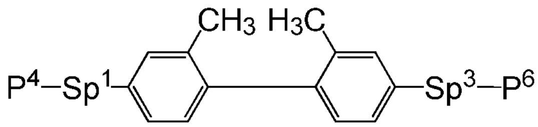

(3-15)

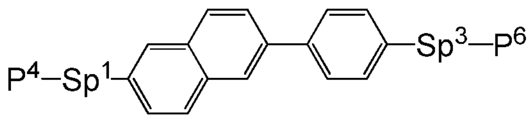

(3-16)

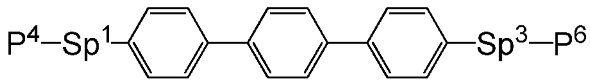

(3-17)

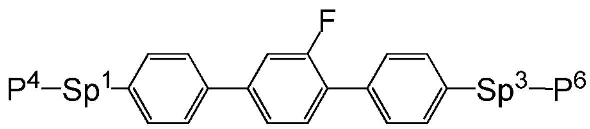

(3-18)

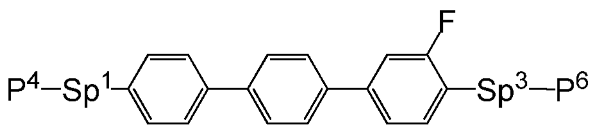

(3-19)

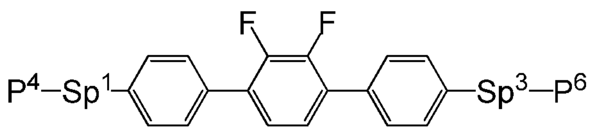

(3-20)

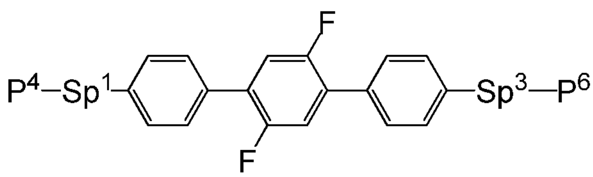

(3-21)

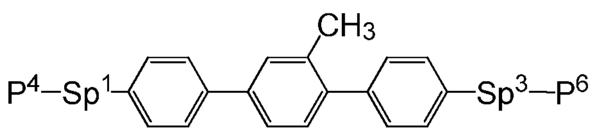

(3-22)

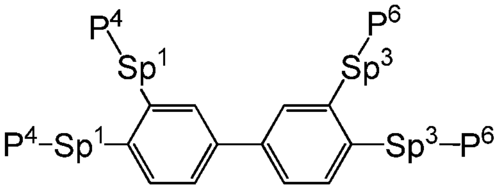

(3-23)

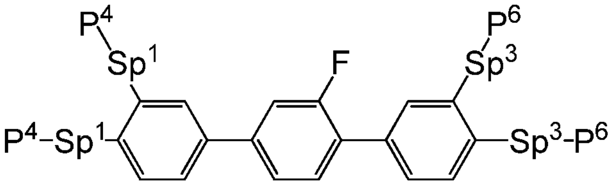

(3-24)

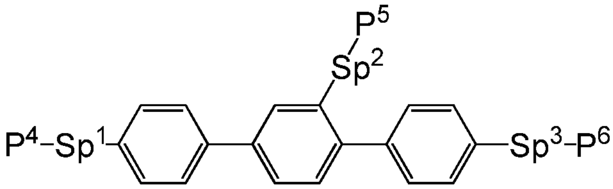

(3-25)

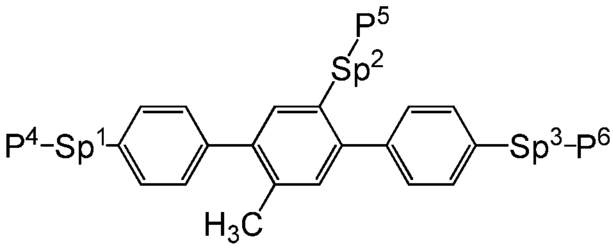

(3-26)

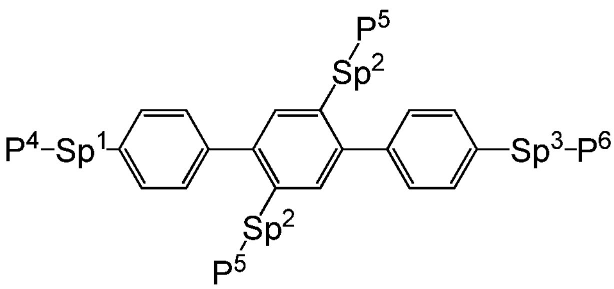

(3-27)

wobei, in Formel (3-1) bis Formel (3-27), $P^4$, $P^5$ und $P^6$ unabhängig eine polymerisierbare Gruppe ausgewählt aus der Gruppe von durch Formel (P-1) bis Formel (P-3) dargestellten Gruppen sind:

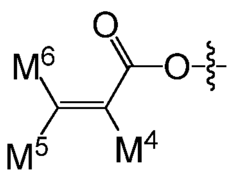

(P-1)

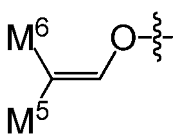

(P-2)

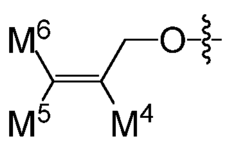

(P-3)

wobei, in Formel (P-1) bis Formel (P-3), $M^4$, $M^5$ und $M^6$ unabhängig Wasserstoff, Fluor, Alkyl mit 1 bis 5 Kohlenstoffen oder Alkyl mit 1 bis 5 Kohlenstoffen, in welchem ein Wasserstoff durch Fluor oder Chlor ersetzt ist, sind; und in Formel (3-1) bis Formel (3-27), $SP^1$, $SP^2$ und $SP^3$ jeweils unabhängig eine Einfachbindung oder Alkylen mit 1 bis

10 Kohlenstoffen sind und in dem Alkylen, zumindest ein Teil von $-CH_2-$ durch -O-, -COO-, -OCO- oder -OCOO- ersetzt sein kann, und zumindest ein Teil von $-CH_2-CH_2-$ durch -CH=CH- oder -C≡C- ersetzt sein kann, und in den Gruppen, zumindest ein Wasserstoff durch Fluor oder Chlor ersetzt sein kann.

**9.** Flüssigkristallanzeigevorrichtung nach einem der Ansprüche 1 bis 8, wobei das in dem Flüssigkristall-Ausrichtungsfilm enthaltene Polyorganosiloxan zumindest eine Gruppe ausgewählt aus der Gruppe von durch Formel ($X^1$-1) bis Formel ($X^1$-7) dargestellten Gruppen enthält:

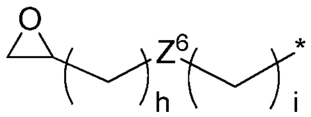
($X^1$-1)

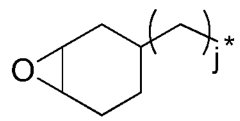
($X^1$-2)

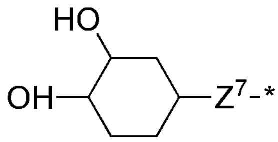
($X^1$-3)

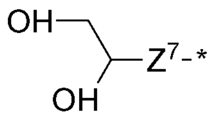
($X^1$-4)

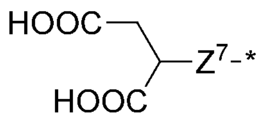
($X^1$-5)

$HOOC-Z^7-*$ ($X^1$-6)

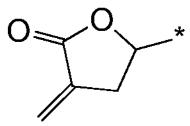
($X^1$-7)

wobei, in Formel ($X^1$-1) bis Formel ($X^1$-7), ein Sternchen eine Seite, zu welcher Bindung hergestellt wird, darstellt, $Z^6$ -O- oder eine Einfachbindung ist; $Z^7$ ist eine Einfachbindung, Alkylen mit 1 bis 6 Kohlenstoffen, oder eine divalente Gruppe mit 1 bis 12 Kohlenstoffen enthaltend zumindest eines ausgewählt aus der Gruppe von -O-, -S-, -COO-, -OCO- und $-NR^6-$, in welchem $R^6$ Wasserstoff oder Alkyl mit 1 bis 6 Kohlenstoffen ist;
H 1, 2 oder 3 ist; i eine ganze Zahl von 0 bis 6 ist, und wenn i 0 ist, $Z^6$ eine Einfachbindung ist; und j eine ganze Zahl von 0 bis 6 ist.

## Revendications

**1.** Dispositif d'affichage à cristaux liquides en mode alignement soutenu de polymère comprenant : un groupe d'électrodes formé sur l'un ou les deux parmi une paire de substrats disposés en se faisant mutuellement face ; une pluralité de dispositifs actifs connectés au groupe d'électrodes ; des films d'alignement de cristaux liquides formés sur des surfaces se faisant mutuellement face de la paire de substrats, respectivement, et une composition de cristaux liquides interposée entre la paire de substrats, dans lequel le film d'alignement de cristaux liquides contient

au moins un polymère choisi parmi le poly(acide amique) et un ester de poly(acide amique) en tant que composant principal, et contient un polyorganosilxane en tant que composant accessoire, et la composition de cristaux liquides contient au moins un composé choisi dans l'ensemble de composés représentés par la formule (1) en tant que premier composant :

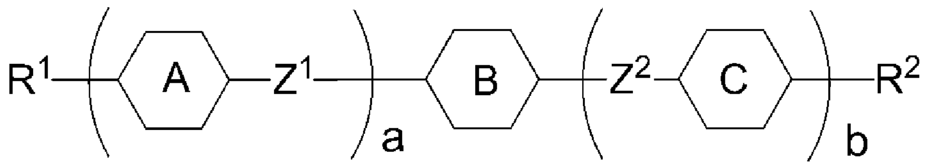

(1)

dans lequel, dans la formule (1), $R^1$ et $R^2$ sont indépendamment un alkyle ayant 1 à 12 carbones, alcoxy ayant 1 à 12 carbones, alcényle ayant 2 à 12 carbones, alcényloxy ayant 2 à 12 carbones, ou alkyle ayant 1 à 12 carbone dont au moins un hydrogène est remplacé par un fluor ou chlore ; le cycle A et le cycle C sont indépendamment un 1,4-cyclohexylène, 1,4-cyclohexénylène, 1,4-phénylène, 1,4-phénylène dont au moins un hydrogène est remplacé par fluor ou chlore, ou tétrahydropyrane-2,5-diyle ; le cycle B est un 2,3-difluoro-1,4-phénylène, 2-chloro-3-fluoro-1,4-phénylène, 2,3-difluoro-5-méthyl-1,4-phénylène, 3,4,5-trifluoronaphtalène-2,6-diyle ou 7,8-difluorochromane-2,6-diyle ; $Z^1$ et $Z^2$ sont indépendamment une liaison simple ou un éthylène, carbonyloxy ou méthylène-oxy ; a vaut 0, 1, 2 ou 3 ; b vaut 0 ou 1 ; et la somme de a et b vaut 3 ou moins.

**2.** Dispositif d'affichage à cristaux liquides selon la revendication 1, dans lequel le premier composant est au moins un composé choisi dans l'ensemble de composés représentés par les formules (1-1) à (1-21) :

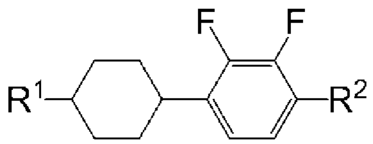

(1-1)

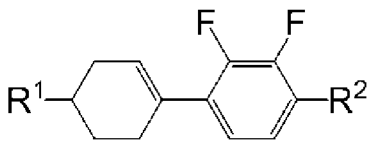

(1-2)

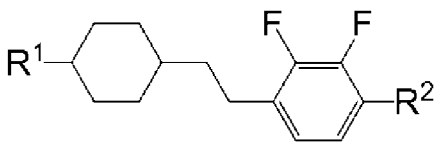

(1-3)

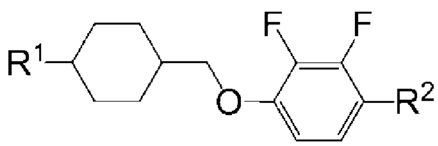

(1-4)

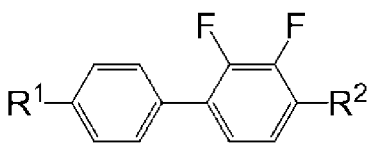

(1-5)

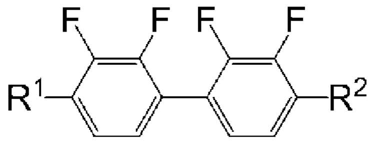
(1-6)

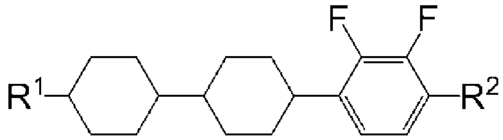
(1-7)

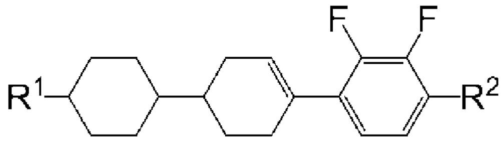
(1-8)

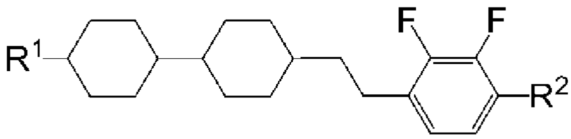
(1-9)

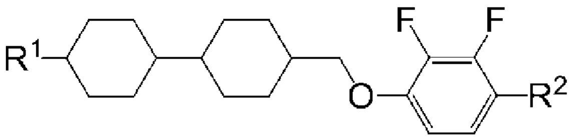
(1-10)

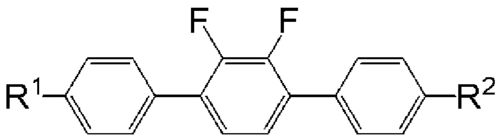
(1-11)

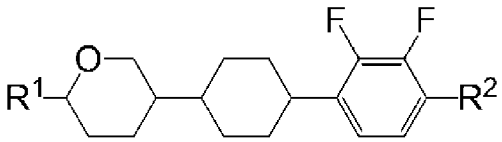
(1-12)

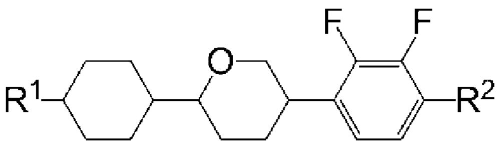
(1-13)

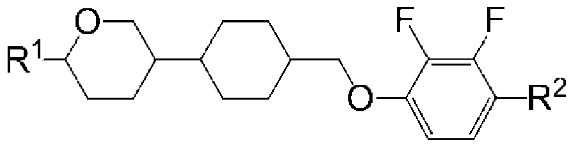
(1-14)

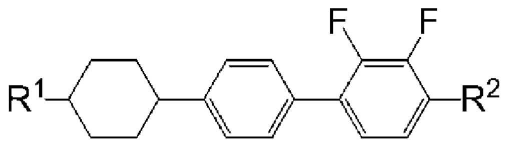

(1-15)

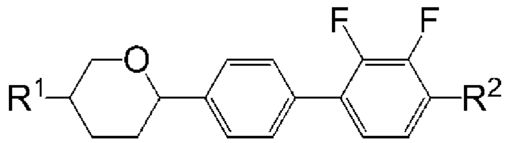

(1-16)

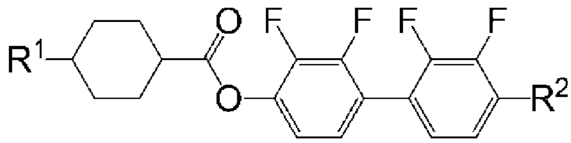

(1-17)

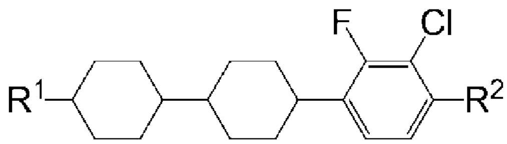

(1-18)

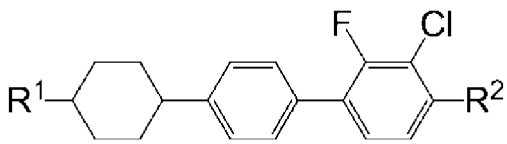

(1-19)

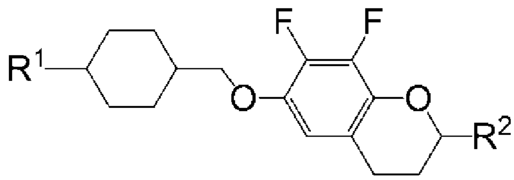

(1-20)

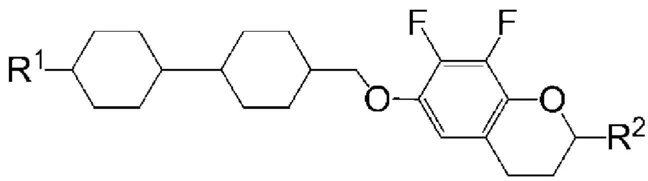

(1-21)

dans lequel, dans les formules (1-1) à (1-21), $R^1$ et $R^2$ sont indépendamment un alkyle ayant 1 à 12 carbones, alcoxy ayant 1 à 12 carbones, alcényle ayant 2 à 12 carbones, alcényloxy ayant 2 à 12 carbones, ou alkyle ayant 1 à 12 carbones dont au moins un hydrogène est remplacé par un fluor ou chlore.

**3.** Dispositif d'affichage à cristaux liquides selon la revendication 1 ou 2, dans lequel la proportion du premier composant est située dans la plage allant de 10 % en poids à 90 % en poids par rapport au poids de la composition de cristaux liquides.

**4.** Dispositif d'affichage à cristaux liquides selon l'une quelconque des revendications 1 à 3, dans lequel la composition de cristaux liquides contient au moins un composé choisi dans l'ensemble de composés représentés par la formule (2), en tant que deuxième composant :

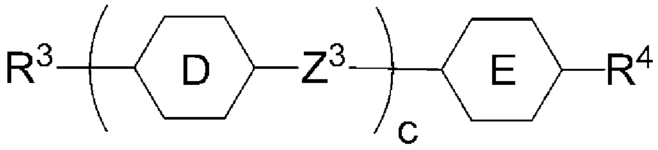

(2)

dans lequel, dans la formule (2), $R^3$ et $R^4$ sont indépendamment un alkyle ayant 1 à 12 carbones, alcoxy ayant 1 à 12 carbones, alcényle ayant 2 à 12 carbones, alkyle ayant 1 à 12 carbones dont au moins un hydrogène est remplacé par un fluor ou chlore, ou alcényle ayant 2 à 12 carbones dont au moins un hydrogène est remplacé par un fluor ou chlore ; le cycle D et le cycle E sont indépendamment un 1,4-cyclohexylène, 1,4-phénylène, 2-fluoro-1,4-phénylène ou 2,5-difluoro-1,4-phénylène ; $Z^3$ est une liaison simple ou un éthylène ou carbonyloxy ; et c vaut 1, 2 ou 3.

**5.** Dispositif d'affichage à cristaux liquides selon la revendication 4, dans lequel le deuxième composant est au moins un composé choisi dans l'ensemble de composés représentés par les formules (2-1) à (2-13) :

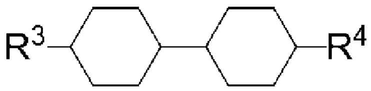

(2-1)

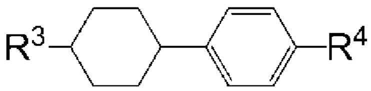

(2-2)

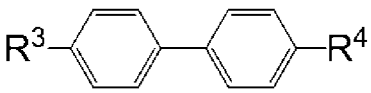

(2-3)

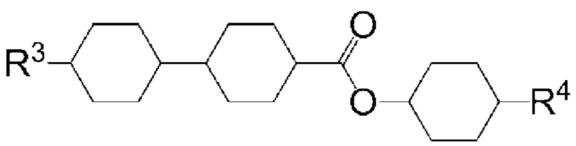

(2-4)

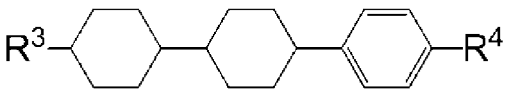

(2-5)

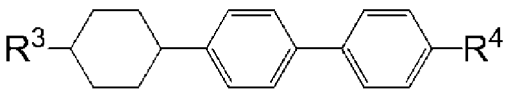

(2-6)

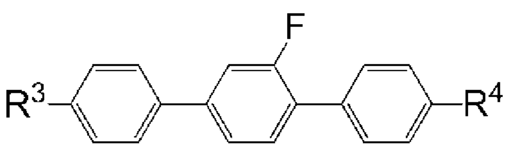

(2-7)

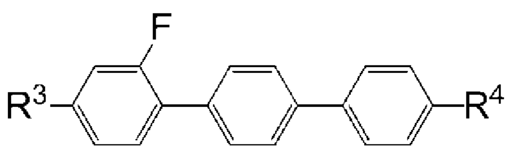

(2-8)

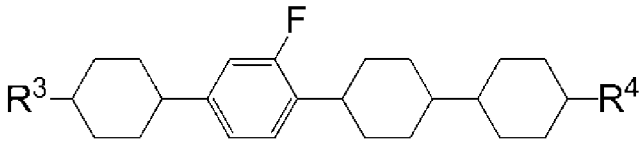

(2-9)

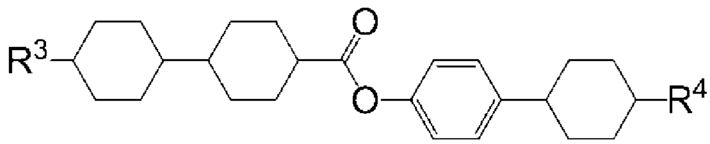

(2-10)

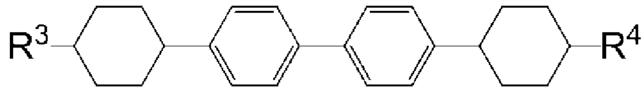

(2-11)

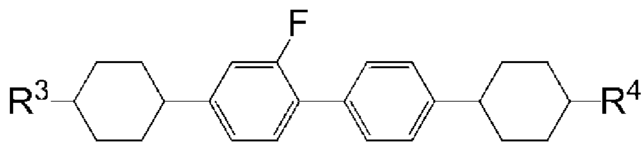

(2-12)

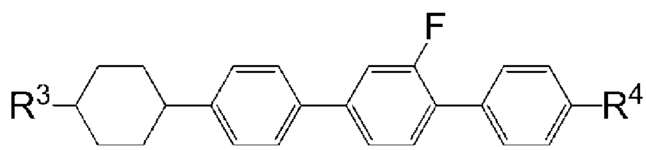

(2-13)

dans lequel, dans les formules (2-1) à (2-13), $R^3$ et $R^4$ sont indépendamment un alkyle ayant 1 à 12 carbones, alcoxy ayant 1 à 12 carbones, alcényle ayant 2 à 12 carbones, alkyle ayant 1 à 12 carbones dont au moins un hydrogène est remplacé par un fluor ou chlore, ou alcényle ayant 2 à 12 carbones dont au moins un hydrogène est remplacé par un fluor ou chlore.

**6.** Dispositif d'affichage à cristaux liquides selon la revendication 4 ou 5, dans lequel la proportion du deuxième composant est située dans la plage allant de 10 % en poids à 90 % en poids par rapport au poids de la composition de cristaux liquides.

**7.** Dispositif d'affichage à cristaux liquides selon l'une quelconque des revendications 1 à 6, dans lequel la composition de cristaux liquides contient au moins un composé polymérisable choisi dans l'ensemble de composés représentés par la formule (3) en tant que composant additif :

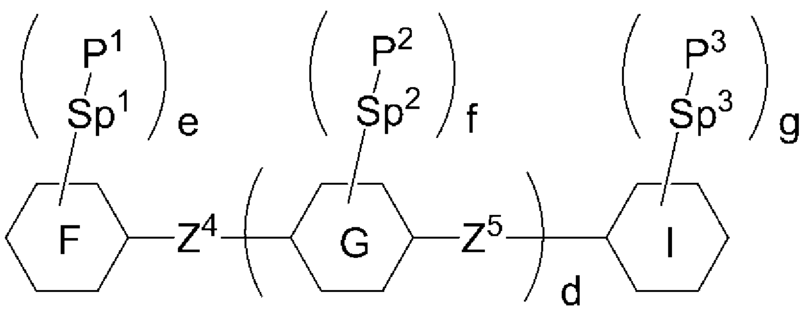

(3)

dans lequel, dans la formule (3), le cycle F et le cycle I sont indépendamment un cyclohexyle, cyclohexényle, phényle, 1-naphtyle, 2-naphtyle, tétrahydropyran-2-yle, 1,3-dioxan-2-yle, pyrimidin-2-yle ou pyridin-2-yle et, dans les cycles, au moins un hydrogène peut être remplacé par un fluor, chlore, alkyle ayant 1 à 12 carbones, alcoxy ayant 1 à 12 carbones, ou alkyle ayant 1 à 12 carbones dans lequel au moins un hydrogène est remplacé par un fluor ou chlore ; le cycle G est un 1,4-cyclohexylène, 1,4-cyclohexénylène, 1,4-phénylène, naphtalène-1,2-diyle, naphtalène-1,3-diyle, naphtalène-1,4-diyle, naphtalène-1,5-diyle, naphtalène-1,6-diyle, naphtalène-1,7-diyle, naphtalène-1,8-diyle, naphtalène-2,3-diyle, naphtalène-2,6-diyle, naphtalène-2,7-diyle, tétrahydropyrane-2,5-diyle, 1,3-dioxane-2,5-diyle, pyrimidine-2,5-diyle ou pyridine-2,5-diyle, et, dans les cycles, au moins un hydrogène peut être remplacé par un fluor, chlore, alkyle ayant 1 à 12 carbones, alcoxy ayant 1 à 12 carbones, ou alkyle ayant 1 à 12 carbones dans lequel au moins un hydrogène est remplacé par un fluor ou chlore ; $Z^4$ et $Z^5$ sont indépendamment une liaison simple ou un alkylène ayant 1 à 10 carbones et, dans l'alkylène, au moins un fragment $-CH_2-$ peut être remplacé par -O-, -CO-, -COO- ou -OCO-, et au moins un fragment $-CH_2-CH_2-$ peut être remplacé par -CH=CH-, $-C(CH_3)=CH-$, $-CH=C(CH_3)-$ ou $-C(CH_3)-C(CH_3)-$ et, dans les groupes, au moins un hydrogène peut être remplacé par un fluor ou chlore ; $P^1$, $P^2$ et $P^3$ sont indépendamment un groupe polymérisable ; $Sp^1$, $Sp^2$ et $Sp^3$ sont indépendamment une liaison simple ou un alkylène ayant 1 à 10 carbones et, dans l'alkylène, au moins un fragment $-CH_2-$ peut être remplacé par -O-, -COO-, -OCO- ou -OCOO-, et au moins un fragment $-CH_2-CH_2-$ peut être remplacé par -CH=CH- ou -C*C- et, dans les groupes, au moins un hydrogène peut être remplacé par un fluor ou chlore ; d vaut 0, 1 ou 2 ; e, f et g valent indépendamment 0, 1, 2, 3 ou 4, et la somme de e, f et g vaut 1 ou plus.

**8.** Dispositif d'affichage à cristaux liquides selon la revendication 7, dans lequel le composant additif est au moins un composé polymérisable choisi dans l'ensemble de composés représentés par les formules (3-1) à (3-27) :

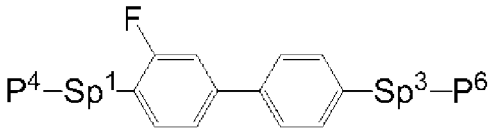
(3-1)

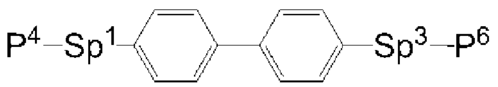
(3-2)

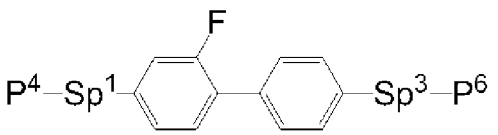
(3-3)

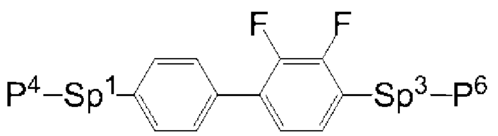
(3-4)

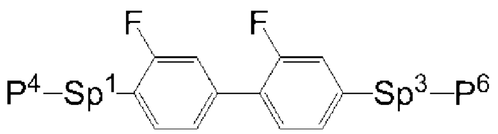
(3-5)

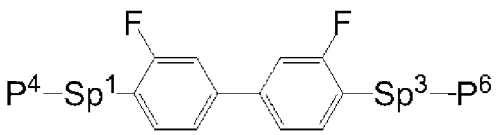
(3-6)

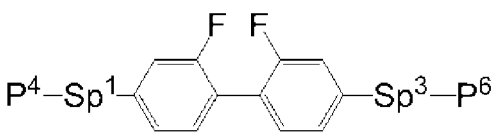
(3-7)

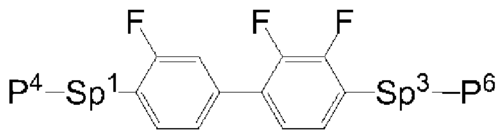

(3-8)

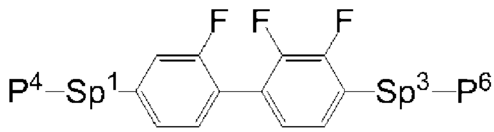

(3-9)

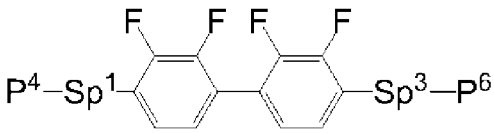

(3-10)

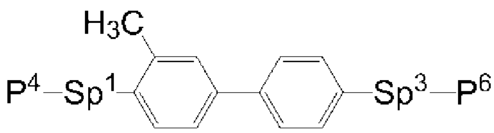

(3-11)

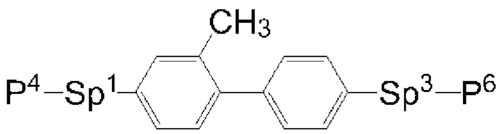

(3-12)

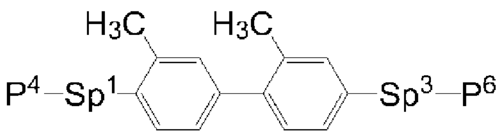

(3-13)

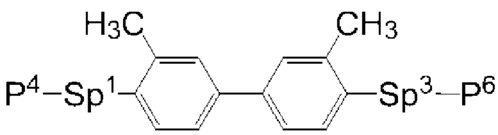

(3-14)

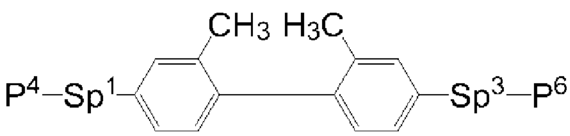

(3-15)

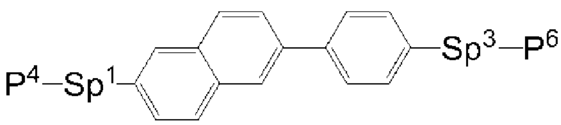

(3-16)

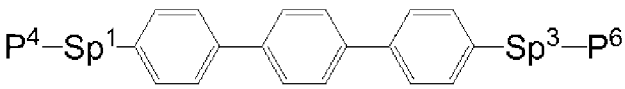

(3-17)

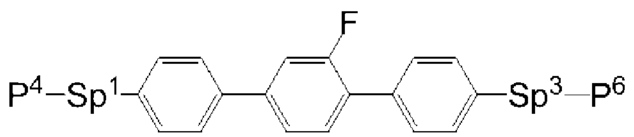

(3-18)

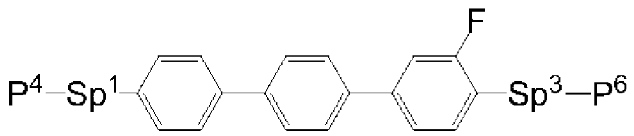

(3-19)

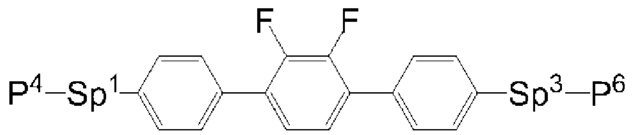

(3-20)

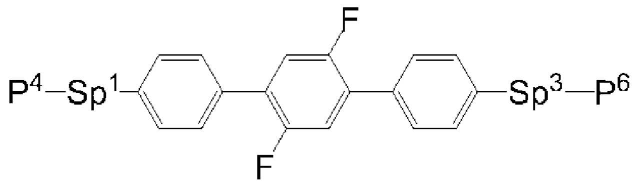

(3-21)

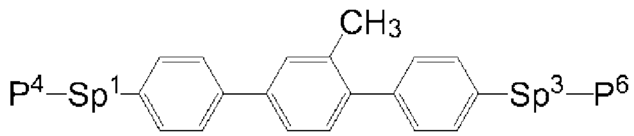

(3-22)

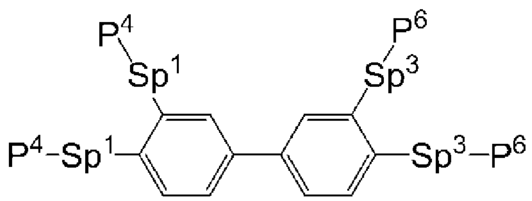

(3-23)

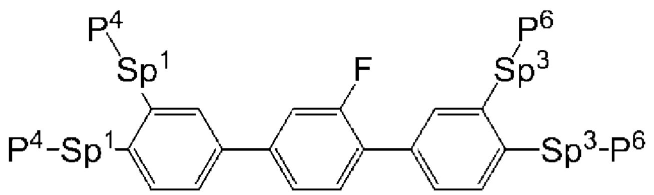

(3-24)

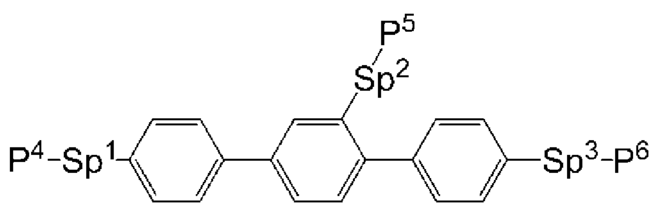

(3-25)

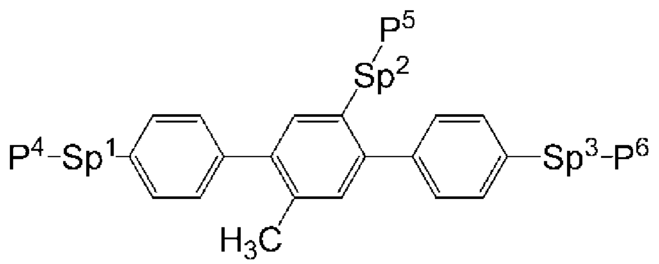

(3-26)

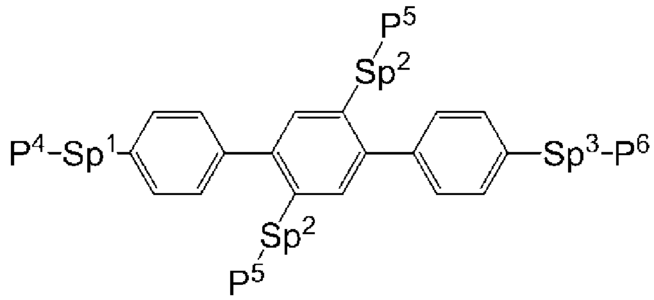

(3-27)

dans lequel, dans les formules (3-1) à (3-27), $P^4$, $P^5$ et $P^6$ sont indépendamment un groupe polymérisable choisi dans l'ensemble de groupes représentés par les formules (P-1) à (P-3) :

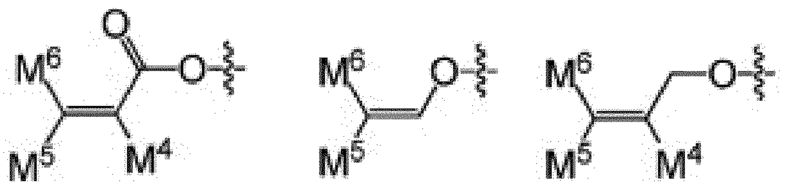

(P-1) (P-2) (P-3)

dans lequel, dans les formules (P-1) à (P-3), $M^4$, $M^5$ et $M^6$ sont indépendamment un hydrogène, fluor, alkyle ayant 1 à 5 carbones, ou alkyle ayant 1 à 5 carbones dont au moins un hydrogène est remplacé par le fluor ou le chlore ; et, dans les formules (3-1) à (3-27), $Sp^1$, $SP^2$ et $Sp^3$ sont indépendamment une liaison simple ou un alkylène ayant 1 à 10 carbones et, dans l'alkylène, au moins un fragment $-CH_2-$ peut être remplacé par -O-, -COO-, -OCO- ou -OCOO-, et au moins un fragment $-CH_2-CH_2-$peut être remplacé par -CH=CH- ou -C*C- et, dans les groupes, au moins un hydrogène peut être remplacé par un fluor ou chlore.

**9.** Dispositif d'affichage à cristaux liquides selon l'une quelconque des revendications 1 à 8, dans lequel le polyorganosiloxane contenu dans le film d'alignement de cristaux liquides contient au moins un groupe choisi dans l'ensemble de groupes représentés par les formules ($X^1$-1) à ($X^1$-7) :

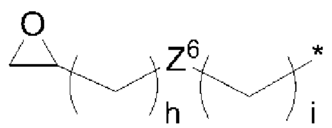

($X^1$-1)

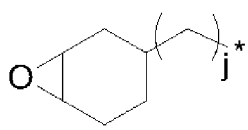

($X^1$-2)

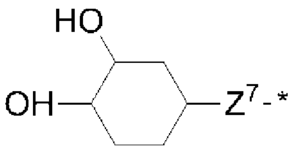

$(X^1\text{-}3)$

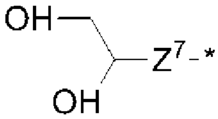

$(X^1\text{-}4)$

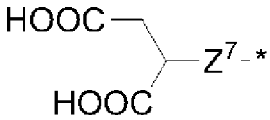

$(X^1\text{-}5)$

$HOOC-Z^7-*$ $(X^1\text{-}6)$

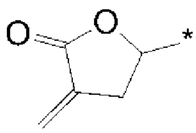

$(X^1\text{-}7)$

dans lequel, dans les formules $(X^1\text{-}1)$ à $(X^1\text{-}7)$, un astérisque représente un site avec lequel la liaison doit être faite, $Z^6$ est -O- ou une liaison simple ; $Z^7$ est une liaison simple, un alkylène ayant 1 à 6 carbones, ou un groupe divalent ayant 1 à 20 carbones contenant au moins l'un choisi dans l'ensemble comprenant -O-, -S-, -COO-, -OCO- et $-NR^6-$, où $R^6$ est un hydrogène ou alkyle ayant 1 à 6 carbones ; h vaut 1, 2 ou 3 ; i est un entier de 0 à 6 et, quand i vaut 0, $Z^6$ est une liaison simple ; et j est un entier de 0 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012053323 A
- WO 2014156815 A1
- JP 2010256904 A
- JP 2014142585 A
- CN 104342167 A
- JP 2009104119 A
- JP 2014186301 A
- WO 2015053233 A1
- US 2013207039 A1
- US 2014010973 A1
- US 2015108402 A1
- US 2015129801 A1
- US 2012088040 A1
- JP 2000053602 A
- JP 59176221 A
- US 3660505 B
- JP 2013064968 A
- JP 2013057815 A
- JP 2013080193 A
- WO 200043833 A


### Non-patent literature cited in the description


- Organic Syntheses. John Wiley & Sons, Inc,
- Organic Reactions. John Wiley & Sons, Inc,
- Comprehensive Organic Synthesis. Pergamon Press
- New Experimental Chemistry Course (Shin Jikken Kagaku Koza in Japanese). Maruzen Co., Ltd,
- **M. IMAI et al.** *Molecular Crystals and Liquid Crystals,* 1995, vol. 259, 37
- **J. HILFIKER ; B. JOHS ; C. HERZINGER ; J. F. ELMAN ; E. MONTBACH ; D. BRYANT ; P. J. BOS.** *Thin Solid Films,* 2004, vol. 455-456, 596-600